(19) Europäisches Patentamt
European Patent Office
Office européen des brevets

(11) Veröffentlichungsnummer: **0 226 538 B1**

# (12) EUROPÄISCHE PATENTSCHRIFT

(45) Veröffentlichungstag der Patentschrift: **11.09.91**

(51) Int. Cl.5: **C08F 246/00**, C08F 283/00, C08G 85/00, C09D 7/12, C09D 201/00

(21) Anmeldenummer: **86810555.2**

(22) Anmeldetag: **01.12.86**

Die Akte enthält technische Angaben, die nach dem Eingang der Anmeldung eingereicht wurden und die nicht in dieser Patentschrift enthalten sind.

## (54) Lichtstabilisierte Polymermikropartikel.

(30) Priorität: **06.12.85 CH 5227/85**

(43) Veröffentlichungstag der Anmeldung: **24.06.87 Patentblatt 87/26**

(45) Bekanntmachung des Hinweises auf die Patenterteilung: **11.09.91 Patentblatt 91/37**

(84) Benannte Vertragsstaaten: **AT BE CH DE ES FR GB IT LI NL SE**

(56) Entgegenhaltungen:
**EP-A- 0 003 166**
**EP-A- 0 016 723**

**PATENT ABSTRACTS OF JAPAN, Band 7, Nr. 86 (C-161)[1231], 9. April 1983;**

**PATENT ABSTRACTS OF JAPAN, Band 8, Nr. 279 (C-257)[1716], 20. Dezember 1984;**

**Saechtling-Zebrowski "Kunststoff-Taschenbuch", Carl Hanser Verlag München Wien, 1974, p. 218**

(73) Patentinhaber: **CIBA-GEIGY AG**
**Klybeckstrasse 141**
**CH-4002 Basel(CH)**

(72) Erfinder: **Berner, Godwin, Dr.**
**Sommerhalde 5**
**CH-4102 Binningen(CH)**
Erfinder: **Rembold, Manfred, Dr.**
**Im Aeschfeld 21**
**CH-4147 Aesch(CH)**
Erfinder: **Rody, Jean, Dr.**
**Rütiring 82**
**CH-4125 Riehen(CH)**
Erfinder: **Slongo, Mario, Dr.**
**Sägetrainweg 553**
**CH-1712 Tafers(CH)**

EP 0 226 538 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft lichtstabilisierte Polymermikropartikel, Verfahren zu deren Herstellung, diese enthaltende Dispersionen sowie Beschichtungszusammensetzungen, die diese enthalten.

UM in Beschichtungen, z.B. in Lacken, die Witterungsbeständigkeit zu erhöhen, werden überlicherweise Lichtschutzmittel zugesetzt. Siehe z.B. EP-A 16723. Es wurde auch vorgeschlagen, solche Lichtschutzmittel, z.B. UV-Absorber, schon während der Herstellung des Lackes zu einem Monomeren oder einem Vorpolymeren zuzugeben. Siehe dazu JP-A 58-15502 und JP-A 149959. In beiden Fällen wird jedoch ein übliches, im wesentlichen aus linearen Polymeren aufgebautes Lackharz hergestellt.

In der Beschichtungstechnik besteht in neuerer Zeit, bedingt durch das Erfordernis einer möglichst geringen Umweltbelastung, ein besonderes Interesse an der Erhöhung des Anteils des in den Beschichtungszusammensetzungen anwesenden filmbildenden Materials und an der Reduktion des Anteils an inerten flüssigen Verdünnungsmitteln, die während der Lackherstellung und der Trocknung und Härtung abgedampft werden müssen.

Beschichtungszusammensetzungen mit einem hohen Anteil an filmbildendem Material sind z.B. aus der EP-A 3166 und der EP-A 119 051 sowie der jeweils darin zitierten Literatur bekannt; sie sind im allgemeinen aus einer flüssigen kontinuierlichen Phase und einer dispersen Phase, die einen gegebenenfalls hohen Anteil an unlöslichen Polymermikroteilchen enthält, aufgebaut.

Die resultierenden Filme und Beschichtungen besitzen einen zusammengesetzten Charakter, nämlich eine Polymermatrix oder eine kontinuierliche Phase, die sich von ursprünglich in Lösung befindlichem Polymer ableitet, und eine disperse Phase, die sich von den Polymermikroteilchen ableitet.

Bekannte Mikropartikel enthaltende Beschichtungszusammensetzungen weisen jedoch eine nur ungenügende Lichtstabilität auf, da bisher nur das Lackgemisch als solches durch physikalische Zumischung eines Lichtschutzmittels in der homogenen flüssigen Phase stabilisiert wird.

Der gegebenenfalls hohe Mikropartikelanteil solcher Beschichtungen ist dagegen unstabilisiert.

Es wurde nun gefunden, dass sich die Lichtstabilität von Beschichtungen und Lacken, insbesondere Einbrennlacken, mit einem Anteil an Mikropartikeln verbessern lässt, wenn man entsprechende Lichtschutzmittel in die Mikropartikel inkorporiert und diese damit direkt vor Witterungseinflüssen, insbesondere Bestrahlung, schützt.

Die Erfindung betrifft daher lichtstabilisierte Polymermikropartikel mit einem vernetzten Kern und einer Teilchengrössenverteilung von 0,01-20 µm, erhältlich durch Polymerisation in an sich bekannter Weise von einer oder mehreren verschiedenen ein- oder mehrfach ethylenisch ungesättigten monomeren Verbindungen oder/und einem oder mehreren verschiedenen Monomeren aus der Gruppe der Polyalkohole, Polycarbonsäuren, Hydroxycarbonsäuren, Lactone, Aminocarbonsäuren und Polyamine, dadurch gekennzeichnet, dass sie 0,1 bis 30 Gew.-%, bezogen auf die Monomeren, eines oder mehrerer Lichtschutzmittel(s) enthalten, wobei mindestens ein Teil der Polymerisation der Monomeren in gegenwart des (der) Lichtschutzmittel(s) erfolgt.

Unter Mikropartikel sollen hierbei Polymerteilchen mit einer Grösse oder Grössenverteilung in den genannten kolloidalen Dimensionen verstanden werden, die in der kontinuierlichen flüssigen Phase von Beschichtungszusammensetzungen unlöslich sind. Der Ausdruck Polymermikropartikel ist in der Lacktechnik und damit in der einschlägigen Literatur wohlbekannt. Ein wesentliches Merkmal der Mikropartikel neben ihrer Grösse ist, dass sie einen vernetzten Kern enthalten bzw. aus diesem bestehen. Die Mikropartikel weisen in der Idealform eine annähernd kugelförmige Gestalt auf. In der Literatur ist an Stelle des Ausdrucks "Mikropartikel" auch der Ausdruck "Mikrogel" gebräuchlich. Daher können die erfindungsgemässen Mikropartikel auch als lichtstabilisierte Polymermikrogele bezeichnet werden.

Das Polymer, aus dem die Mikroteilchen bestehen, kann entweder ein Additionspolymer, insbesondere ein Homo- oder Copolymer aus einer oder mehreren ethylenisch ungesättigten Monomer-Komponenten, oder ein Kondensationspolymer, beispielsweise ein Polyester oder ein Polyamid, oder eine Kombination aus beiden Polymerarten, sein.

Die Mikropartikel können gegebenenfalls mit einem Weichmacher weichgemacht sein.

Handelt es sich bei den Mikropartikeln um ein Additionspolymer, so kommen als geeignete Monomeren z.B. Ethen, Propen, Buten, Isopren, Butadien, Acrylsäure und Methacrylsäure, deren Ester wie z.B. Methylmethacrylat, Butylmethacrylat, Ethylacrylat, Butylacrylat, 2-Ethylhexylacrylat, Vinylether, Vinylester wie z.B. Vinylacetat, die Vinylester von "Versatic Acid"®, Vinylhalogenide wie beispielsweise Vinylchlorid, Vinylidenchlorid, Vinylaromaten wie Styrol, Vinyltoluol, tert.-Butylstyrol oder $\alpha,\beta$-ungesättigte Nitrile wie Acrylnitril oder Methacrylnitril in Frage. Bevorzugt sind Polymere aus Acryl- und Methacrylsäureestern und deren Copolymere.

Vernetzte Additionspolymermikropartikel erhält man z.B., indem man dem Monomerengemisch eine

gewisse Menge an Monomeren zusetzt, welche zusätzlich zu den ungesättigten, polymerisierbaren Gruppierungen komplementär reaktive Gruppen enthalten, z.B. Glycidylmethacrylat oder Methacrylsäure. Geeignete komplementär reaktive Gruppen werden in der GB-PS 1,156,012 beschrieben, wo sich auch Hinweise über die zu verwendenden Monomeren und ein Verfahren zur Herstellung von vernetzten Additionspolymermikroteilchen finden. Die nach der GB-PS 1,156,012 hergestellten Mikropartikel enthalten Gruppen, die bei der Herstellung nicht co-reagiert haben, jedoch z.B. durch nachträgliches Erhitzen zu einer Co-reaktion veranlasst werden können und dabei Vernetzungen bilden.

Eine andere Möglichkeit, vernetzte Additionspolymermikropartikel zu erhalten, besteht darin, den der Polymerisation unterliegenden Monomeren einen kleinen Anteil von Monomeren einzuverleiben, die in Bezug auf die Polymerisationsreaktion bifunktionell sind, wie z.B. Ethylenglycoldimethacrylat oder Divinylbenzol. Weitere Beispiele für geeignete bifunktionelle Monomeren werden z.B. in der US-A 4,290,932 genannt.

Es ist ein bevorzugtes Merkmal der erfindungsgemässen Polymermikroteilchen, dass sie als Bestandteil von Beschichtungszusammensetzungen mittels zur Kondensationspolymerisation befähigter reaktiver Gruppen an deren Härtung teilnehmen können. Im Fall der Additionspolymermikropartikel wird dies beispielsweise mit ethylenisch ungesättigten Monomeren erreicht, die z.B. Hydroxy- oder Carboxylgruppen enthalten. Beispiele sind Hydroxyalkylacrylate oder -methacrylate wie Hydroxyethylacrylat, Hydroxyisopropylmethacrylat oder ungesättigte Carbonsäuren wie Acrylsäure oder Methacrylsäure. Handelt es sich um vernetzbare Polymermikroteilchen, und enthält das entsprechende Monomeren-Gemisch neben den Monomeren mit den zur Lackhärtung befähigten reaktiven Gruppen noch andere Monomere mit komplementär reaktiven Gruppen, z.B. Glycidylgruppen, so setzt man die ersteren im Ueberschuss ein.

Alternativ können die Mikropartikel gleichzeitig selbstvernetzbar und vernetzbar mit anderen Bestandteilen von Lackzusammensetzungen gemacht werden, indem man dem Monomerengemisch Monomere wie z.B. N-Butoxymethyl(meth)acrylamid zugibt.

Geeignete monomere Ausgangsmaterialien für die Herstellung von Kondensationspolymermikroteilchen sind solche, die für die Herstellung solcher Polymere durch Schmelz- oder Lösungspolymerisationstechniken allgemein bekannt sind. Beispiele für geeignete Materialien im Falle von Polyestermikroteilchen sind mehrwertige Alkohole, wie z.B. Ethylenglycol, Propylenglycol, Butylenglycol, 1,6-Hexylenglycol, Neopentylglycol, Diethylenglycol, Triethylenglycol, Tetraethylenglycol, Glycerin, Trimethylolpropan, Trimethylolethan, Pentaerythrit, Dipentaerythrit, Tripentaerythrit, Hexantriol, Oligomere von Styrol und Allylalkohol (wie z.B. das unter der Bezeichnung RJ 100 von der Monsanto Chemical Co. vertriebene Material) und die Kondensationsprodukte von Trimethylolpropan mit Ethylenoxid oder Propylenoxid (wie z.B. die im Handel als "Niax"-Triole bekannten Produkte) gemeinsam mit Polycarbonsäuren, wie z.B. Bernsteinsäure, oder deren Anhydrid, Adipinsäure, Azelainsäure, Sebacinsäure, Maleinsäure oder deren Anhydrid, Fumarsäure, Muconsäure, Itaconsäure, Phthalsäure oder deren Anhydrid, Isophthalsäure, Terephthalsäure, Trimellitsäureanhydrid, Pyromellitsäure oder deren Anhydrid, Truxinsäure und Truxilsäure. Im Falle von Polyamidteilchen sind geeignete monomere Ausgangsmaterialien Aminocarbonsäuren, wie z.B. 6-Aminocapronsäure oder 11-Aminoundecylsäure, oder die entsprechenden Lactame, und/oder Polyamine, wie z.B. Ethylendiamin, Propylendiamin, Hexamethylendiamin, Diethylentriamin, Triethylentetramin oder Tris-(aminomethyl)-methan gemeinsam mit den oben erwähnten Polycarbonsäuren.

Die Vernetzung der Kondensationspolymermikroteilchen wird, wie schon für die Additionspolymermikroteilchen beschrieben, z.B. dadurch erreicht, dass man dem zu polymerisierenden Gemisch einen Anteil eines oder mehrerer Ausgangsmonomeren zusetzt, die eine grössere Funktionalität als 2 aufweisen. Es ist ausserdem bevorzugt, dass die Kondensationspolymermikropartikel als Bestandteil von Beschichtungszusammensetzungen an deren Härtung teilnehmen. Stellt man die Mikropartikel unter Verwendung der oben genannten Monomeren her, so besitzen sie oftmals schon eine zu diesem Zweck ausreichende Anzahl an geeigneten reaktiven Gruppen, z.B. Hydoxy-, Amino- oder Carboxylgruppen, als Endgruppen im Polymer.

Werden zusätzliche reaktive Gruppen benötigt, so führt man in die Monomerenmischung geeignete Monomeren mit einer Funktionalität grösser als 2 ein, die unter den Bedingungen der Teilchenherstellung maximal verzweigen, nicht jedoch vernetzen können.

Die erfindungsemässen Polymermikropartikel können z.B. nur aus dem vernetzten Polymerkern bestehen, der dann das Lichtschutzmittel enthält. Häufig bilden sie aber dann keine stabilen Dispersionen aus (die Teilchen setzen sich ab) oder die Dispersion muss durch Dispergatoren zusätzlich stabilisiert werden. Ferner ist die Verteilung in der flüssigen kontinuierlichen Phase der Lackzusammensetzung, in der die Mikropartikel eingesetzt werden können, nicht ideal. Daher ist es besonders bevorzugt, die Mikropartikel so zu modifizieren, dass stabile Dispersionen in vielen Dispersionsmitteln sowie gute Verteilung in der flüssigen kontinuierlichen Phase von Lackzusammensetzungen gewährleistet sind. Eine bevorzugte Modifikation besteht darin, an den eigentlichen Mikropartikelkern im wesentlichen lineare oder wenig verzweigte

Polymerketten anzubringen, z.B. durch Anpolymerisieren oder Ankondensieren (Graften). Diese linearen Polymeren enthalten funktionelle Gruppen, die ein solches Verhältnis an hydrophilen und hydrophoben Funktionen aufweisen, dass die Dispergierbarkeit des resultierenden Gesamtmikropartikels erhöht und damit eine stabile Dispersion sichergestellt wird. Die zum Aufgraften auf den Polymermikropartikelkern geeigneten linearen bzw. leicht verzweigten Polymeren werden im folgenden auch als "amphipathische" Dispersionsmittel bezeichnet. Selbstverständlich kann die Dispergierbarkeit in bestimmten Lösungsmitteln auch auf andere Weise sichergestellt werden, z.B. durch Einführen von geeigneten Kombinationen ionischer Gruppen.

Erfindungsgemässe Polymermikropartikel, die ein amphipathisches Dispersionsmittel enthalten, können das (die) Lichtschutzmittel im Kern, im amphipathischen Dispersionsmittel, oder in beiden enthalten. Dabei können im Kern und im amphipathischen Dispersionsmittel jeweils verschiedene Lichtschutzmittel enthalten sein. Das Lichtschutzmittel wird in das amphipathische Dispersionsmittel auf die gleiche Weise inkorporiert wie in den Kern, nämlich dadurch, dass die Herstellung desselben (Polymerisation) in Gegenwart des Lichtschutzmittels erfolgt.

Prinzipiell kann (können) das (die) Lichtschutzmittel im Polymermikropartikel chemisch verankert (das Lichtschutzmittel) nimmt an der Polymerisation teil), oder lediglich physikalisch eingeschlossen sein. Beide Fälle führen zu der erwünschten Lichtstabilisation, der chemische Einbau ist jedoch bevorzugt.

Für die Lichtstabilisierung der Mikropartikel kommen Vertreter praktisch aller bekannten Klassen von Lichtschutzmitteln, z.B. sterisch gehinderte Amine, 2-(2-Hydroxyphenyl)benztriazole, Oxalsäureanilide, 2-Hydroxybenzophenone, Hydroxyphenyltriazine oder Zimtsäurederivate, in Frage. Als Lichtschutzmittel bevorzugt sind hierbei 2-(2-Hydroxyphenyl)benztriazole und insbesondere sterisch gehinderte Amine.

Gehört das Lichtschutzmittel der Klasse der sterisch gehinderten Amine an, so handelt es sich vorzugsweise um cyclische Amine, insbesondere um Derivate von 5-, 6- oder 7-gliedrigen heterocyclischen Ringsystemen mit 1 oder 2 N-Atomen, die in beiden Ortho-Positionen zum N-Atom tertiäre C-Atome besitzen, wodurch eine sterische Hinderung des N-Atoms bewirkt wird.

Beispiele für solche Ringsysteme sind die 2,2,5,5-tetrasubstituierten Pyrrolidine, Imidazolidone oder Oxazoline der Formeln

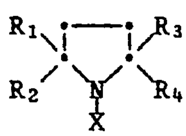 , 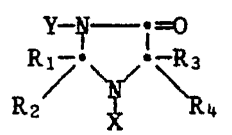 , 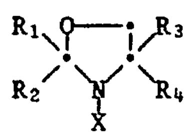

oder die 2,2,6,6-tetrasubstituierten Piperazinone und Piperazindione der Formeln

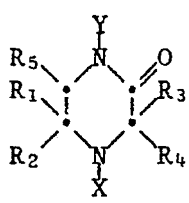 und 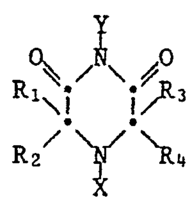

oder die Diazacycloheptanone der Formel

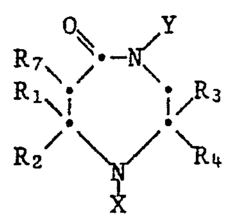

worin $R_1$, $R_2$, $R_3$ und $R_4$ gegebenenfalls zu Spiroringen vereinigte aliphatische Kohlenwasserstoffreste, $R_5$

und $R_7$ Wasserstoff oder Alkyl und X Wasserstoff, Oxyl-Sauerstoff, OH oder einen einwertigen organischen Rest und Y Wasserstoff, einen einwertigen oder zweiwertigen organischen Rest bedeuten. Ein Beispiel für solche Verbindungen ist jene der Formel

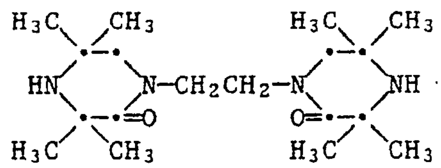

Auch in 2-Stellung disubstituierte Decahydrochinoline sind Repräsentanten der sterisch gehinderten Amine.

Von besonderer Bedeutung unter den Verbindungen der sterisch gehinderten Amine sind die 2,2,6,6-Tetraalkylpiperidinderivate. Es handelt sich dabei um Verbindungen, die in ihrem Molekül mindestens eine Gruppe der Formel 1 enthalten,

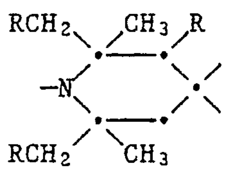

(I),

worin R Wasserstoff oder Methyl bedeutet. Das Lichtschutzmittel kann eine oder mehrere solcher Gruppen der Formel I enthalten, beispielsweise kann es sich um eine Mono-, Bis-, Tris-, Tetra- oder Oligopiperidinverbindung handeln. Bevorzugt sind Piperidinderivate, die eine oder mehrere Gruppen der Formel I enthalten, worin R Wasserstoff ist, sowie solche, deren Ringstickstoff kein Wasserstoffatom trägt.

Die meisten dieser Piperidin-Lichtschutzmittel tragen polare Substituenten in der 4-Stellung des Piperidinringes oder tragen einen Spiroring in dieser Stellung.

Von Bedeutung sind insbesondere die folgenden Klassen von Piperidinverbindungen.

a) Verbindungen der Formel II

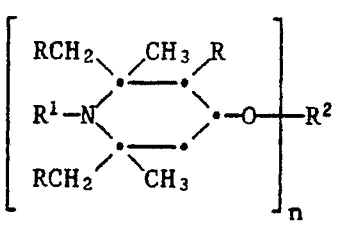

(II),

worin n eine Zahl von 1 bis 4, vorzugsweise 1 oder 2 bedeutet, R Wasserstoff oder Methyl bedeutet, $R^1$ Wasserstoff, Oxyl, $C_1$-$C_{18}$ Alkyl, $C_3$-$C_8$ Alkenyl, $C_3$-$C_8$ Alkinyl, $C_7$-$C_{12}$ Aralkyl, $C_1$-$C_8$ Alkanoyl, $C_3$-$C_5$ Alkenoyl, Glycidyl oder eine Gruppe $-CH_2CH(OH)-Z$, worin Z Wasserstoff, Methyl oder Phenyl ist, bedeutet, wobei $R^1$ vorzugsweise $C_1$-$C_{12}$ Alkyl, Allyl, Benzyl, Acetyl oder Acryloyl ist und $R^2$, wenn n 1 ist, Wasserstoff, gegebenenfalls durch ein oder mehrere Sauerstoffatome unterbrochenes $C_1$-$C_{18}$ Alkyl, Cyanethyl, Benzyl, Glycidyl, einen einwertigen Rest einer aliphatischen, cycloaliphatischen, araliphatischen, ungesättigten oder aromatischen Carbonsäure, Carbaminsäure oder Phosphor enthaltenden Säure oder einen einwertigen Silylrest, vorzugsweise einen Rest einer aliphatischen Carbonsäure mit 2 bis 18 C-Atomen, einer cycloaliphatischen Carbonsäure mit 7 bis 15 C-Atomen, einer $\alpha,\beta$-ungesättigten Carbonsäure mit 3 bis 5 C-Atomen oder einer aromatischen Carbonsäure mit 7 bis 15 C-Atomen bedeutet, wenn n 2 ist, $C_1$-$C_{12}$ Alkylen, $C_4$-$C_{12}$ Alkenylen, Xylylen, einen zweiwertigen Rest einer aliphatischen, cycloaliphatischen, araliphatischen oder aromatischen Dicarbonsäure, Dicarbaminsäure oder Phosphor enthaltenden Säure oder einen zweiwertigen Silylrest, vorzugsweise einen Rest einer aliphatischen Dicarbonsäure mit 2 bis 36 C-Atomen, einer cycloaliphatischen oder aromatischen Dicarbonsäure mit 8 - 14 C-Atomen oder einer aliphatischen, cycloaliphatischen oder aromatischen Dicarbaminsäure mit 8 - 14 C-Atomen bedeutet, wenn n 3 ist, einen dreiwertigen Rest einer aliphatischen, cycloaliphatischen oder aromatischen Tricarbonsäure, einer aromatischen Tricarbaminsäure oder einer Phosphor enthaltenden Säure oder einen dreiwertigen Silylrest bedeutet und wenn n 4 ist, einen vierwertigen Rest einer aliphatischen, cycloaliphatischen oder aromatischen Tetracarbonsäure bedeutet.

Bedeuten etwaige Substituenten $C_1$-$C_{12}$ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

In der Bedeutung von $C_1$-$C_{18}$ Alkyl können $R^1$ oder $R^2$ z.B. die oben angeführten Gruppen und dazu noch beispielsweise n-Tridecyl, n-Tetradecyl, n-Hexadecyl oder n-Octadecyl darstellen.

Wenn $R^1$ $C_3$-$C_8$ Alkenyl bedeutet, so kann es sich z.B. um 1-Propenyl, Allyl, Methallyl, 2-Butenyl, 2-Pentenyl, 2-Hexenyl, 2-Octenyl, 4-tert.-Butyl-2-butenyl handeln.

$R^1$ ist als $C_3$-$C_8$ Alkinyl bevorzugt Propargyl.

Als $C_7$-$C_{12}$ Aralkyl ist $R^1$ insbesondere Phenethyl oder vor allem Benzyl.

$R^1$ ist als $C_1$-$C_8$ Alkanoyl beispielsweise Formyl, Propionyl, Butyryl, Octanoyl, aber bevorzugt Acetyl und als $C_3$-$C_5$ Alkenoyl insbesondere Acryloyl.

Bedeutet $R^2$ einen einwertigen Rest einer Carbonsäure, so stellt es beispielsweise einen Essigsäure-, Capronsäure-, Stearinsäure-, Acrylsäure-, Methacrylsäure-, Benzoe- oder $\beta$-(3,5-Di-tert.-butyl-4-hydroxyphenyl)-propionsäurerest dar.

Bedeutet $R^2$ einen zweiwertigen Rest einer Dicarbonsäure, so stellt es beispielsweise einen Malonsäure-, Adipinsäure-, Korksäure-, Sebacinsäure-, Maleinsäure-, Phthalsäure-, Dibutylmalonsäure-, Dibenzylmalonsäure-, Butyl-(3,5-di-tert.-butyl-4-hydroxybenzyl)-malonsäure- oder Bicycloheptendicarbonsäurerest dar.

Stellt $R^2$ einen dreiwertigen Rest einer Tricarbonsäure dar, so bedeutet es z.B. einen Trimellitsäure- oder einen Nitrilotriessigsäurerest.

Stellt $R^2$ einen vierwertigen Rest einer Tetracarbonsäure dar, so bedeutet es z.B. den vierwertigen Rest von Butan-1,2,3,4-tetracarbonsäure oder von Pyromellitsäure.

Bedeutet $R^2$ einen zweiwertigen Rest einer Dicarbaminsäure, so stellt es beispielsweise einen Hexamethylendicarbaminsäure- oder einen 2,4-Toluylen-dicarbaminsäurerest dar.

Besonders zu erwähnen sind dabei Verbindungen der Formel II, worin n 1 oder 2, R Wasserstoff, $R^1$ Wasserstoff, Oxyl, $C_1$-$C_6$-Alkyl, $C_3$-$C_8$-Alkenyl, z.B. Allyl, Benzyl, $C_2$-$C_6$-Alkanoyl, $C_3$-$C_5$-Alkenoyl, z.B. Acryloyl oder Methacryloyl, Glycidyl oder $-CH_2CH(OH)-Z_1$, worin $Z_1$ Wasserstoff oder Methyl ist, und $R_2$, wenn n 1 ist, Wasserstoff, $C_1$-$C_{12}$-Alkyl, Benzyl oder den Rest einer aliphatischen Carbonsäure mit 2-18 C-Atomen, einer $\alpha,\beta$-ungesättigten Carbonsäure mit 3-5 C-Atomen oder einer aromatischen Carbonsäure mit 7-15 C-Atomen, und wenn n 2 ist, $C_1$-$C_6$-Alkylen, $C_4$-$C_8$-Alkenylen oder den Rest einer aliphatischen gesättigten oder ungesättigten Dicarbonsäure mit 2-18 C-Atomen bedeuten.

Beispiele für Tetraalkylpiperidin-Verbindungen dieser Klasse sind folgende Verbindungen:

1) 4-Hydroxy-2,2,6,6-tetramethylpiperidin
2) 1-Allyl-4-hydroxy-2,2,6,6-tetramethylpiperidin
3) 1-Benzyl-4-hydroxy-2,2,6,6-tetramethylpiperidin
4) 1-(4-tert.-Butyl-2-butenyl)-4-hydroxy-2,2,6,6-tetramethylpiperidin
5) 4-Stearoyloxy-2,2,6,6-tetramethylpiperidin
6) 1-Ethyl-4-salicyloyloxy-2,2,6,6-tetramethylpiperidin
7) 4-Methacryloyloxy-1,2,2,6,6-pentamethylpiperidin
8) 1,2,2,6,6-Pentamethylpiperidin-4-yl-$\beta$-(3,5-di-tert.-butyl-4-hydroxyphenyl)-propionat
9) Di-(1-benzyl-2,2,6,6-tetramethylpiperidin-4-yl)-maleinat
10) Di-(2,2,6,6-tetramethylpiperidin-4-yl)-adipat
11) Di-(2,2,6,6-tetramethylpiperidin-4-yl)-sebacat
12) Di-(1,2,3,6-tetramethyl-2,6-diethyl-piperidin-4-yl)-sebacat
13) Di-(1-allyl-2,2,6,6-tetramethylpiperidin-4-yl)-phthalat
14) 1-Propargyl-4-$\beta$-cyanoethyloxy-2,2,6,6-tetramethylpiperidin
15) 1-Acetyl-2,2,6,6-tetramethylpiperidin-4-yl-acetat
16) Trimellithsäure-tri-(2,2,6,6-tetramethylpiperidin-4-yl)-ester
17) 1-Acryloyl-4-benzyloxy-2,2,6,6-tetramethylpiperidin
18) Dibutyl-malonsäure-di-(1,2,2,6,6-pentamethylpiperidin-4-yl)-ester
19) Butyl-(3,5-di-tert.-butyl-4-hydroxybenzyl)-malonsäure-di-(1,2,2,6,6-pentamethylpiperidin-4-yl)-ester
20) Dibenzyl-malonsäure-di-(1,2,2,6,6-pentamethylpiperidin-4-yl)-ester

21) Dibenzyl-malonsäure-di-(1,2,3,6-tetramethyl-2,6-diethyl-piperidin-4-yl)ester
22) Hexan-1',6'-bis-(4-carbamoyloxy-1-n-butyl-2,2,6,6-tetramethylpiperidin)
23) Toluol-2',4'-bis-(4-carbamoyloxy-1-n-propyl-2,2,6,6-tetramethylpiperidin)
24) Dimethyl-bis-(2,2,6,6-tetramethylpiperidin-4-oxy)-silan
25) Phenyl-tris-(2,2,6,6-tetramethylpiperidin-4-oxy)-silan
26) Tris-(1-propyl-2,2,6,6-tetramethylpiperidin-4-yl)-phosphit
27) Tris-(1-propyl-2,2,6,6-tetramethylpiperidin-4-yl)phosphat
28) Phenyl-[bis-(1,2,2,6,6-pentamethylpiperidin-4-yl)]-phosphonat
29) Di-(1,2,2,6,6-pentamethylpiperidin-4-yl)-sebacat
29a) 4-Hydroxy-1,2,2,6,6-pentamethylpiperidin
29b) 4-Hydroxy-N-hydroxyethyl-2,2,6,6-tetramethylpiperidin
29c) 4-Hydroxy-N-(2-hydroxypropyl)-2,2,6,6-tetramethylpiperidin
29d) 1-Glycidyl-4-hydroxy-2,2,6,6-tetramethylpiperidin

b) Verbindungen der Formel (III)

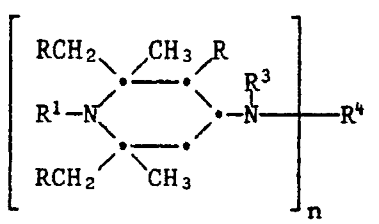

(III)

worin n die Zahl 1 oder 2 bedeutet, R und $R^1$ die unter a) angegebenen Bedeutungen und bevorzugten Bedeutungen haben, $R^3$ Wasserstoff, $C_1$-$C_{12}$ Alkyl, $C_2$-$C_5$ Hydroxyalkyl, $C_5$-$C_7$ Cycloalkyl, $C_7$-$C_8$ Aralkyl, $C_2$-$C_{18}$ Alkanoyl, $C_3$-$C_5$ Alkenoyl oder Benzoyl ist und $R^4$, wenn n 1 ist, Wasserstoff, $C_1$-$C_{18}$ Alkyl, $C_3$-$C_8$ Alkenyl, $C_5$-$C_7$ Cycloalkyl, mit einer Hydroxy-, Cyano-, Alkoxycarbonyl- oder Carbamidgruppe substituiertes $C_1$-$C_4$ Alkyl, Glycidyl, eine Gruppe der Formel $-CH_2-CH(OH)-Z$ oder der Formel -CONH-Z ist, worin Z Wasserstoff, Methyl oder Phenyl bedeutet; wenn n 2 ist, $C_2$-$C_{12}$ Alkylen, $C_6$-$C_{12}$ Arylen, Xylylen, eine $-CH_2-CH(OH)-CH_2$-Gruppe oder eine Gruppe $-CH_2-CH(OH)-CH_2-O-D-O-CH_2-CH(OH)-CH_2-$ bedeutet, worin D $C_2$-$C_{10}$ Alkylen, $C_6$-$C_{15}$ Arylen, $C_6$-$C_{12}$ Cycloalkylen ist, oder vorausgesetzt, dass $R^3$ nicht Alkanoyl, Alkenoyl oder Benzoyl bedeutet, $R^4$ auch einen zweiwertigen Rest einer aliphatischen, cycloaliphatischen oder aromatischen Dicarbonsäure oder Dicarbaminsäure oder auch die Gruppe -CO- bedeuten kann, oder $R^3$ und $R^4$ zusammen, wenn n 1 ist, den zweiwertigen Rest einer aliphatischen, cycloaliphatischen oder aromatischen 1,2- oder 1,3-Dicarbonsäure bedeuten können.

Stellen etwaige Substituenten $C_1$-$C_{12}$- oder $C_1$-$C_{18}$Alkyl dar, so haben sie die bereits unter a) angegebene Bedeutung.

Bedeuten etwaige Substituenten $C_5$-$C_7$ Cycloalkyl, so stellen sie insbesondere Cyclohexyl dar.

Als $C_7$-$C_8$ Aralkyl ist $R^3$ insbesondere Phenylethyl oder vor allem Benzyl. Als $C_2$-$C_5$Hydroxyalkyl ist $R^3$ insbesondere 2-Hydroxyethyl oder 2-Hydroxypropyl.

$R^3$ ist als $C_2$-$C_{18}$ Alkanoyl beispielsweise Propionyl, Butyryl, Octanoyl, Dodecanoyl, Hexadecanoyl, Octadecanoyl, aber bevorzugt Acetyl und als $C_3$-$C_5$ Alkenoyl insbesondere Acryloyl.

Bedeutet $R^4$ $C_2$-$C_8$ Alkenyl, dann handelt es sich z.B. um Allyl, Methallyl, 2-Butenyl, 2-Pentenyl, 2-Hexenyl oder 2-Octenyl.

$R^4$ als mit einer Hydroxy-, Cyano-, Alkoxycarbonyl- oder Carbamidgruppe substituiertes $C_1$-$C_4$-Alkyl kann z.B. 2-Hydroxyethyl, 2-Hydroxypropyl, 2-Cyanethyl, Methoxycarbonylmethyl, 2-Ethoxycarbonylethyl, 2-Aminocarbonylpropyl oder 2-(Dimethylaminocarbonyl)-ethyl sein.

Stellen etwaige Substituenten $C_2$-$C_{12}$ Alkylen dar, so handelt es sich z.B. um Ethylen, Propylen, 2,2-Dimethylpropylen, Tetramethylen, Hexamethylen, Octamethylen, Decamethylen oder Dodecamethylen.

Bedeuten etwaige Substituenten $C_6$-$C_{15}$-Arylen, so stellen sie z.B. o-, m- oder p-Phenylen, 1,4-Naphthylen, 4,4'-Diphenylen oder

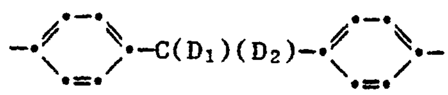

dar, worin $D_1$ und $D_2$ unabhängig voneinander Wasserstoff oder Methyl sind.

Als $C_6$-$C_{12}$ Cycloalkylen ist D insbesondere Cyclohexylen.

Zu erwähnen sind insbesondere solche Verbindungen der Formel III, worin R und $R^1$ die unter a) angegebenen bevorzugten Bedeutungen haben, $R^3$ Wasserstoff oder $C_1$-$C_6$-Alkyl und $R^4$, wenn n 1 ist, Wasserstoff, $C_1$-$C_{12}$-Alkyl, $C_3$-$C_8$-Alkenyl, mit Hydroxy, Cyano oder Carbamido substituiertes $C_1$-$C_4$-Alkyl, $CH_2CH(OH)$-Z, CONH-Z; und wenn n 2 ist, $R^4$ die unter Formel III angegebenen Bedeutungen hat, mit Ausnahme der gemeinsamen Bedeutung $R^3 + R^4$.

Beispiele für Tetraalkylpiperidin-Verbindungen dieser Klasse sind folgende Verbindungen:

30) N,N'-Bis-(2,2,6,6-tetramethylpiperidin-4-yl)-hexamethylen-1,6-diamin
31) N,N'-Bis-(2,2,6,6-tetramethylpiperidin-4-yl)-hexamethylen-1,6-diacetamid
32) 1-Acetyl-4-(N-cyclohexylacetamido)-2,2,6,6-tetramethylpiperidin
33) 4-Benzoylamino-2,2,6,6-tetramethylpiperidin
34) N,N'-Bis-(2,2,6,6-tetramethylpiperidin-4-yl)-N,N'-dibutyladipamid
35) N,N'-Bis-(2,2,6,6-tetramethylpiperidin-4-yl)-N,N'-dicyclohexyl-2-hydroxypropylen-1,3-diamin
36) N,N'-Bis-(2,2,6,6-tetramethylpiperidin-4-yl)-p-xylylen-diamin
37) Die Verbindung der Formel

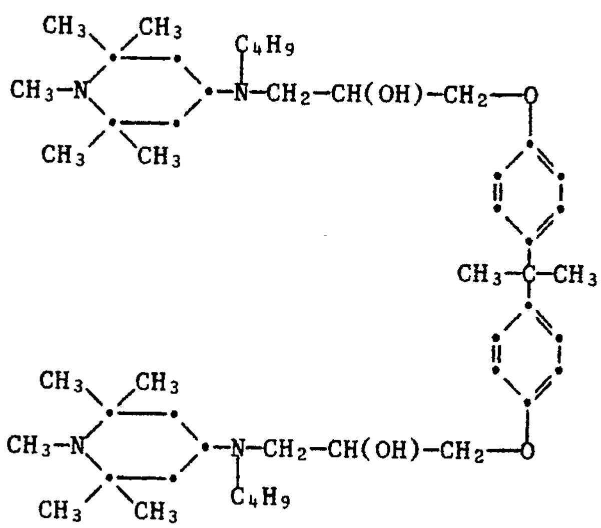

38) 4-(Bis-2-hydroxyethyl-amino)-1,2,2,6,6-pentamethylpiperidin
39) 4-(3-Methyl-4-hydroxy-5-tert.-butyl-benzoesäureamido)-2,2,6,6-tetramethylpiperidin
40) 4-Methacrylamido-1,2,2,6,6-pentamethylpiperidin

c) Verbindungen der Formel (IV)

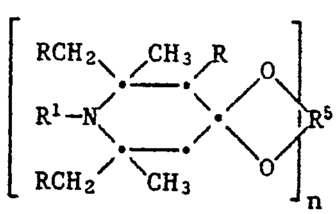

(IV)

worin n die Zahl 1 oder 2 bedeutet, R und $R^1$ die unter a) angegebenen Bedeutungen und bevorzugten Bedeutungen haben und $R^5$, wenn n 1 ist, $C_2$-$C_8$ Alkylen oder Hydroxyalkylen oder $C_4$-$C_{22}$ Acyloxyalkylen,

wenn n 2 ist, die Gruppe $(-CH_2)_2C(CH_2-)_2$ bedeutet.

Bedeutet $R^5$ $C_2$-$C_8$-Alkylen oder -Hydroxyalkylen, so stellt es beispielsweise Ethylen, 1-Methyl-ethylen, Propylen, 2-Ethyl-propylen oder 2-Ethyl-2-hydroxymethylpropylen dar.

Als $C_4$-$C_{22}$ Acyloxyalkylen bedeutet $R^5$ z.B. 2-Ethyl-2-acetoxymethylpropylen.

$R^5$ bildet somit im Fall n = 2 die Ergänzung zu einem Spiro-6-Ring und im Fall n = 1 vorzugsweise die Ergänzung zu einem Spiro-5- oder 6-Ring.

Beispiele für Tetraalkylpiperidin-Verbindungen dieser Klasse sind folgende Verbindungen:

41) 9-Aza-8,8,10,10-tetramethyl-1,5-dioxaspiro[5.5]undecan
42) 9-Aza-8,8,10,10-tetramethyl-3-ethyl-1,5-dioxaspiro[5.5]undecan
43) 8-Aza-2,7,7,8,9,9-hexamethyl-1,4-dioxaspiro[4.5]decan
44) 9-Aza-3-hydroxymethyl-3-ethyl-8,8,9,10,10-pentamethyl-1,5-dioxaspiro [5.5]undecan
45) 9-Aza-3-ethyl-3-acetoxymethyl-9-acetyl-8,8,10,10-tetramethyl-1,5-dioxaspiro[5.5]undecan
46) 2,2,6,6-Tetramethylpiperidin-4-spiro-2'-(1',3'-dioxan)-5'-spiro-5"-(1",3"-dioxan)-2"-spiro-4‴-(2‴, 2‴, 6‴, 6‴-tetramethylpiperidin).

d) Verbindungen der Formeln VA, VB und VC

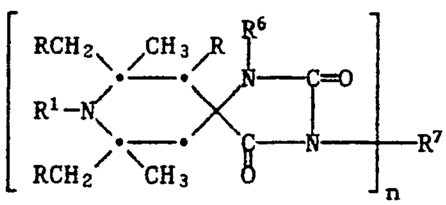

(VA)

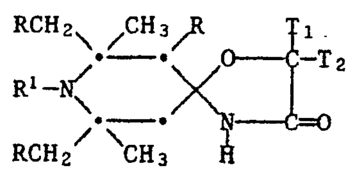

(VB)

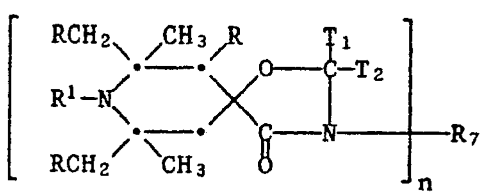

(VC)

worin n die Zahl 1 oder 2 bedeutet, R und $R^1$ die unter a) angegebenen Bedeutungen und bevorzugten Bedeutungen haben, $R^6$ Wasserstoff, $C_1$-$C_{12}$ Alkyl, Allyl, Benzyl, Glycidyl oder $C_2$-$C_6$ Alkoxyalkyl ist und $R^7$, wenn n 1 ist, Wasserstoff, $C_1$-$C_{12}$ Alkyl, $C_3$-$C_5$ Alkenyl, $C_7$-$C_9$ Aralkyl, $C_5$-$C_7$ Cycloalkyl, $C_2$-$C_4$ Hydroxyalkyl, $C_2$-$C_6$ Alkoxyalkyl, $C_6$-$C_{10}$ Aryl, Glycidyl oder eine Gruppe der Formel $-(CH_2)_p$-COO-Q oder der Formel $-(CH_2)_p$-O-CO-Q ist, worin p 1 oder 2 und Q $C_1$-$C_4$ Alkyl oder Phenyl sind, wenn n 2 ist, $C_2$-$C_{12}$ Alkylen, $C_4$-$C_{12}$-Alkenylen, $C_6$-$C_{12}$ Arylen, eine Gruppe $-CH_2-CH(OH)-CH_2-O-D-O-CH_2-CH(OH)-CH_2-$, worin D $C_2$-$C_{10}$ Alkylen, $C_6$-$C_{15}$ Arylen, $C_6$-$C_{12}$ Cycloalkylen ist, oder eine Gruppe $-CH_2CH(OZ')CH_2-(OCH_2-CH(OZ')CH_2)_2-$ bedeutet, worin Z' Wasserstoff, $C_1$-$C_{18}$ Alkyl, Allyl, Benzyl, $C_2$-$C_{12}$ Alkanoyl oder Benzoyl ist, $T_1$ und $T_2$ unabhängig voneinander Wasserstoff, $C_1$-$C_{18}$ Alkyl oder gegebenenfalls durch Halogen oder $C_1$-$C_4$ Alkyl substituiertes $C_6$-$C_{10}$ Aryl oder $C_7$-$C_9$ Aralkyl bedeuten oder $T_1$ und $T_2$ zusammen mit dem sie bindenden C-Atom einen $C_5$-$C_{12}$ Cycloalkanring bilden.

Bedeuten etwaige Substituenten $C_1$-$C_{12}$ Alkyl, so stellen sie z.B. Methyl, Ethyl, n-Propyl, n-Butyl, sek.-Butyl, tert.-Butyl, n-Hexyl, n-Octyl, 2-Ethyl-hexyl, n-Nonyl, n-Decyl, n-Undecyl oder n-Dodecyl dar.

Etwaige Substituenten in der Bedeutung von $C_1$-$C_{18}$ Alkyl können z.B. die oben angeführten Gruppen

und dazu noch beispielsweise n-Tridecyl, n-Tetradecyl, n-Hexadecyl oder n-Octadecyl darstellen.

Bedeuten etwaige Substituenten $C_2$-$C_6$ Alkoxyalkyl, so stellen sie z.B. Methoxymethyl, Ethoxymethyl, Propoxymethyl, tert.-Butoxymethyl, Ethoxyethyl, Ethoxypropyl, n-Butoxyethyl, tert.-Butoxyethyl, Isopropoxyethyl oder Propoxypropyl dar.

Stellt $R^7$ $C_3$-$C_5$ Alkenyl dar, so bedeutet es z.B. 1-Propenyl, Allyl, Methallyl, 2-Butenyl oder 2-Pentenyl.

Als $C_7$-$C_9$ Aralkyl sind $R^7$, $T_1$ und $T_2$ insbesondere Phenethyl oder vor allem Benzyl. Bilden $T_1$ und $T_2$ zusammen mit dem C-Atom einen Cycloalkanring, so kann dies z.B. ein Cyclopentan-, Cyclohexan-, Cyclooctan- oder Cyclododecanring sein.

Bedeutet $R^7$ $C_2$-$C_4$ Hydroxyalkyl, so stellt es z.B. 2-Hydroxyethyl, 2-Hydroxypropyl, 2-Hydroxybutyl oder 4-Hydroxybutyl dar.

Als $C_6$-$C_{10}$ Aryl bedeuten $R^7$, $T_1$ und $T_2$ insbesondere Phenyl, $\alpha$- oder $\beta$-Naphthyl, die gegebenenfalls mit Halogen oder $C_1$-$C_4$ Alkyl substituiert sind.

Stellt $R^7$ $C_2$-$C_{12}$ Alkylen dar, so handelt es sich z.B. um Ethylen, Propylen, 2,2,-Dimethylpropylen, Tetramethylen, Hexamethylen, Octamethylen, Decamethylen oder Dodecamethylen.

Als $C_4$-$C_{12}$ Alkenylen bedeutet $R^7$ insbesondere 2-Butenylen, 2-Pentenylen oder 3-Hexenylen.

Bedeutet $R^7$ $C_6$-$C_{12}$ Arylen, so stellt es beispielsweise o-, m- oder p-Phenylen, 1,4-Naphthylen oder 4,4'-Diphenylen dar.

Bedeutet Z' $C_2$-$C_{12}$ Alkanoyl, so stellt es beispielsweise Propionyl, Butyryl, Octanoyl, Dodecanoyl, aber bevorzugt Acetyl dar.

D hat als $C_2$-$C_{10}$ Alkylen, $C_6$-$C_{15}$ Arylen oder $C_6$-$C_{12}$ Cycloalkylen die unter b) angegebenen bevorzugten Bedeutungen.

Beispiele für Tetraalkylpiperidin-Verbindungen dieser Klasse sind folgende Verbindungen:

47) 3-Benzyl-1,3,8-triaza-7,7,9,9-tetramethylspiro[4.5]decan-2,4-dion
48) 3-n-Octyl-1,3,8-triaza-7,7,9,9-tetramethylspiro[4.5]decan-2,4-dion
49) 3-Allyl-1,3,8-triaza-1,7,7,9,9-pentamethylspiro[4.5]decan-2,4-dion
50) 3-Glycidyl-1,3,8-triaza-7,7,8,9,9-pentamethylspiro[4.5]decan-2,4-dion
51) 2-Iso-propyl-7,7,9,9-tetramethyl-1-oxa-3,8-diaza-4-oxo-spiro[4.5]decan
52) 2,2-Dibutyl-7,7,9,9-tetramethyl-1-oxa-3,8-diaza-4-oxo-spiro[4.5]decan
53) 2,2,4,4-Tetramethyl-7-oxa-3,20-diaza-21-oxo-dispiro[5.1.11.2]heneicosan
54) 2-Butyl-7,7,9,9-tetramethyl-1-oxa-4,8-diaza-3-oxo-spiro[4.5]decan
54a) 8-Acetyl-3-dodecyl-1,3,8-triaza-7,7,9,9-tetramethylspiro[4.5]decan-2,4-dion

oder die Verbindungen der folgenden Formeln:

55) 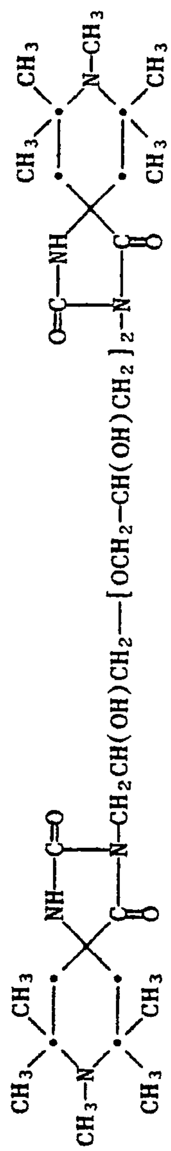

56) 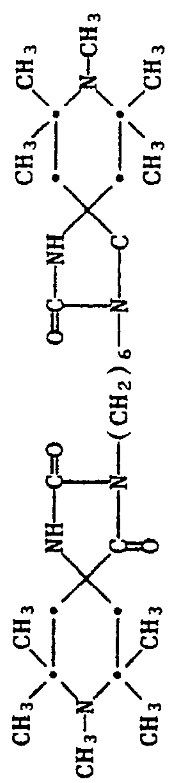

57) 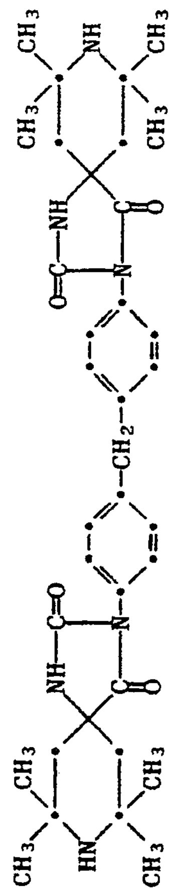

58) 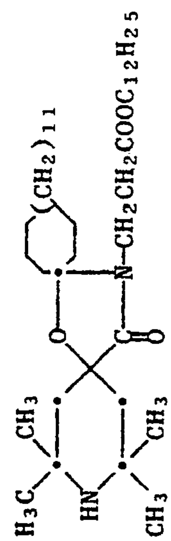

e) Verbindungen der Formel VI

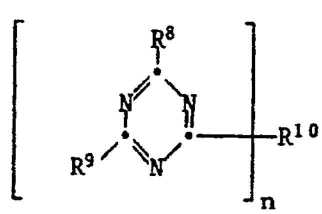 (VI),

worin n die Zahl 1 oder 2 ist und $R^8$ eine Gruppe der Formel

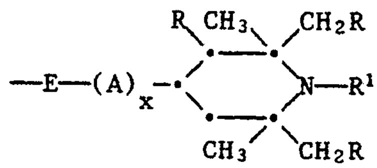

bedeutet, worin R und $R^1$ die unter a) angegebenen Bedeutungen und bevorzugten Bedeutungen haben, E -O- oder $-NR^{11}-$ ist, A $C_2$-$C_6$-Alkylen oder $-(CH_2)_3-O-$ und x die Zahlen 0 oder 1 bedeuten, $R^9$ gleich $R^8$ oder eine der Gruppen $-NR^{11}R^{12}$, $-OR^{13}$, $-NHCH_2OR^{13}$ oder $-N(CH_2OR^{13})_2$ ist, $R^{10}$, wenn n = 1 ist, gleich $R^8$ oder $R^9$, und wenn n = 2 ist, eine Gruppe -E-B-E- ist, worin B gegebenenfalls durch $-N(R^{11})-$ unterbrochenes $C_2$-$C_6$ Alkylen bedeutet, $R^{11}$ $C_1$-$C_{12}$ Alkyl, Cyclohexyl, Benzyl oder $C_1$-$C_4$ Hydroxyalkyl oder eine Gruppe der Formel

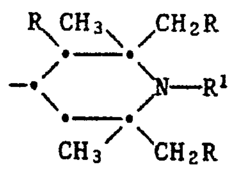

ist, $R^{12}$ $C_1$-$C_{12}$ Alkyl, Cyclohexyl, Benzyl, $C_1$-$C_4$ Hydroxyalkyl und $R^{13}$ Wasserstoff, $C_1$-$C_{12}$ Alkyl oder Phenyl bedeuten oder $R^{11}$ und $R^{12}$ zusammen $C_4$-$C_5$-Alkylen oder -Oxaalkylen, beispielsweise

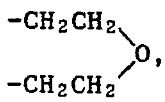 oder eine Gruppe der Formel 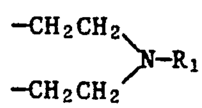

sind oder auch $R^{11}$ und $R^{12}$ jeweils eine Gruppe der Formel

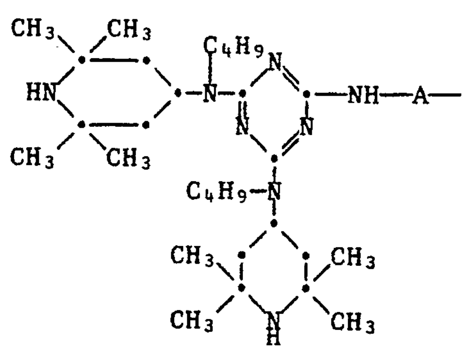

bedeuten.

Bedeuten etwaige Substituenten $C_1$-$C_{12}$ Alkyl, so stellen sie beispielsweise Methyl, Ethyl, n-Propyl, n-Butyl, sek.-Butyl, tert.-Butyl, n-Hexyl, n-Octyl, 2-Ethylhexyl, n-Nonyl, n-Decyl, n-Undecyl oder n-Dodecyl dar.

Bedeuten etwaige Substituenten $C_1$-$C_4$ Hydroxyalkyl, so stellen sie z.B. 2-Hydroxyethyl, 2-Hydroxypropyl, 3-Hydroxypropyl, 2-Hydroxybutyl oder 4-Hydroxybutyl dar.

Bedeutet A $C_2$-$C_6$ Alkylen, so stellt es beispielsweise Ethylen, Propylen, 2,2,-Dimethylpropylen, Tetramethylen oder Hexamethylen dar.

Stellen $R^{11}$ und $R^{12}$ zusammen $C_4$-$C_5$ Alkylen oder Oxaalkylen dar, so bedeutet dies z.B. Tetramethylen, Pentamethylen oder 3-Oxapentamethylen.

Beispiele für Tetraalkylpiperidin-Verbindungen dieser Klasse sind die Verbindungen der folgenden Formeln:

59) 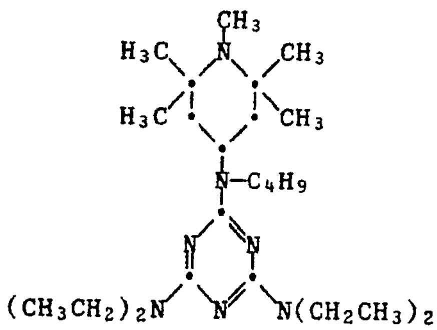

60) 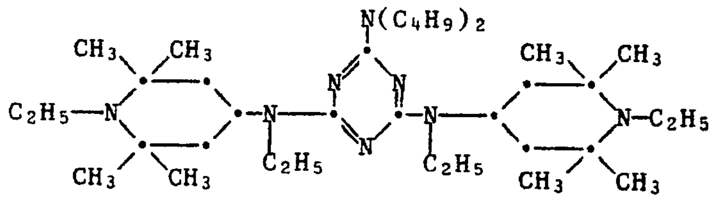

61) 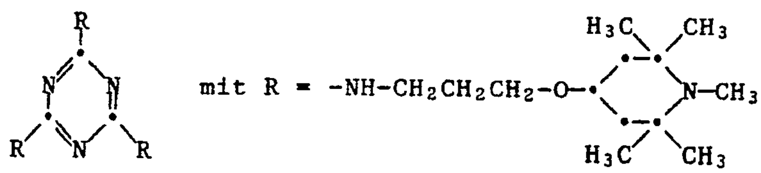

62)

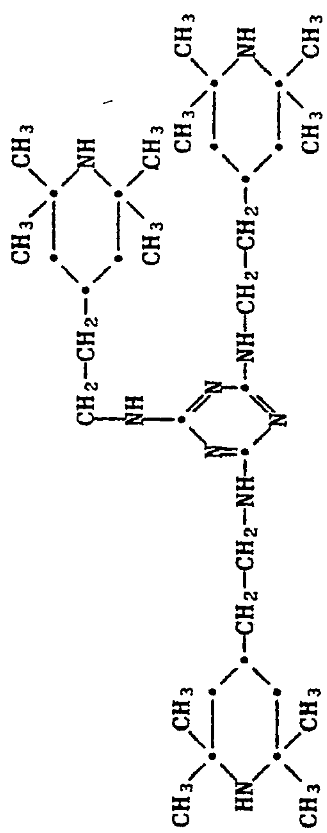

63)

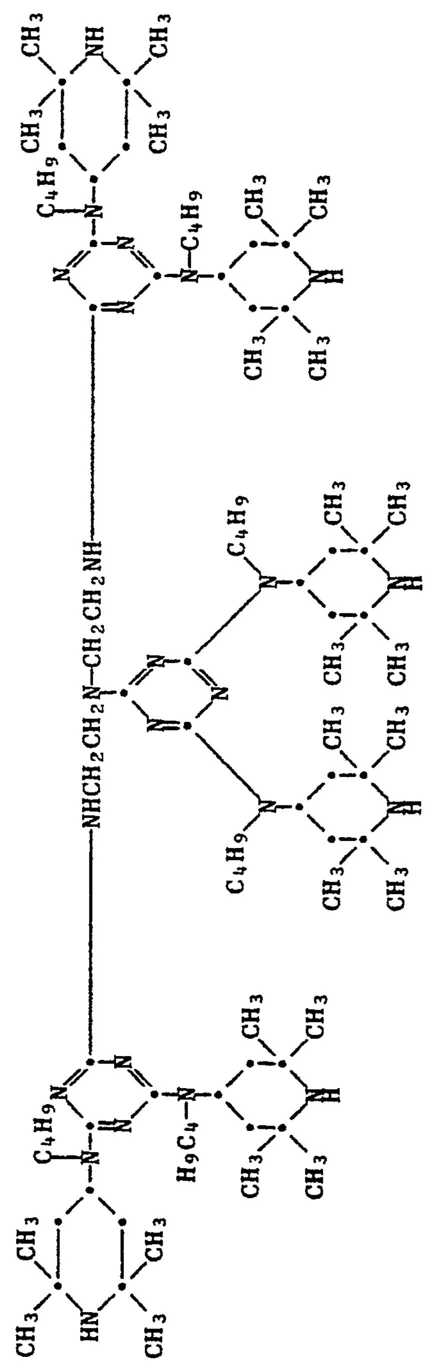

64) 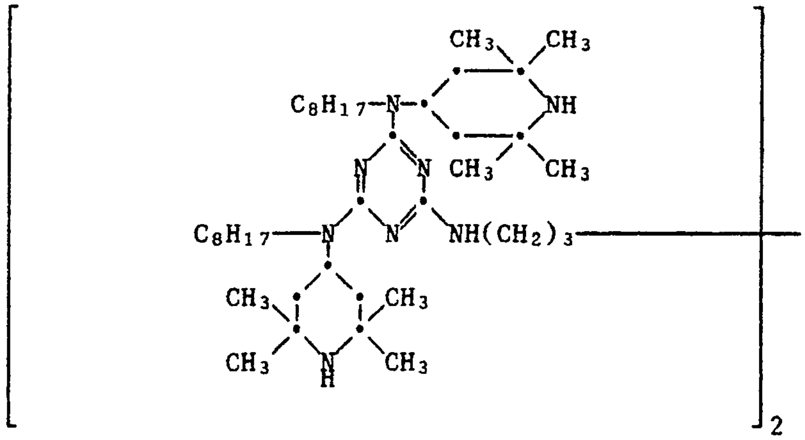

65) 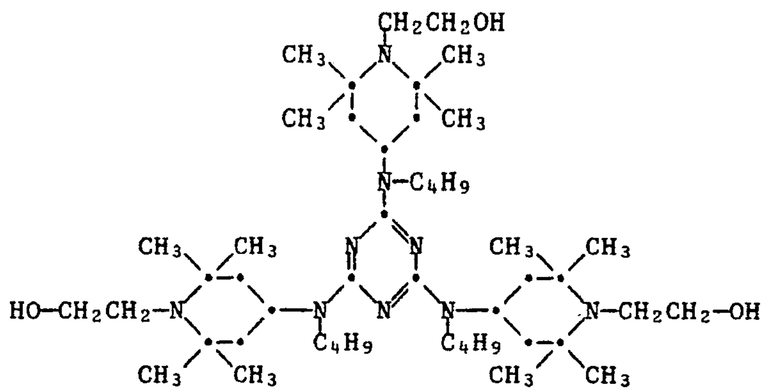

(66) 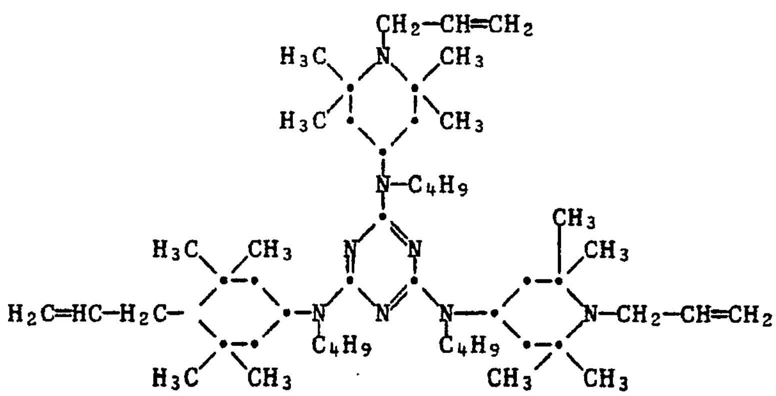

f) Oligomere oder polymere Verbindungen, deren wiederkehrende Struktureinheit einen 2,2,6,6-Tetraalkylpiperidinrest der Formel (I) enthält, insbesondere Polyester, Polyäther, Polyamide, Polyamine, Polyurethane, Polyharnstoffe, Polyaminotriazine, Poly(meth)acrylate, Poly(meth)acrylamide und deren Copolymeren, die solche Reste enthalten.

Beispiele für 2,2,6,6-Tetraalkylpiperidin-Lichtschutzmittel dieser Klasse sind die Verbindungen der folgenden Formeln, wobei m eine Zahl von 2 bis 200 bedeutet.

76)

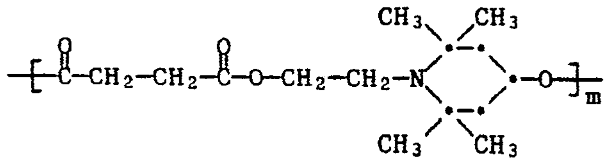

77)

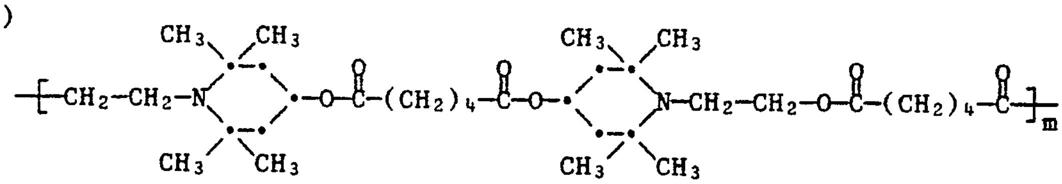

78)

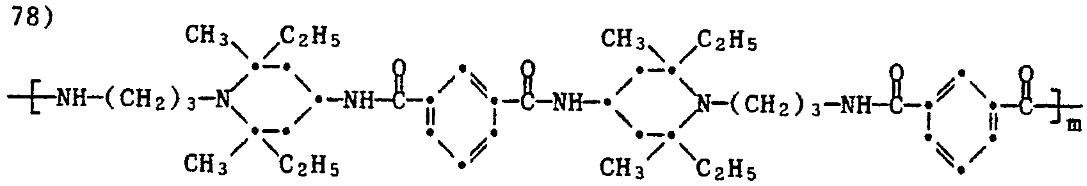

79)

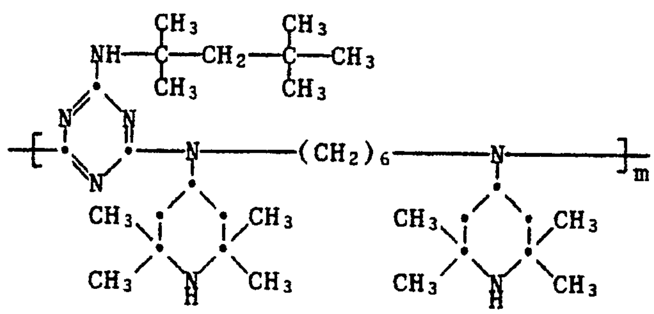

80)

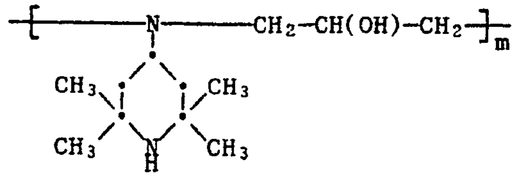

81)

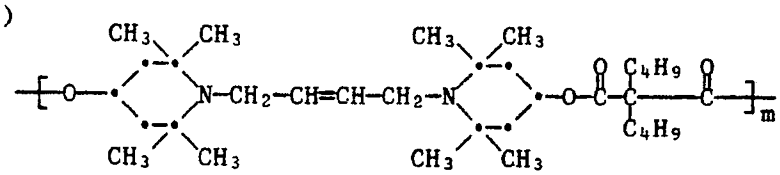

82)

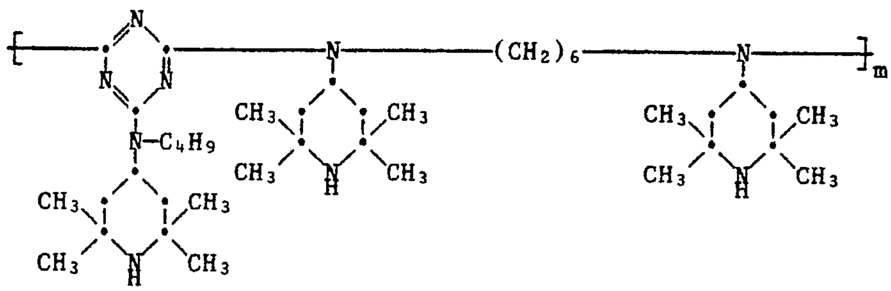

83)

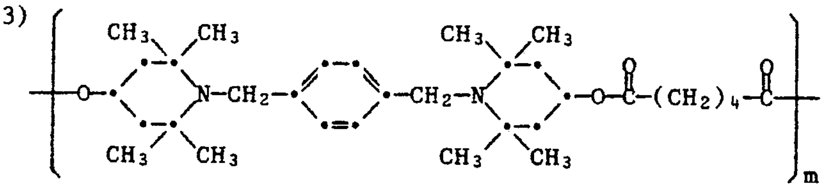

84)

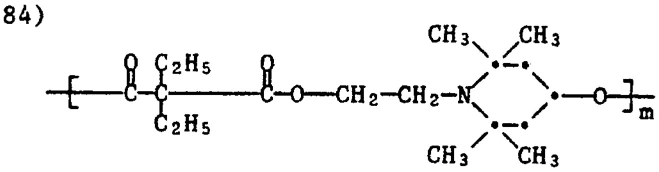

85)

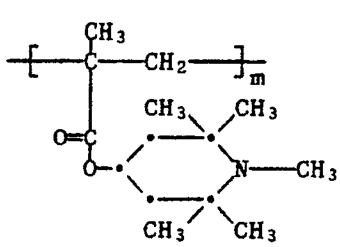

86)

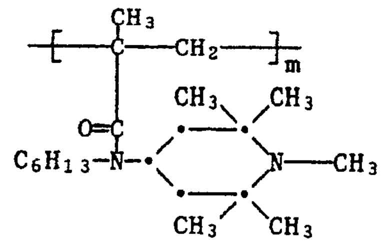

87)

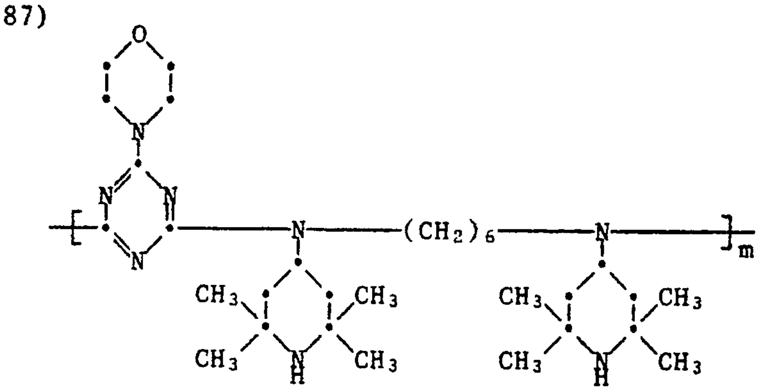

88)

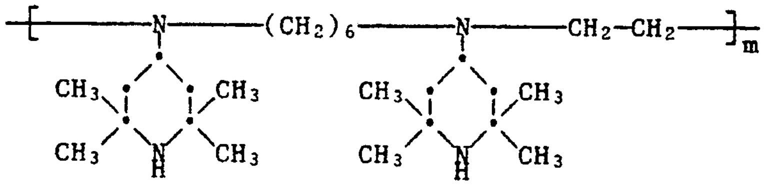

89)

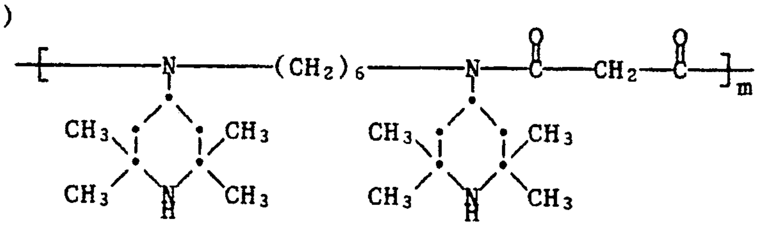

Im Hinblick auf die Lichtstabilisierung von Additionspolymermikroteilchen besonders bevorzugte sterisch gehinderte Amine sind solche, die ethylenisch ungesättigte Gruppen wie z.B. Allyl-, Vinyl- oder Maleinatgruppen, insbesondere jedoch Acryl- oder Methacrylgruppen, enthalten, die mit den übrigen Monomeren copolymerisieren. Beispiele für solche Verbindungen sind die zuvor aufgeführten Verbindungen 2, 7, 9, 17 und 49 sowie die folgenden Verbindungen:

67) 1,2,2,6,6-Pentamethyl-4-acryloyloxy-piperidin
68) 1-Acetyl-2,2,6,6-tetramethyl-4-(meth)acryloyloxy-piperidin
69) 1-Benzyl-2,2,6,6-tetramethyl-4-(meth)acryloyloxy-piperidin
70) 1,2,2,6,6-Pentamethyl-4-(meth)acrylamido-piperidin
71) 1,2,2,6,6-Pentamethyl-4-(N-butyl)-acrylamido-piperidin
72) 1,2,2,6,6-Pentamethyl-4-maleinimido-piperidin
73) 1,3,8-Triaza-2,4-dioxo-3-acryloyloxyethyl-7,7,8,9,9-pentamethyl-spiro[4.5]decan
74) 1-[(2-Methacryloyloxy)-ethyl]-2,2,6,6-tetramethyl-piperidin.
75) 1,2,2,6,6-Pentamethyl-4-vinyloxy-piperidin
75a) 1,2,2,6,6-Pentamethyl-4-methacryloyloxy-piperidin

In besonderen Fällen kann es von Vorteil sein, ein Gemisch von sterisch gehinderten Aminen zu verwenden.

Die Lichtschutzmittel der Klasse der sterisch gehinderten Amine sind z.B. aus der EP-A 114 784 bekannt und können nach bekannten Verfahren hergestellt werden.

Die neben dem typ der gehinderten Amine ebenfalls wichtige Gruppe von Lichtschutzmitteln sind die

UV-Absorber, die verschiedenen Verbindungsklassen angehören. Auch die UV-Absorber eignen sich zur erfindungsgemässen Stabilisierung von Polymermikropartikeln. Die erste Klasse von solchen UV-Absorbern sind die 2-(2-Hydroxyphenyl)-benztriazole, von denen sich folgende Strukturtypen für die erfindungsgemässen Polymermikropartikel besonders eignen:

A) Verbindungen der Formel VII

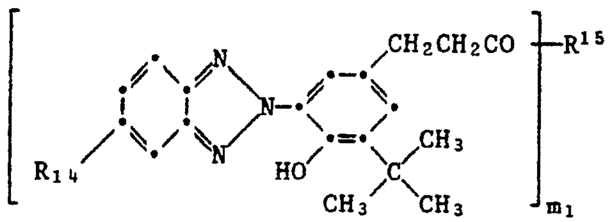

(VII),

in der $R^{14}$ H, Cl, $C_1$-$C_4$ Alkyl oder $C_1$-$C_4$ Alkoxy (vorzugsweise H) und $m_1$ eine der Zahlen 1 oder 2 bedeuten und in der $R^{15}$

a) im Falle von $m_1$ = 1
-$OR^{16}$ oder

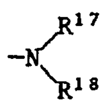

und
b) im Falle von $m_1$ = 2 einen der zweiwertigen Reste
-O-$R^{23}$-O- oder

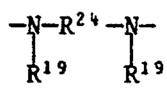

darstellt, wobei $R^{16}$ H, gegebenenfalls durch 1 bis 10 OH-Gruppen substituiertes $C_1$-$C_{18}$-Alkyl, gegebenenfalls durch OH substituiertes $C_5$-$C_{12}$-Cycloalkyl, gegebenenfalls durch OH substituiertes geradkettiges oder verzweigtes $C_2$-$C_{18}$-Alkenyl, gegebenenfalls mit 1 oder 2 OH-Gruppen substituiertes $C_6$-$C_{14}$-Aryl, $C_7$-$C_{15}$-Alkaryl oder $C_7$-$C_{15}$-Aralkyl,

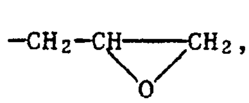 , 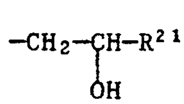 oder 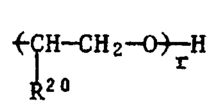

bedeutet,
$R^{17}$ und $R^{18}$ unabhängig voneinander H, geradkettiges oder verzweigtes, gegebenenfalls mit einer oder mehreren OH-Gruppen substituiertes $C_1$-$C_{18}$-Alkyl, durch -O- oder -$NR^{19}$- ein- oder mehrfach unterbrochenes geradkettiges oder verzweigtes $C_3$-$C_{18}$-Alkyl, gegebenenfalls mit einer oder mehreren OH-Gruppen substituiertes $C_5$-$C_{12}$-Cycloalkyl, gegebenenfalls mit 1 oder 2 OH-Gruppen substituiertes $C_6$-$C_{14}$-Aryl, $C_7$-$C_{15}$-Alkaryl oder $C_7$-$C_{15}$-Aralkyl oder geradkettiges oder verzweigtes $C_3$-$C_8$-Alkenyl bedeuten oder aber $R^{17}$ und $R^{18}$ zusammen mit dem N-Atom, an das sie gebunden sind, einen Pyrrolidin-, Piperidin-, Piperazin- oder Morpholinring darstellen, $R^{19}$ H oder geradkettiges oder verzweigtes, gegebenenfalls durch eine oder

mehrere OH-Gruppen substituiertes $C_1$-$C_{18}$-Alkyl ist,
$R^{20}$ H oder Methyl und r eine ganze Zahl 1 bis 10 sind,
$R^{21}$ für H, geradkettiges oder verzweigtes $C_1$-$C_{18}$-Alkyl, gegebenenfalls durch OH substituiertes Phenyl, $C_7$-$C_{15}$-Aralkyl oder $C_7$-$C_{15}$-Alkaryl, -$SO_2$-$C_1$-$C_4$-Alkyl, -$SO_2$-$C_7$-$C_{18}$ Alkaryl, -$SO_2$-$C_6$-$C_{14}$-Aryl oder -$CH_2$-O-$R^{22}$ steht,
$R^{22}$ geradkettiges oder verzweigtes $C_1$-$C_{18}$-Alkyl oder $C_3$-$C_{18}$-Alkenyl, $C_5$-$C_{12}$-Cycloalkyl, $C_6$-$C_{14}$-Aryl, $C_7$-$C_{15}$-Aralkyl oder $C_7$-$C_{15}$-Alkaryl ist,
$R^{23}$ gegebenenfalls OH-substituiertes $C_2$-$C_{12}$-Alkylen oder $C_4$-$C_8$-Alkenylen, $C_4$-Alkinylen, Cyclohexylen, durch -O- ein- oder mehrfach unterbrochenes, geradkettiges oder verzweigtes $C_4$-$C_{18}$-Alkylen,

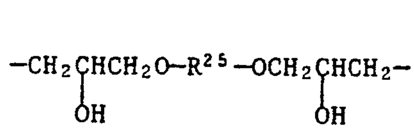 oder 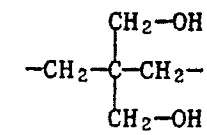 und

$R^{24}$ geradkettiges oder verzweigtes, gegebenenfalls durch -O- ein-oder mehrfach unterbrochenes $C_2$-$C_{12}$-Alkylen, Cyclohexylen,

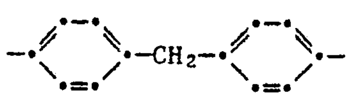 oder 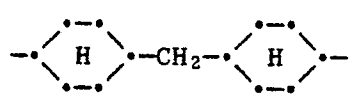

bedeuten, oder aber
$R^{24}$ und $R^{19}$ zusammen mit den beiden Stickstoffatomen einen Piperazinring darstellen, und wobei
$R^{25}$ geradkettiges oder verzweigtes $C_2$-$C_8$-Alkylen, durch -O- ein-oder mehrfach unterbrochenes, geradkettiges oder verzweigtes $C_4$-$C_{10}$-Alkylen, 1,3- oder 1,4-Cyclohexylen, 1,3- oder 1,4-Phenylen,

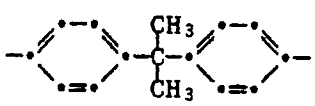 oder 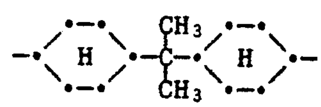

bedeutet.

Besonders zu erwähnen sind solche Verbindungen der Formel VII, in denen $R^{14}$ -$OR^{16}$ bzw. -O-$R^{23}$-O-sind, und von diesen vor allem jene, in denen $R^{16}$ gegebenenfalls OH-substituiertes Alkyl oder Alkenyl oder $(CH_2CH_2O)_rH$ bzw. $R^{23}$ gegebenenfalls OH-substituiertes Alkylen oder Alkenylen oder durch O ein- oder mehrfach unterbrochenes Alkylen, z.B. -$CH_2(CH_2OCH_2)_{r1}CH_2$- mit $r_1$ = 1 bis 9 bedeuten.

$R^{14}$ kann als Alkylrest, z.B. Methyl, Ethyl, Propyl, i-Propyl, Butyl und tert.-Butyl, als Alkoxyrest z.B. Methoxy, Ethoxy, Propoxy und Butoxy bedeuten.

$R^{16}$, $R^{17}$, $R^{18}$ $R^{19}$, $R^{21}$ und $R^{22}$ können, z.B. folgende Alkylreste bedeuten: Methyl, iso-Propyl, n-Butyl, sec.-Butyl, tert.-Butyl, tert.-Amyl, 2-Ethylhexyl, n-Octyl, 1,1,3,3-Tetramethylbutyl, n-Dodecyl, 1,1,7,7-Tetramethyloctyl, n-Octadecyl.

Die Reste $R^{16}$, $R^{17}$, $R^{18}$ und $R^{19}$ sind bevorzugt durch eine oder mehrere OH-Gruppen substituiert.

$R^{17}$ und $R^{18}$ können z.B. folgende $C_3$-$C_{18}$-Alkylreste, welche durch -S-, -O- oder -$NR^{19}$- unterbrochen sind, oder/und durch -OH substituiert sein können, bedeuten:
Methoxyethyl, Ethoxyethyl, Butoxyethyl, Butoxypropyl, Methylthioethyl,
$CH_3OCH_2CH_2OCH_2CH_2$-, $CH_3CH_2OCH_2CH_2OCH_2CH_2$-, $C_4H_9OCH_2CH_2OCH_2CH_2$-,
Dodecyloxypropyl, 2-Hydroxyethyl, 2-Hydroxypropyl, 4-Hydroxybutyl, 6-Hydroxyhexyl,
-$CH_2CH_2$-NH-$C_4H_9$, -$CH_2CH_2CH_2$NH-$C_8H_{17}$

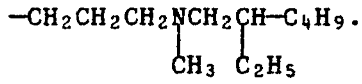

$R^{16}$, $R^{17}$, $R^{18}$ und $R^{22}$ können z.B. folgende $C_5$-$C_{12}$ Cycloalkylreste bedeuten: Cyclopentyl, Cyclohexyl, Cyclooctyl oder Cyclododecyl. Im Fall von $R^{16}$, $R^{17}$ und $R^{18}$ kann der Cycloalkylrest auch OH-substituiert sein.

$R^{17}$ und $R^{18}$ können z.B. folgende Alkenylreste bedeuten: Allyl, Methallyl, 2-n-Hexenyl, 4-n-Octenyl.

Wenn $R^{16}$ Alkenyl bedeutet, so kann es dieselbe Bedeutung wie $R^{17}$ und $R^{18}$ als Alkenylreste haben, es kann aber auch z.B. $-CH=CH_2$, 10-n-Undecenyl oder 9-n-Octadecenyl darstellen, wobei der Rest $R^{16}$ auch OH-substituiert sein kann.

$R^{16}$, $R^{17}$, $R^{18}$, $R^{21}$ und $R^{22}$ können unabhängig voneinander z.B. folgende $C_7$-$C_{15}$-Aralkylreste bedeuten: Benzyl, α-Phenylethyl, β-Phenylethyl, 4-tert.-Butylbenzyl.

$R^{16}$, $R^{17}$, $R^{18}$ und $R^{22}$ können unabhängig voneinander z.B. folgende $C_6$-$C_{14}$-Arylreste bedeuten: Phenyl, α-Naphtyl, β-Naphthyl.

Stehen $R^{16}$, $R^{17}$, $R^{18}$ $R^{21}$ oder $R^{22}$ für $C_7$-$C_{15}$-Alkaryl, so kann es sich um einen Tolyl-, Xylyl-, Ethylphenyl-, Isopropylphenyl-, n-Butylphenyl-, tert.-Butylphenyl-, Octylphenyl-, di-tert. Butylphenyl- oder Nonylphenylrest handeln. Die Reste können am aromatischen Kern oder bevorzugt am Alkylsubstituenten mit einer oder mehreren OH-Gruppen substituiert sein.

Hat $R^{21}$ die Bedeutung $-SO_2$-$C_1$-$C_4$-Alkyl, so kann es sich bei dem Alkyl um einen Methyl-, Ethyl-, n-Propyl-, Isopropyl- oder n-, sec.- oder tert.-Butylrest handeln.

Steht $R^{21}$ für $-SO_2$-$C_6$-$C_{14}$-Aryl, so hat das Aryl z.B. die Bedeutung Phenyl, α- oder β-Naphthyl.

Bei $R^{21}$ als $-SO_2$-$C_7$-$C_{18}$-Alkaryl hat das Alkaryl unabhängig die zuvor für $R^{16}$ beschriebenen Bedeutungen.

$R^{23}$ und $R^{25}$ können als $C_2$-$C_8$-Alkylen z.B. folgende Reste bedeuten: Ethylen, Propylen, Butylen, Hexylen, Octylen.

$R^{24}$ kann als Alkylen unabhängig die Bedeutung von $R^{23}$ haben oder aber zusätzlich auch noch höhermolekulare Gruppen, wie Decylen, Dodecylen darstellen.

Ist $R^{23}$ ein $C_4$-$C_8$-Alkenylen, so kommt z.B. folgende Gruppe in Betracht: Butenylen.

Als durch -O- unterbrochene, geradkettige oder verzweigte $C_4$-$C_{10}$-Alkylengruppen kommen im Falle $R^{23}$ und $R^{25}$ z.B. die folgenden Gruppen in Frage:

$-CH_2CH_2OCH_2CH_2-$ 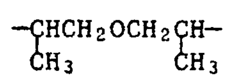 $-CH_2CH_2OCH_2CH_2OCH_2CH_2-$

$-CH_2CH_2OCH_2CH_2OCH_2CH_2OCH_2CH_2-$.

Typische Vertreter von Verbindungen der Formel VII, in der m die Zahl 1 bedeutet, sind die folgenden:

2-[2-Hydroxy-3-tert.-butyl-5-(2-carboxyethyl)-phenyl]-benztriazol,
2-[2-Hydroxy-3-tert.-butyl-5-(2-carboxyethyl)-phenyl]-5-chlorbenztriazol,
2-[2-Hydroxy-3-tert.-butyl-5-(2-carbomethoxyethyl)-phenyl]-benztriazol
2-[2-Hydroxy-3-tert.-butyl-5-(2-carbomethoxyethyl)-phenyl]-5-chlorbenztriazol
2-[2-Hydroxy-3-tert.-butyl-5-(2-carbocyclohexyloxyethyl)-phenyl]-benztriazol
2-[2-Hydroxy-3-tert.-butyl-5-(2-carbooctyloxyethyl)-phenyl]-benztriazol
2{-Hydroxy-3-tert.-butyl-5-[2-carbo-(2-ethylhexyloxy)-ethyl]-phenyl}-benztriazol
2-[2-Hydroxy-3-tert.-butyl-5-(2-carbo-iso-decyloxyethyl)-phenyl]-benztriazol
2-[2-Hydroxy-3-tert.-butyl-5-(2-carbododecyloxyethyl)-phenyl]-benztriazol
2-[2-Hydroxy-3-tert.-butyl-5-(2-carbododecyloxyethyl)-phenyl]-5-chlorbenztriazol
2-[2-Hydroxy-3-tert.-butyl-5-(2-carbooctyloxyethyl)-phenyl]-5-chlorbenztriazol
2-[2-Hydroxy-3-tert.-butyl-5-[2-carbo-(2-ethylhexyloxy)-ethyl]-phenyl}-5-chlorbenztriazol
2-{2-Hydroxy-3-tert.-butyl-5-[2-carbo-(2-hydroxycyclohexyloxy)-ethyl]-phenyl}-benztriazol
2-[2-Hydroxy-3-tert.-butyl-5-(2-carbopiperidylamidoethyl)-phenyl)-benztriazol
2-[2-Hydroxy-3-tert.-butyl-5-(2-carbomorpholinamidoethyl)-phenyl]-benztriazol
2-{2-Hydroxyl-3-tert.-butyl-5-[2-carbo-(3,5-di-tert.-butyl-4-hydroxyanilido)-ethyl]-phenyl}-benztriazol

Typische Vertreter von Verbindungen der Formel VII, in der $m_1$ die Zahl 2 bedeutet, sind die folgenden:

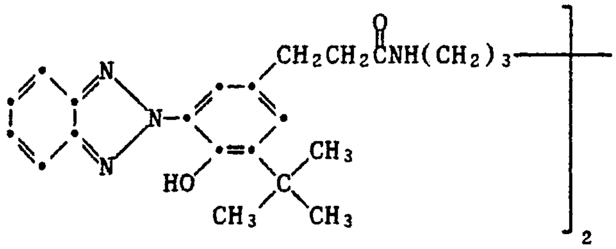

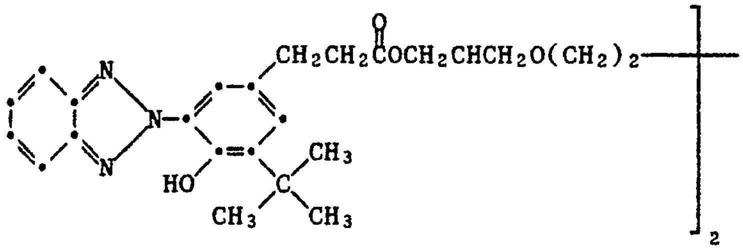

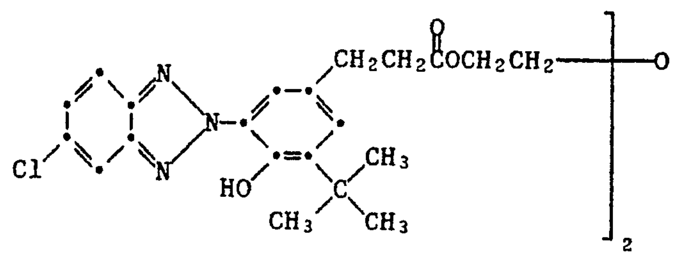

Weitere bevorzugte Verbindungen der Formel VII sind:
2-[2-Hydroxy-3-tert.butyl-5-(2-carbo-n-octyloxyethyl)-phenyl]-benztriazol
2-{2-Hydroxy-3-tert.butyl-5-[2-carbo-(2-ethylhexyl)-oxyethyl]-phenyl}-benztriazol
2-[2-Hydroxy-3-tert.butyl-5-(2-carbo-n-octyloxylethyl)-phenyl]-5-chlorbenztriazol
2-{2-Hydroxy-3-tert.butyl-5-[2-carbo-(2-ethylhexyl)-oxyethyl]-phenyl}-5-chlorbenztriazol
und die Verbindung der Formel

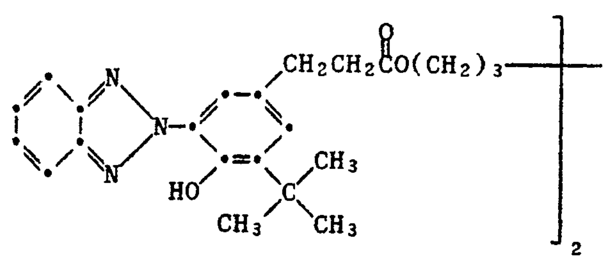

In bestimmten Fällen kann es von Vorteil sein, ein Gemisch von zwei oder mehreren Verbindungen der Formel VII zu verwenden. Ein Beispiel hierfür ist ein Gemisch von
2-[2-Hydroxy-3-tert.butyl-5-(2-carbo-n-octyloxyethyl-phenyl]-5-chlorbenztriazol und
2-{2-Hydroxy-3-tert.butyl-5-[2-carbo-(2-ethylhexyl)-oxyethyl]-phenyl}-5-chlorbenztriazol, die im Gewichtsverhältnis 1:1 vorliegen.

B) Verbindungen der Formel VIII

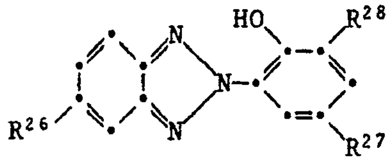

(VIII),

worin $R^{26}$ H, Chlor oder Carboxy ist,
$R^{27}$ für geradkettiges oder verzweigtes, gegebenenfalls substituiertes $C_1$-$C_{18}$-Alkyl, $C_7$-$C_{15}$-Aralkyl, $C_2$-$C_3$Alkenyl oder die Gruppe

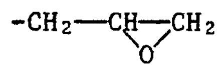

steht und
$R^{28}$ H ist oder unabhängig die Bedeutung von $R^{27}$ hat.

$R^{27}$ und $R^{28}$ als gegebenenfalls substituiertes $C_1$-$C_{18}$-Alkyl können hierbei unabhängig voneinander die zuvor für $R^{16}$ angegebenen Bedeutungen haben. Als weitere Substituenten kommen Carboxylgruppen in Frage. Bevorzugt sind die Alkyl-Substituenten mit mindestens einer Hydroxy- oder Carboxy-Gruppe substituiert.

Bedeuten $R^{27}$ und $R^{28}$ $C_7$-$C_{15}$-Aralkyl, so können die Reste unabhängig voneinander z.B. Benzyl, α-Phenylethyl, β-Phenylethyl, α,α-Dimethylbenzyl oder 4-tert.-Butylbenzyl bedeuten.

Beispiele für geeignete Verbindungen der Formel VIII sind

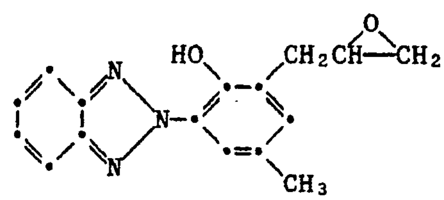

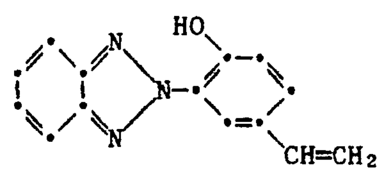

C) Verbindungen der Formel IX

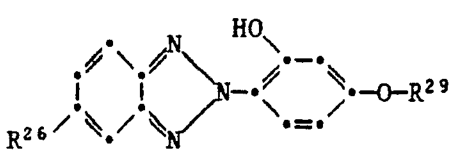

(IX),

worin $R^{26}$ die zuvor genannte Bedeutung hat und
$R^{29}$ geradkettiges oder verzweigtes gegebenenfalls durch eine oder mehrere OH-, Carboxy- oder Epoxy-Gruppen substituiertes $C_1$-$C_{18}$-Alkyl, welches gegebenenfalls ein- oder mehrfach mit -O- unterbrochen sein

kann,

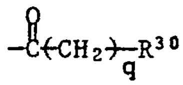 oder 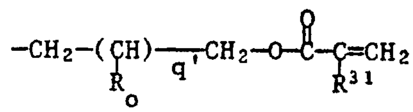 ist,

q eine ganze Zahl von 1 bis 12 darstellt,
$R^{30}$ Carboxy oder

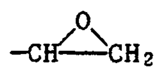

bedeutet und
$R^{31}$ für Wasserstoff oder Methyl, $R_0$ für Wasserstoff oder Hydroxy und q' für 0 oder 1 stehen.

Hierbei ist $R^{29}$ als substituiertes $C_1$-$C_{18}$-Alkyl bevorzugt mit 1 bis 3 OH-, Carboxy- oder Epoxy-Gruppen und besonders bevorzugt mit einer OH-, Carboxy- oder Epoxy-Gruppe substituiert.

Handelt es sich bei $R^{29}$ um mit -O- unterbrochenes $C_1$-$C_{18}$-Alkyl, so kann der Rest z.B. die folgende Struktur

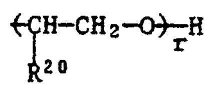 ,

worin r und $R^{20}$ die zuvor angegebenen Bedeutungen haben, aufweisen.

Beispiele für geeignete Lichtschutzmittel der Formel IX sind:

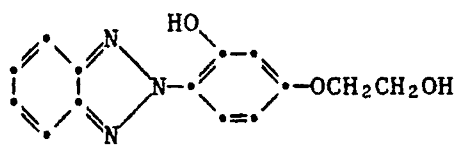

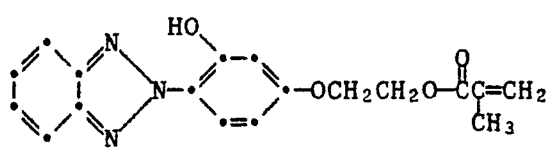

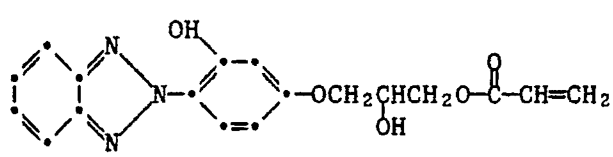

D) Verbindungen der Formel X

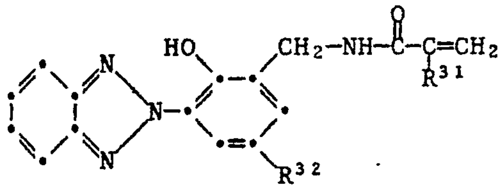

(X),

worin $R^{31}$ die zuvor angegebene Bedeutung hat und
$R^{32}$ Wasserstoff oder geradkettiges oder verzweigtes gegebenenfalls einfach oder mehrfach durch -OH substituiertes $C_1$-$C_{18}$-Alkyl ist.

$R^{32}$ als $C_1$-$C_{18}$-Alkyl kann hierbei die zuvor für $R^{16}$ angegebenen Bedeutungen haben und ist bevorzugt unsubstituiertes $C_1$-$C_{12}$-Alkyl. Beispiele für 2-(2-Hydroxyphenyl)benztriazole dieses Strukturtyps sind:

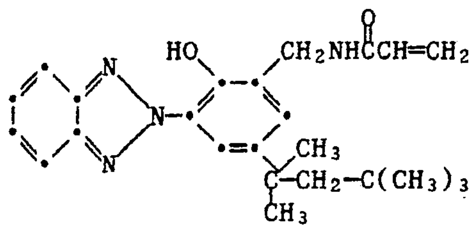

,

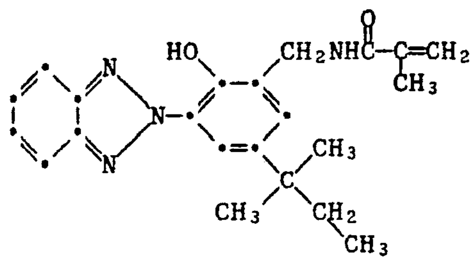

E) Verbindungen der Formel XI

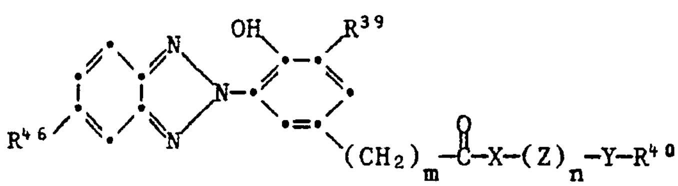

(XI)

worin

| | |
|---|---|
| X | -O- oder -N($R^{41}$)-bedeutet, und |
| Y | -O- oder -N($R^{42}$)-ist, und |
| Z | $C_2$-$C_{12}$Alkylen, durch ein bis drei -N($R^{47}$)-Gruppen und/oder Sauerstoff-Atome unterbrochenes $C_4$-$C_{12}$Alkylen, durch eine Hydroxygruppe substituiertes $C_3$-$C_{12}$Alkylen, Butenylen, Butinylen, Cyclohexylen oder Phenylen bedeutet, und |
| m | die Zahl 0, 1 oder 2 ist und |
| n | 1, und falls X und Y -N($R^{41}$)- bzw. -N($R^{42}$) sind, auch 0 bedeutet, und |
| $R^{46}$ | Wasserstoff, Chlor, $C_1$-$C_4$Alkyl oder $C_1$-$C_4$ Alkoxy (vorzugsweise Wasserstoff) ist, und |
| $R^{39}$ | Wasserstoff oder $C_1$-$C_8$Alkyl bedeutet, und |
| $R^{40}$ | eine Gruppe -C(O)-C($R^{43}$) = C(H)$R^{44}$ ist, oder falls Y -N($R^{42}$)-ist, zusammen mit $R^{42}$ eine Gruppe -C(O)-CH = CH-C(O)-bildet, wobei $R^{43}$ Wasserstoff oder Methyl ist, und $R^{44}$ Wasser- |

stoff, Methyl oder -C(O)-X-$R^{45}$ bedeutet, wobei $R^{45}$ Wasserstoff, $C_1$-$C_{12}$Alkyl oder eine Gruppe der Formel

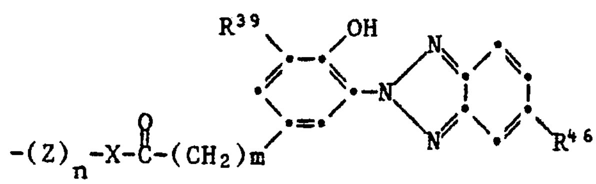

bedeutet,
worin die Symbole $R^{46}$, $R^{39}$, X, Z, m und n die oben angegebene Bedeutung haben, und
$R^{41}$, $R^{42}$ und $R^{47}$ unabhängig voneinander Wasserstoff, $C_1$-$C_{12}$Alkyl, durch 1 bis 3 Sauerstoffatome unterbrochenes $C_3$-$C_{12}$Alkyl, Cyclohexyl oder $C_7$-$C_{11}$Aralkyl bedeuten, und $R^{41}$ ferner zusammen mit $R^{42}$, falls Z Ethylen ist, auch Ethylen bilden.

Beispiele für Benztriazole der Formel XI sind:
3-(2H-Benzotriazol-2-yl)-4-hydroxy-5-tert.butyl-benzolpropansäure-(2-acrylyloxy)-cyclohexylester,
3-(5-Chlor-2H-benzotriazol-2-yl)-4-hydroxy-5-tert.butylbenzolpropansäure-(2-acrylyloxy)-cyclohexylester,
N-(2-Acrylyloxyethyl)-3-(2H-benzotriazol-2-yl)-4-hydroxy-5-tert.butyl-benzolpropanamid,
N-(2-Acrylyloxyethyl)-3-(5-chlor-2H-benzotriazol-2-yl)-4-hydroxy-5-tert.butyl-benzol-propanamid,
N-(3-Acrylyloxypropyl)-3-(2H-benzotriazol-2-yl)-4-hydroxy-5-tert.butyl-benzolpropanamid,
3-(2H-Benzotriazol-2-yl)-4-hydroxy-5-tert.butyl-benzolpropansäure-(2-acrylyloxy)-propylester,
3-(2H-Benzotriazol-2-yl)-4-hydroxy-5-tert.butylbenzolpropansäure-(2-acrylyloxy)-butylester,
3-(2H-Benzotriazol-2-yl)-4-hydroxy-5-tert.butyl-benzolpropansäure-(2-acrylyl-2-phenyl)-äthylester,
3-(2H-Benzotriazol-2-yl)-4-hydroxy-5-tert.butyl-benzolpropansäure-(2-acrylyl-3-phenoxy)-propylester und
N-(2-(4-Methoxy-1,4-dioxo-cis-but-2-en-1-yloxy)-ethyl)-3-(2H-benzotriazol-2-yl)-4-hydroxy-5-tert.butyl-benzolpropanamid.

F) Verbindungen der Formel XII

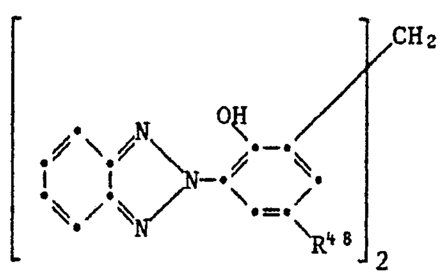

(XII)

worin $R^{48}$ gegebenenfalls substituiertes $C_1$-$C_{18}$-Alkyl, $C_7$-$C_{15}$-Aralkyl oder $C_2$-$C_3$-Alkenyl bedeutet.

$R^{48}$ als gegebenenfalls substituiertes Alkyl kann dabei z.B. die oben für $R^{16}$ angegebenen Bedeutungen haben. Als weitere Substituenten kommen Carboxylgruppen in Betracht. Ist $R^{48}$ als Alkyl substituiert, dann vorzugsweise durch 1 bis 3 Hydroxyl- oder/und 1 Carboxylgruppe. Bevorzugt ist jedoch $R^{48}$ als Alkyl unsubstituiert.

Die als Lichtschutzmittel für die Mikropartikel in Frage kommenden 2-(2-Hydroxyphenyl)-benztriazole sind bekannt oder können nach an sich bekannten Methoden, z.B. gemäss der EP-A 57 160 hergestellt werden.

Einen weiteren Typ von geeigneten Lichtschutzmitteln aus der Gruppe der UV-Absorber stellen 2-Hydroxybenzophenone dar, die z.B. eine Struktur gemäss Formel XIII

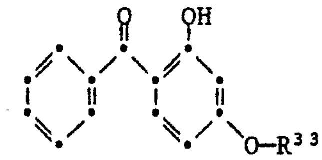

(XIII)

aufweisen, worin $R^{33}$ für Wasserstoff oder geradkettiges oder verzweigtes, gegebenenfalls einfach oder mehrfach durch -O- unterbrochenes und bevorzugt mit mindestens einer Hydroxy-, Carboxy- oder Epoxy-Gruppe substituiertes $C_1$-$C_{18}$-Alkyl oder für

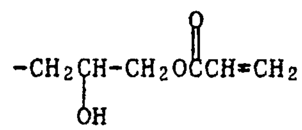 oder 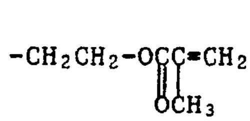 steht.

Beispiele für geeignete 2-Hydroxybenzophenone sind das 4-Hydroxy-, 4-Methoxy-, 4-Octyloxy-, 4-Decyloxy- oder 4-Dodecyloxyderivat, wobei diese mit 1 bis 3, bevorzugt 1, Hydroxy-, Carboxy- oder Epoxygruppe substituiert sein können.

Weitere Klassen von geeigneten UV-Absorbern umfassen 2,4-Bis-(2'-hydroxyphenyl)-6-alkyl-s-triazine wie z.B. das 6-Ethyl-, 6-Heptadecyl- oder 6-Undecylderivat sowie Oxalsäurediamide, insbesondere Oxalsäuredianilide, wie z.B. 4,4'-Di-octyloxy-oxanilid, 2,2'-Di-octyloxy-5,5'-di-tert.butyl-oxanilid, 2,2'-Di-dodecyloxy-5,5'-di-tert.butyl-oxanilid, 2-Ethoxy-2'-ethyl-oxanilid, N,N'-Bis-(3-di-methylaminopropyl)-oxalamid, 2-Ethoxy-5-tert.butyl-2'-ethyl-oxanilid und dessen Gemisch mit 2-Ethoxy-2'-ethyl-5,4'-di-tert.butyl-oxanilid, Gemische von o- und p-Methoxy- sowie von o- und p-Ethoxy-di-substituierten Oxaniliden.

Als Lichtschutzmittel für die Mikropartikel kommen weiterhin Zimtsäurederivate der Formel XIV

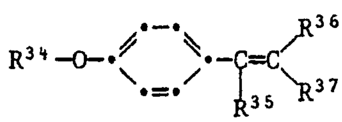

(XIV),

in Frage, wobei $R^{34}$ für Wasserstoff oder geradkettiges oder verzweigtes gegebenenfalls durch -O-unterbrochenes $C_1$-$C_{18}$-Alklyl steht, $R^{35}$ Wasserstoff, $C_1$-$C_4$-Alkyl, Methoxy oder Phenyl bedeutet, und $R^{36}$ und $R^{37}$ unabhängig voneinander Carboxy-, Cyano- oder -C(O)O$R^{38}$-Gruppen sind und $R^{38}$ für geradkettiges oder verzweigtes gegebenenfalls durch -O- unterbrochenes $C_1$-$C_{18}$-Alkyl steht. Beispiele für geeignete Zimtsäurederivate sind $\alpha$-Cyan-$\beta$,$\beta$-diphenylacrylsäureethylester bzw. - isooctylester, $\alpha$-Carbomethoxyzimtsäuremethylester, $\alpha$-Cyano-$\beta$-methoxy-zimtsäuremethylester.

Wie bereits früher erwähnt, sind solche Lichtschutzmittel bevorzugt, die in den erfindungsgemässen Polymermikropartikeln chemisch verankert werden können, also einpolymerisiert werden. Generell trifft dies auf Lichtschutzmittel zu, insbesondere auf jene der vorstehend definierten Klassen, die reaktive Substituenten enthalten, die unter den Herstellungsbedingungen an der Polymerisationsreaktion teilnehmen können. Derartige Substituenten sind insbesondere solche, die ethylenische Doppelbindungen (diese vor allem bei Verwendung in durch Polyaddition herzustellenden Polymermikropartikeln, z.B. Acrylate) sowie Carboxy-, Hydroxy- und Epoxigruppen enthalten. Die drei letztgenannten Gruppen kommen vor allem bei der Verwendung in durch Polykondensation herzustellenden Mikropartikeln (z.B. Polyester) in Frage. Ferner können auch solche Lichtschutzmittel, zumindest teilweise, chemisch gebunden werden, die Gruppen enthalten, aus denen unter den Polymerisationsbedingungen reaktive Gruppen entstehen. Als solche seien z.B. Estergruppen und Estergruppen enthaltende zusammengesetzte Substituenten genannt.

Im Falle der gehinderten Amin-Lichtschutzmittel sind vor allem jene bevorzugt, die Hydroxylgruppen oder ethylenische Doppelbindungen enthaltende Reste tragen. Bei den UV-Absorbern sind jene bevorzugt, die Hydroxyl-, Carboxyl- oder Epoxigruppen oder ethylenische Doppelbindungen enthaltende Gruppen aufweisen.

Generell werden als Lichtschutzmittel die 2,2,6,6-Tetraalkylpiperidinderivate (insbesondere jene in den

obigen Abschnitten a) bis f) genannten) sowie die 2-(2-Hydroxyphenyl)-benztriazole (insbesondere jene in den obigen Abschnitten A) bis E) genannten), bevorzugt eingesetzt. Besonders zu erwähnen sind dabei die Verbindungen der Formeln II, III, IV, VA-VC und VI (insbesondere jene der Formeln II, III, Va und VI) sowie der Formeln VII, IX, X und XI.

Die vorliegende Erfindung betrifft auch ein Verfahren zur Herstellung von lichtstabilisierten Polymermikropartikeln mit einem vernetzten Kern und einer Teilchengrössenverteilung von 0,01-20 µm, das dadurch gekennzeichnet ist, dass man in an sich bekannter Weise eine oder mehrere verschiedene ein- oder mehrfach ethylenisch ungesättigte monomere Verbindungen oder/und ein oder mehrere verschiedene Monomere aus der Gruppe der Polyalkohole, Polycarbonsäuren, Hydroxycarbonsäuren, Lactone, Aminocarbonsäuren, Aminoalkohole und Polyamine in Gegenwart von 0,1 bis 30 Gew.-%, bezogen auf die Monomeren, eines oder mehrerer Lichtschutzmittel(s) so polyerisiert, dass der Kern des erhaltenen Polymeren vernetzt ist.
Dabei kann die Polymerisation in einem oder mehreren Schritten stattfinden, wobei mindestens ein Schritt in Gegenwart des (der) Lichtschutzmittel(s) erfolgt.

Besonders vorteilhaft dienen als Monomere a) Acrylsäure und Methacrylsäure und deren Derivate, z.B. deren Ester, insbesondere die Methyl- oder Ethylester. Vorteilhaft werden Monomerengemische eingesetzt (Copolymere). Auf diese Weise erhält man z.B. Polyacrylat-Mikropartikel; sowie b) Polyalkohole, Polycarbonsäuren und Hydroxycarbonsäuren, die Polyestermikropartikel ergeben. Auch Mischungen von beiden Typen sind möglich, sofern Monomere eingesetzt werden, die Funktionalitäten sowohl für Additions- als auch Kondensationspolymerisation aufweisen. Beispiele für zu verwendende Monomeren sind weiter oben angeführt.

Besonders vorteilhaft ist es, wenn Mikropartikel hergestellt werden, die eine bessere Dispergierbarkeit der Partikel vermittelnde Teile enthalten. Diese Teile können z.B. aus einem amphipathischen Dispersionsmittel bestehen, das ein im wesentlichen lineares bis verzweigtes Polymeres ist, das an den Polymermikropartikelkern anpolymerisiert ist.

Das erfindungsgemässe Verfahren wird daher z.B. so ausgeführt, dass man

a) eine oder mehrere verschiedene ein- oder mehrfach ethylenisch ungesättigte monomere Verbindungen oder/und ein oder mehrere verschiedene Monomere aus der Gruppe der Polyalkohole, Polycarbonsäuren, Hydroxycarbonsäuren, Lactone, Aminocarbonsäuren, Aminoalkohole und Polyamine vernetzend polymerisiert,

b) eine oder mehrere der unter a) genannten Monomeren zu einem im wesentlichen linearen bis verzweigten Polymeren polymerisiert und

c) das gemäss b) erhaltene Polymer an das gemäss a) erhaltene Polymer anpolymerisiert (aufgraftet),

wobei die Polymerisation gemäss a) oder gemäss b) oder beide Polymerisationen in Gegenwart eines oder mehrerer Lichtschutzmittel durchgeführt werden und wobei die Lichtschutzmittel in beiden Polymerisationsschritten gleich oder verschieden sein können und die Gesamtmenge an Lichtschutzmittel 0,1 bis 30 Gew.-%, bezogen auf die Monomeren in beiden Polymerisationsschritten, beträgt, und wobei die Polymerisation a) ganz oder teilweise in Gegenwart des gemäss b) gebildeten Polymeren erfolgen kann.

Als Monomere im Schritt b) kommen prinzipiell solche in Betracht, die auch für Schritt a) Verwendung finden. Sie müssen jedoch so gewählt werden, dass bei der Polymerisation keine Vernetzung eintritt. Die gemäss Schritt b) erhaltenen linearen bis verzweigten Polymeren ("amphipathischen Dispersionsmittel") sind vorzugsweise Copolymere, die auf die gemäss a) erhaltenen vernetzten Polymeren ("Kern") in üblicher Weise gegraftet werden. Besonders gut lichtstabilisierte Mikropartikel werden erhalten, wenn der Zusatz des Lichtschutzmittels zum Polymerisationsschritt b) oder sowohl zu Schritt b) als auch zu Schritt a) erfolgt.

Die Polymerisation als solche kann in an sich bekannter Weise, z.B. gemäss der EP-A 3166, EP-A 119 051, US-A 4,290,932, DE-A 2,818,102, GB-A 1,156,012 und den darin enthaltenen Literaturzitaten, durchgeführt werden.

Lichtstabilisierte Additionspolymermikropartikel können z.B. gemäss der EP-A 119 051 bzw. US-A 4,290,932 durch Emulsionspolymerisation erhalten werden, indem man eine geeignete Auswahl ethylenisch ungesättigter Monomeren in Gegenwart einer weiter unten definierten Menge eines oder mehrerer Lichtschutzmittel(s) in Wasser polymerisiert. Das Wasser kann anschliessend z.B. durch azeotrope Destillation entfernt werden.

Bevorzugt ist die Herstellung der erfindungsgemässen Mikropartikel nach einem Verfahren der Dispersionspolymerisation, wie es z.B. die EP-A 3166 GB-A 1,156,012 offenbart.

Hierbei wird z.B. eine Auswahl geeigneter Monomerer in Gegenwart einer weiter unten definierten Menge eines oder mehrerer Lichtschutzmittel(s) in einem organischen Lösungsmittel, in dem das (die) Lichtschutzmittel und die Monomeren nach Möglichkeit löslich, das entstehende Copolymer jedoch unlöslich sind, polymerisiert. Es kann vorkommen, dass das (die) verwendete(n) Lichtschutzmittel oder die den

Kondensationspolymermikroteilchen zugrunde liegenden Monomeren in der Flüssigkeit, in der die Polymerisation ausgeführt werden soll, nur wenig löslich sind. Dann besteht die erste Stufe der Dispersationspolymerisation darin, das Lichtschutzmittel oder die betreffenden Monomeren mit Hilfe eines Dispergiermittels in den Zustand einer kolloidalen Dispersion in der inerten Flüssigkeit zu bringen.

Besonders bevorzugt ist die Herstellung der lichtstabilisierten Polymermikropartikel gemäss der EP-A 3166, wobei der Teilchenbildung die Herstellung eines amphipathischen Dispergiermittels, welches eine Komponente aufweist, die durch die anwesende organische Flüssigkeit solvatisiert ist und daneben eine weitere Komponente enthält, mit der es an der Polymermikroteilchen verankert werden kann, vorausgeht (Schritt b) oben). Geeignete Monomere werden dann vorteilhaft in Gegenwart eines inerten Verdünnungsmittels und des in situ hergestellten amphipathischen Dispergiermittels polymerisiert, wobei letzteres vor, während oder nach der Polymerisation gemäss Schritt a) zugegeben werden kann. Die Mikropartikel können gegebenenfalls anschliessend aus der resultierenden Dispersion z.B. durch Spritztrocknen oder Gefriertrocknen abgetrennt werden.

Die Verankerung des amphipathischen Dispergiermittels an die Polymermikropartikel kann physikalischer oder chemischer Natur sein, wobei es bevorzugt ist, dass das Dispergiermittel chemisch an die Mikropartikel gebunden ist.

Geeignete amphipathische Dispergiermittel sowie deren Herstellung werden z.B. in der EP-A 3166 beschrieben.

Das (die) Lichtschutzmittel wird (werden) der zu polymerisierenden Monomerenmischung in einer Menge von 0,1 bis 30 Gew.-% und bevorzugt 0,5 bis 10,0 Gew.-%, jeweils bezogen auf die Monomeren, zugegeben. Die Zugabe kann zu Beginn, gemeinsam mit den Monomeren, kontinuierlich während, oder gegen Ende des Polymerisations-/Polykondensationsvorganges erfolgen. So wird eine gleichmässige Verteilung des (der) Lichtschutzmittel(s) in den Mikropartikeln bzw. eine Anreicherung in den äusseren Schichten erreicht. Dadurch wird gewährleistet, dass das (die) Lichtschutzmittel je nach seiner (ihrer) Natur physikalisch oder chemisch in den resultierenden Polymermikropartikel verankert ist. Bevorzugt weist das Lichtschutzmittel reaktive Gruppen, z.B. Hydroxy-, Carboxy-, Ester-, Epoxy-, Isocyanat-, Amino- oder Amidgruppen oder ethylenische Doppelbindungen, z.B. in (Meth)acrylat-oder Vinylgruppen, auf, mit deren Hilfe es chemisch an das Polymer gebunden werden kann und gegebenenfalls direkt an der Polymerisation teilnehmen kann.

Ein weiterer Gegenstand der Erfindung sind Dispersionen, die die erfindungsgemässen Polymermikropartikel enthalten. Für praktische Zwecke werden die Mikropartikel nicht als solche isoliert, sondern werden in dem Lösungsmittel, in dem die Polymerisation stattfand, als Dispersion weiterverarbeitet. Als Dispersionsmittel kommen insbesondere aromatische, aliphatische und cycloaliphatische Kohlenwasserstoffe, aber auch andere, z.B. Wasser, in Betracht. Beispiele für Kohlenwasserstoffe sind Benzol, Toluol und vor allem höher siedende aliphatische Kohlenwasserstofffraktionen, z.B. mit einem Siedebereich von 100-200 °C. Die erfindungsgemässen Dispersionen enthalten die Mikropartikel z.B. in einer Menge von 10 bis 90 %, insbesondere 20 bis 80 % z.B. 40 bis 80 %, bezogen auf die Dispersion.

Ein weiterer Gegenstand der Erfindung ist eine Beschichtungszusammensetzung, in der das filmbildende Material

a) 30 bis 95 Vol-% einer dispersen Phase, die erfindungsgemässe Mikropartikel enthält und

b) 70 bis 5 Vol-% einer flüssigen kontinuierlichen Phase mit einer Viskosität von 10 bis 3000 m Pa s (0,1 bis 30 Poise) bei Raumtemperatur, die dazu fähig ist, in ein filmbildendes Polymer zu härten,

enthält, wobei das Gesamtvolumen von a) und b) 100% beträgt und die disperse Phase an der Lackhärtung teilnimmt. Die Phase b) kann dabei ebenfalls ein oder mehrere Lichtschutzmittel enthalten. Die disperse Phase enthält vorzugsweise mindestens 50 Vol-% Mikropartikel.

Bevorzugt sind Beschichtungszusammensetzungen, in denen das filmbildende Material 30 bis 85 Vol-% der dispersen Phase, die mindestens 50 Vol-% erfindungsgemässe Mikropartikel enthält, und 70-15 Vol-% der flüssigen kontinuierlichen Phase, die bei Raumtemperatur eine Viskosität von 0,1 bis 20 Poise aufweist.

Der grundsätzliche Aufbau solcher Beschichtungszusammensetzungen geht z.B. aus der EP-A 3166, EP-A 119 051, US-A 4,290,932, DE-A 2,818,102 oder GB-A 1,156,012 hervor. Die Teilchen der dispersen Phase besitzen eine Grösse oder Grössenverteilung im Bereich von 0,1 bis 20 $\mu$m.

Die disperse Phase kann ausschliesslich aus Polymermikroteilchen bestehen; bevorzugt enthält die disperse Phase jedoch ausser den Mikropartikeln und gegebenenfalls Lösungsmittel noch Pigment-, Füllstoff und/oder Streckmittelteilchen, wie diese üblicherweise in Beschichtungszusammensetzungen verwendet werden. Diese Teilchen weisen mit Vorteil eine in der Beschichtungstechnik übliche Grösse von z.B. 0,1 bis 5 $\mu$m auf.

Die Polymermikroteilchen, Pigment-, Füllstoff- und/oder Streckmittelteilchen sind zweckmässig in einem entflockten Zustand in der flüssigen kontinuierlichen Phase stabil dispergiert, was z.B. mit Hilfe bekannter

Pigmentdispergiermittel erreicht werden kann. Alternativ kann das flüssige filmbildende Material in der kontinuierlichen Phase oder eine chemische Variante davon selbst ein wirksames Dispergiermittel sein.

Die Dispergierung des Pigments kann in der in der Beschichtungstechnik üblichen Weise z.B. unter Verwendung von Kugelmühlen, Perlmühlen, Reibemühlen oder Kolloidalmühlen erfolgen.

Wie schon erwähnt, ist es bevorzugt, die erfindungsgemässen lichtstabilisierten Mikropartikel gemäss der EP-A 3166 in einer inerten Flüssigkeit und in Gegenwart eines amphipatischen Dispergiermittels herzustellen, wobei eine stabile Dispersion der Polymermikroteilchen entsteht. Pigment-, Füllstoff- und/oder Streckmittelteilchen können in dieser Dispersion durch Reste des amphipathischen Dispergiermittels ebenfalls stabilisiert werden. Die auf diese Weise erhaltene disperse Phase kann anschliessend mit der kontinuierlichen Phase zu einer Beschichtungszusammensetzung vereinigt werden. Für nähere Einzelheiten hierzu sei auf die EP-A 3166 verwiesen.

Die disperse Phase ist in der Lage, an der Lackhärtung teilzunehmen, was voraussetzt, dass entweder der Mikropartikelkern oder der Dispergiermittel-Teil oder beide chemisch reaktive Gruppen aufweisen, mit Hilfe derer sie an einer Kondensationspolymerisations-Reaktion teilnehmen können. Lichtstabilisierte Mikropartikel, enthaltend zur Kondensationspolymerisation befähigte reaktive Gruppen, und deren Herstellung wurden bereits zuvor beschrieben. Geht die Fähigkeit zur Teilnahme an der Härtungsreaktion von dem Dispergiermittel-Teil aus, so besitzt dieses entsprechende reaktive Gruppen, z.B. Hydroxy- oder Carboxygruppen, die sich im solvatisierten Polymerteil oder in dem Teil des Moleküls, der als Ankerkomponente für die Mikropartikel dient, befinden können.

Auf Grund der im vorstehenden Absatz beschriebenen Gegebenheiten kann das System disperse Phase/kontinuierliche Phase auch selbst ein Zweikomponentensystem bilden, d.H. dass die Filmbildung durch Reaktion der beiden Phasen miteinander zustande kommt. Ein Beispiel für einen solchen Fall liegt dann vor, wenn die disperse Phase Polyestermikropartikel mit reaktiven Gruppen und die kontinuierliche Phase z.B. ein Isocyanatharz enthält. Es resultiert dann ein Polyurethanfilm.

Ein Beispiel für ein entsprechendes amphipathisches Dispergiermittel ist ein Propfcopolymer, welches durch Copolymerisation von Methylmethacrylat, Methacrylsäure und dem Glycidylmethacrylat-Addukt des Copolyesters aus 12-Hydroxystearinsäure und Dimethylolpropionsäure erhältlich ist. Weitere Beispiele für geeignete Dispergiermittel werden in der EP-A 3166 gegeben.

Bei der anderen Komponente der erfindungsgemässen Beschichtungszusammensetzungen handelt es sich um die flüssige kontinuierliche Phase, welche in der Lage ist, mittels Additions- bzw. Kondensationspolymerisation zu einem Polymerfilm zu härten.

Unter Kondensationspolymerisation soll hierbei insbesondere die Polymerisation mittels Reaktion von Paaren von funktionellen Gruppen unter Bildung von funktionellen Einheiten, welche in den Monomeren nicht anwesend sind, verstanden werden, wobei die Reaktion gegebenenfalls mit der Entwicklung von niedermolekularen Beiprodukten verbunden sein kann (siehe EP-A 3166).

Als Bestandteile der kontinuierlichen Phase eignen sich insbesondere härtbare oder duroplastische Harze, die mittels Erhitzen und/oder Zugabe eines Katalysators in ein filmbildendes Polymer verwandelt werden können. Beispiele für solche Harze sind:

1. Phenol-Formaldehyd-Harze, das Produkt der Umsetzung von Phenolen mit Formaldehyd.
2. Amino-Formaldehyd-Harze, z.B. Harnstoff-Formaldehyd- oder Melamin-Formaldehyd-Harze, erhältlich durch Reaktion von Harnstoff, Melamin oder anderen stickstoffhaltigen Verbindungen mit Formaldehyd.
3. Vernetzbare Acrylharze, die sich von substituierten Acrylsäureestern wie z.B. Epoxyacrylaten, Urethanacrylaten oder Polyesteracrylaten ableiten. Ferner Acrylharze, die keine olefinische Doppelbindung aufweisen, deren OH- oder/und COOH-Gruppen an der Kondensationsreaktion teilnehmen können.
4. Polyester- und Alkydharze
5. Polyurethan-Harze, die auf der Reaktion von Di- oder Polyisocyanaten mit Polyhydroxyverbindungen basieren.
6. Epoxidharze, z.B. solche, die durch Reaktion von Epichlorhydrin mit Bisphenol A erhalten werden.

Die kontinuierliche Phase prinzipiell aus einer einzigen flüssigen Substanz oder aus einem homogenen flüssigen Gemisch aus zwei oder mehreren Substanzen bestehen.

Bevorzugt ist ein Gemisch von zwei oder mehreren Substanzen, wobei dieses in Form eines Einkomponenten- oder Zweikomponentensystems vorliegen kann.

Handelt es sich bei der kontinuierlichen flüssigen Phase um ein Einkomponentensystem, so enthält diese die filmbildenden Bestandteile in lagerstabiler Form und die Härtung kann z.B. durch blosses Erhitzen erfolgen oder es wird ein Härter zugegeben.

Geeignete Einkomponenten-Systeme sind z.B. aus einem der genannten duroplastischen Harze und gegebenenfalls einer weiteren flüssigen Substanz, dem sogenannten Reaktivverdünner, der reaktive Gruppen enthält, mit deren Hilfe er an der Härtung des filmbildenden Materials teilnehmen kann, und der vor

allem zur besseren Flexibilität des Lackfilms beiträgt, aufgebaut. Bei dem Reaktivverdünner handelt es sich beispielsweise um bifunktionelle Monomere oder Oligomere mit Molekulargewichten bis etwa 1000, die insbesondere OH-Gruppen, z.B. 2-6, enthalten. Beispiele hierfür sind einfache Glykole oder Polyole wie Butan-1,4-diol, insbesondere aber hydroxyterminierte oligomere Ester von Polyalkoholen mit Polycarbonsäuren und/oder Monocarbonsäuren. Beispiele für geeignete Reaktivverdünner sind aus der EP-A 3166 ersichtlich.

Handelt es sich bei der kontinuierlichen flüssigen Phase um ein Zwei-Komponenten-System, so wird dieses erst kurz vor der Anwendung der fertigen Beschichtungszusammensetzung hergestellt, indem man zwei flüssige Komponenten, die wechselseitig reaktiv und ausserdem in der Lage sind, einen Film zu bilden, zusammenbringt.

Die zweite Komponente kann hierbei mit der ersten Komponente co-reagieren und so einen gehärteten Film bilden, wie es z.B. bei Zweikomponenten-Polyurethan-Lacken der Fall ist. Bei der zweiten Komponente kann es sich jedoch auch um einen Katalysator für die Härtungsreaktion der ersten Komponente handeln, wofür die säurekatalysierte Härtung von Aminoharzen ein Beispiel ist.

Erfindungsgemäss bevorzugte Beschichtungszusammensetzungen sind solche auf Basis eines vernetzbaren Acrylat-, Polyester/Alkyd- oder Polyurethan-Harzes, das gegebenenfalls mit Aminoplasten, Polyisocyanat oder Polyepoxiden vernetzt ist.

Als Spezialfall sei hier das weiter oben angeführte Zweikomponentensystem aus disperser und kontinuierlicher Phase angeführt, bei dem der Beschichtungsfilm durch Reaktion der beiden Phasen miteinander gebildet wird, z.B. die Herstellung eines Polyurethanfilmes durch Reaktion einer dispersen Phae, die Polyestermikropartikel mit reaktiven Gruppen enthält, mit einer kontinuierlichen Phase, die ein Isocyanatharz enthält.

Die erfindungsgemässen Beschichtungszusammensetzungen können in der kontinuierlichen Phase einen Katalysator für die Lackhärtung aufweisen, der je nach Natur des verwendeten filmbildenden Materials bevorzugt in einer Menge von 0,1 bis 15 Gew.-%, bezogen auf die gesamte kontinuierliche Phase inklusive eines gegebenenfalls anwesenden Reaktivverdünners, zugegeben wird.
Besteht die kontinuierliche Phase in der Hauptsache aus duroplastischen Harzen, handelt es sich bei dem Katalysator bevorzugt um einen sauren oder bei Erhitzen Säure abspaltenden Katalysator, z.B. Methansulfonsäure, Toluolsulfonsäure, Phosphorsäure, Halbester der Maleinsäure, Cyclohexylphosphonigsäure, Trichloressigsäure, Trifluoressigsäure, Tetrahalogenphthalsäure und deren Halbester.

Die erfindungsgemässen Beschichtungszusammensetzungen können zusätzlich zu den filmbildenden Komponenten, der dispersen Phase und der flüssigen kontinuierlichen Phase, ein inertes flüssiges Verdünnungsmittel enthalten, z.B. bis zu 50, insbesondere 30 vol-%, welches sich unter den Bedingungen des Aufbringens der Beschichtungszusammensetzung auf ein Substrat verflüchtigt.
Beispiele für geeignete inerte Lösungsmittel sind aromatische und aliphatische Kohlenwasserstoffe, halogenierte Kohlenwasserstoffe, niedere Alkohole oder Wasser.

Es kann wünschenswert sein, der Beschichtungszusammensetzungen weitere Stoffe zuzugeben, die bestimmte Eigenschaften, z.B. das Fliessvermögen oder die Adhäsion auf einem Substrat beeinflussen. Solche Additive, die im allgemeinen der kontinuierlichen Phase zugegeben werden, sind dem Fachmann bekannt.

Vorzugsweise besteht das filmbildende Material in den erfindungsgemässen Beschichtungszusammensetzungen aus 40 bis 80 Vol-% disperser Phase und 60 bis 20 Vol-% flüssiger kontinuierlicher Phase.

Die Aufbringung der erfindungsgemässen Beschichtungszusammensetzungen auf ein Substrat kann mit Hilfe aller herkömmlichen Verfahren geschehen, die dem Fachmann bekannt sind, z.B. durch Streichen, Besprühen oder Tauchen. Die Beschichtungen und Lacke auf Basis der erfindungsgemässen Zusammensetzungen werden nach dem Auftragen getrocknet und eingebrannt.

Die Verwendung der erfindungsgemässen Beschichtungszusammensetzungen ist für alle Arten der industriellen Lackierung geeignet, wie z.B. für die Lackierung von Maschinen, Fahrzeugen, Schiffen oder Konstruktionsteilen. Von besonderer Bedeutung ist sie für die Fahrzeug-Lackierung. Hierbei kann es sich sowohl um Einschicht-Lackierung wie Mehrschicht-Lackierung handeln.

Beschichtungen und Lacke auf Basis der erfindungsgemässen Beschichtungszusammensetzung zeichnen sich durch eine erhöhte Bewitterungsbeständigkeit, insbesondere eine besonders hohe Lichtstabilität aus.

Ein weiterer Gegenstand der Erfindung ist die Verwendung von erfindungsgemässen lichtstabilisierten Mikropartikeln als Bestandteil von Beschichtungszusammensetzungen.

In der im erfindungsgemässen Verfahren anfallenden Dispersion, die die erfindungsgemässen Polymermikropartikel enthält, fallen neben den eigentlichen Mikropartikeln, die den geforderten Spezifikationen (Grössenverteilung 0,01-20 µm und Vernetzung) entsprechen, auch noch andere Anteile von Polymeren an,

die keine Mikropartikel im obigen Sinn sind. Diese stören bei der Verwendung in Lackzusammensetzungen nicht, weshalb die erhaltenen Dispersionen in der Regel direkt eingesetzt werden können. Die Mikropartikel als solche können bei Bedarf aber auch isoliert bzw. von anderen Polymeranteilen gereinigt werden. Letzteres kann beispielsweise durch Umfällen in geeigneten Lösungsmitteln erfolgen, in denen die nicht vernetzten Anteile löslich sind. Man erhält auf diese Weise gereinigte Mikropartikel-Dispersionen, aus denen die Partikel selbst durch geeignete, an sich bekannte Methoden, z.B. durch Spritztrocknen, vor allem aber Gefriertrocknen, isoliert werden können. Die isolierten Mikropartikel können dann ebenfalls durch in der Polymerchemie übliche Methoden charakterisiert werden, z.B. mittels Lichtstreuungsmessungen, Rasterelektronenmikroskopie, Feststellung der Grössenverteilung, der Form usw. Wie bereits früher erwähnt, weisen die Mikropartikel eine im Idealfall kugel- bis eiförmige Gestalt auf. Isolierung und Charakterisierung von Polymermikropartikeln sind in der Literatur vielfach beschrieben, so z.B. von Funke et al., Progr. Colloid Polymer Sci. 57, 48-53 (1975).

Die nachfolgenden Beispiele dienen der weiteren Erläuterung der verschiedenen Aspekte der vorliegenden Erfindung. In den Beispielen beziehen sich, ebenso wie in der gesamten übrigen Beschreibung, Teile und Prozente auf das Gewicht, sofern nichts anderes angegeben ist. In den Herstellungsbeispielen 1 bis 18 ist die Isolierung der Mikropartikel als solche der Einfachheit halber nicht erwähnt. Sie erfolgt in der vorstehend ausführlich beschriebenen Weise.

Beispiel 1a

A. Herstellung eines amphipathischen Dispersionsmittels

I. Herstellung eines 12-Hydroxystearinsäure/Dimethylolpropionsäurecopolyesters

In einen 2,5 l Sulfierkolben, der mit Rührer, Wasserabscheider und Stickstoffeinleitung ausgerüstet ist, gibt man 1350 g 12-Hydroxystearinsäure und 100,5 g 2,2-Bis(hydroxymethyl)propionsäure sowie 145 g Alkangemisch (180-220° C) und 3 g Methansulfonsäure als Katalysator. Das Reaktionsgemisch wird nun auf 156° C erhitzt, wobei während 6 Stunden ca. 78 g $H_2O$) abgeschieden werden (Lösung $A_1$).

II. Herstellung eines Glycidylmethacrylat-Adduktes von I

500 g der erhaltenen Lösung $A_1$ werden in einem mit $N_2$-Einleitung und Rückflusskühler versehenen 1,5 l-Sulfierkolben mit 46,5 g Methacrylsäureglycidylester, 1,5 g Dimethyl-aminododekan, 0,5 g Hydrochinon und 20 g Alkangemisch (180-220° C) sechs Stunden am Rückfluss erhitzt (Lösung $B_1$).

III. Copolymerisation

In einem 1,5 l-Sulfierkolben mit Rückflusskühler und $N_2$-Einleitungwerden 375 g Methyl-ethyl-keton vorgelegt und auf Rückfluss (80° C) erhitzt. Dazu tropft man während 2 Stunden folgende Mischung:
213,5 g der Lösung $B_1$ (erhalten gemäss II)
184 g Methacrylsäuremethylester
20,5 g Methacrylsäure
10,4 g 4-Acryloyloxy-1,2,2,6,6-pentamethylpiperidin
2,15 g Azodiisobutyronitril
2,15 g n-Octylmercaptan

Nachdem die ganze Lösung zugetropft ist, gibt man nochmals 0,3 g Azodiisobutyronitril hinzu und kocht die Lösung während weiteren 2 Stunden am Rückfluss. Danach verdünnt man die Lösung mit 580 g ®Solvesso 100 (Alkangemisch: Siedebereich 162-177° C) und destilliert ca. 40 g Lösungsmittelgemisch ab. Man erhält eine Lösung mit einem Festkörpergehalt von ca. 30 %. Der Gehalt an Lichtschutzmittel (4-Acryloyloxy-1,2,2,6,6-pentamethylpiperidin) beträgt ca. 2,5 %, bezogen auf den Festkörpergehalt (= Lösung $C_1$).

B. Herstellung einer lichtstabilisierten Polyester-Mikropartikel-Dispersion

In einen 1,5-l-Sulfierkolben, ausgerüstet mit einem Turbinenrührer, Wasserabscheider und $N_2$-Ueberleitung gibt man
156 g Isophthalsäure,
75,5 g Trimethylolpropan,

117 g Neopentylglycol und
1 g Tetrabutylorthotitanat.

Man erhitzt das Gemisch auf 195 °C und lässt als Schleppmittel für die Wasserabscheidung langsam Xylolisomerengemisch so zutropfen, dass die Innentemperatur von 195 °C erhalten bleibt. Nachdem ca. 25 g Wasser abdestilliert sind, kühlt man das Reaktionsgemisch auf 140 °C ab und gibt 118 g Adipinsäure hinzu. Danach wird erneut unter Rühren auf 160 °C erhitzt. Man stellt nun den Rührer ab und gibt ein auf 150 °C vorgeheiztes Gemisch, bestehend aus 67 g Lösung $C_1$ und 220 g Alkangemisch (180-220 °C) hinzu. Nun wird das Lösungsgemisch wieder auf 180-190 °C erhitzt unter gleichzeitigem starkem Rühren bei Höchstgeschwindigkeit. Innerhalb von 3 Stunden lässt man nochmals ein Gemisch bestehend aus 25 g Lösung $C_1$ und 25 g Alkangemisch (180-220 °C) hinzutropfen und destilliert gleichzeitig ca 80 g Reaktions-Wasser ab. Durch Destillation von ca. 170 g Lösungsmittelgemisch erhält man nun eine Polyester-Mikropartikel-Dispersion mit ca. 75% Festkörpergehalt (= Dispersion $D_1$). Sie enthält ca. 0,2 % an Lichtschutzmittel (4-Acryloyloxy-1,2,2,6,6-pentamethylpiperidin), bezogen auf den Festkörpergehalt.

Beispiel 1b

A. Man verfährt genau wie in Beispiel 1a, AIII beschrieben, setzt jedoch statt 10,4 g 52,0 g 4-Acryloyloxy-1,2,2,6,6-pentamethylpiperidin ein. Man erhält eine Lösung mit ca. 30 % Feststoffgehalt, die ca. 11,7 % des Lichtschutzmittels, bezogen auf den Feststoffgehalt, enthält (= Lösung $C_2$).
B. Man verfährt genau wie in Beispiel 1a, B beschrieben, setzt jedoch an Stelle von Lösung $C_1$ die Lösung $C_2$ ein. Man erhält eine Polyester-Mikropartikel-Dispersion mit ca. 75 % Festkörpergehalt, die ca. 1,0 % des Lichtschutzmittels, bezogen auf den Festkörpergehalt, enthält (= Dispersion $D_2$).

Beispiel 1c

A. Man verfährt genau wie in Beispiel 1a, AIII beschrieben, setzt jedoch statt 10,4 g 104,0 g 4-Acryloyloxy-1,2,2,6,6-pentamethylpiperidin ein. Man erhält eine Lösung mit ca. 30 % Feststoffgehalt, die ca. 23,4 % des Lichtschutzmittels, bezogen auf den Feststoffgehalt, enthält (= Lösung $C_3$).
B. Man verfährt genau wie in Beispiel 1a, B beschrieben, setzt jedoch an Stelle von Lösung $C_1$ die Lösung $C_3$ ein. Man erhält eine Polyester-Mikropartikel-Dispersion mit ca. 75 % Festkörpergehalt, die ca. 2,0 % des Lichtschutzmittels, bezogen auf den Festkörpergehalt, enthält (= Dispersion $D_3$).

Beispiel 2a

A. Herstellung eines amphipathischen Dispersionsmittels

In einem 1,5 l-Sulfierkolben mit Rückflusskühler und $N_2$-Einleitungwerden 375 g Methyl-ethyl-keton vorgelegt und auf Rückfluss (80 °C) erhitzt. Dazu tropft man während 2 Stunden folgende Mischung:
213,5 g der Lösung $B_1$ (erhalten nach Beispiel 1a, AII)
184 g Methacrylsäuremethylester
20,5 g Methacrylsäure
2,15 g Azodiisobutyronitril
2,15 g n-Octylmercaptan.

Nachdem die ganze Lösung zugetropft ist, gibt man nochmals 0,3 g Azodiisobutyronitril hinzu und kocht die Lösung während weiteren 2 Stunden am Rückfluss. Danach verdünnt man die Lösung mit 580 g ®Solvesso 100 (Alkangemisch: Siedebereich 162-177 °C) und destilliert ca. 40 g Lösungsmittelgemisch ab. Man erhält eine Lösung mit einem Feststoffgehalt von ca. 30 % (=Lösung $C_4$).

B. Herstellung einer Polyester-Mikrogel-Dispersion

In einen 1,5 l-Sulfierkolben, ausgerüstet mit einem Turbinenrührer, Wasserabscheider und $N_2$-Ueberleitung gibt man
156 g Isophthalsäure
75,5 g Trimethylolpropan
117 g Neopentylglykol
10,4 g 4-Hydroxy-1-hydroxyethyl-2,2,6,6-tetramethylpiperidin
1 g Tetrabutylorthotitanat.

Man erhitzt das Gemisch auf 195 °C und lässt als Schleppmittel für die Wasserabscheidung langsam

Xylolisomerengemisch so zutropfen, dass die Innentemperatur von 195 °C erhalten bleibt. Nachdem ca. 25 g Wasser abdestilliert sind, kühlt man das Reaktionsgemisch auf 140 °C ab und gibt 118 g Adipinsäure hinzu. Danach wird erneut unter Rühren auf 160 °C erhitzt. Man stellt den Rührer ab und gibt ein auf 150 °C vorgeheiztes Gemisch, bestehend aus 67 g der vorstehend erhaltenen Lösung $C_4$ und 220 g Alkangemisch (180-220 °C) hinzu. Nun wird erneut auf 180-190 °C erhitzt unter gleichzeitigem Rühren bei Höchstgeschwindigkeit. Innerhalb von 3 Stunden lässt man nochmals ein Gemisch bestehend aus 25 g der Lösung $C_4$ und 25 g Alkangemisch (180-220 °C) hinzutropfen und destilliert gleichzeitig ca. 80 g Reaktionswasser ab. Durch erneute Destillation von ca. 170 g Lösungsmittelgemisch erhält man eine Polyester-Mikropartikel-Dispersion mit ca. 75% Festkörpergehalt, die 2,5 % des Lichtschutzmittels (4-Hydroxy-1-hydroxyethyl-2,2,6,6-tetramethylpiperidin) enthält (= Dispersion $F_1$).

Beispiel 2b

Man verfährt genau wie in Beispiel 2a, B beschrieben, mit dem einzigen Unterschied, dass anstelle der dort erwähnten 10,4 g 4-Hydroxy-1-hydoxyethyl-2,2,6,6-tetramethylpiperidin nur 5,2 g dieser Verbindung eingesezt werden. Man erhält eine Polyester-Mikropartikel-Dispersion mit ca. 75 % Festkörpergehalt, die ca. 1,2 % des Lichtschutzmittels, berechnet auf den Festkörpergehalt, enthält (= Dispersion $F_2$).

Beispiel 3a

Man verfährt genau wie in Beispiel 2b beschrieben, setzt jedoch an Stelle der Lösung $C_4$ die Lösung $C_2$ (erhalten gemäss Beispiel 1b, A) ein. Man erhält eine Polyester-Mikropartikel-Dispersion mit ca. 75 % Festkörpergehalt, die ca. 22 % an Lichtschutzmitteln (4-Acryloyloxy-1,2,2,6,6-pentamethylpiperidin und 4-Hydroxy-1-hydroxyethyl-2,2,6,6-tetramethylpiperidin), berechnet auf den Festkörpergehalt, enthält (= Dispersion $F_3$).

Beispiel 3b

Man verfährt genau wie in Beispiel 2b beschrieben, setzt jedoch an Stelle der Lösung $C_4$ die Lösung $C_3$ (erhalten gemäss Beispiel 1c, A) ein. Man erhält eine Polyester-Mikropartikel-Dispersion mit ca. 75 % Festkörpergehalt, die ca. 3,2 % an Lichtschutzmitteln (4-Acryloyloxy-1,2,2,6,6-pentamethylpiperidin und 4-Hydroxy-1-hydroxyethyl-2,2,6,6-tetramethylpiperidin), berechnet auf den Festkörpergehalt, enthält (= Dispersion $F_4$).

Beispiel 4a Herstellung einer lichtstabilisierten Polymethacrylat-Mikropartikel-Dispersion

In einem 750 ml Sulfierkolben, ausgerüstet mit Thermometer, Rührer, Destillierbogen, Stickstoffüberleitung und Tropftrichter, gibt man 142 ml ®Solvesso 100 (Alkangemisch, d = 0,85, Sdp. 162-177 °C), 46 ml Hexan und 232 ml Toluol. Man erhitzt das Gemisch auf Rückflusstemperatur (ca. 94 °C) unter Stickstoff. Dazu gibt man auf einmal ein Gemisch bestehend aus
9,7 g Methylmethacrylat
0,2 g Methacrylsäure
3,6 g der Lösung $C_4$ (erhalten nach Beispiel 2a, A)
0,3 g 4-Acryloyloxy-1,2,2,6,6-pentamethylpiperidin
0,8 g Azodiisobutyronitril
und kocht während 30 Minuten am Rückfluss (1. Polymerisationsstufe). Zu dieser klaren Lösung lässt man immer noch unter Rückfluss innerhalb von 3 Stunden folgendes Gemisch zutropfen:
184,8 g Methylmethacrylat
1,9 g Methacrylsäure
1,9 g Glycidylmethacrylat
2,5 g Azodiisobutyronitril
0,4 g Dimethylaminoethanol
38,8 g der Lösung $C_4$ (erhalten nach Beispiel 2a, A)
4,5 g 4-Acryloyloxy-1,2,2,6,6-pentamethylpiperidin
(2. Polymerisationsstufe). Mit dem Fortschreiten der Reaktion nimmt die Viskosität des Reaktionsgemisches zu. Nach dem Zutropfen werden bei einer Innentemperatur bis ca. 140 °C ca. 150 ml Lösungsmittelgemisch abdestilliert. Man erhält so eine homogene Polymethacrylat-Mikropartikel-Dispersion mit einem Feststoffgehalt von ca. 45 %, die ca. 2 % Lichtschutzmittel (4-Acryloyloxy-1,2,2,6,6-pentamethylpiperidin), bezogen auf

den gesamten Festkörpergehalt, enthält (= Dispersion $G_1$).

Beispiel 4b

Es wird genau wie in Beispiel 4a verfahren, mit dem einzigen Unterschied, dass 0,1 g (1. Polymerisationsstufe) und 2,3 g (2. Polymerisationsstufe) 4-Acryloyloxy-1,2,2,6,6-pentamethylpiperidin verwendet werden. Man erhält so eine ca. 45%ige Polymethacrylat-Mikropartikel-Dispersion, die ca. 1 % des Lichtschutzmittels, bezogen auf den gesamten Festkörpergehalt, enthält (= Dispersion $G_2$).

Beispiel 4c

Es wird genau wie in Beispiel 4a verfahren, mit dem einzigen Unterschied, dass 1,2 g 4-Acryloyloxy-1,2,2,6,6-pentmethylpiperidin (verteilt auf beide Polymerisationsschritte) verwendet werden. Man erhält so eine ca. 45%ige Polymethacrylat-Mikropartikel-Dispersion, die ca. 0,5 % des Lichtschutzmittels, bezogen auf den gesamten Festkörpergehalt, enthält (= Dispersion $G_3$).

Beispiel 4d

Es wird genau wie in Beispiel 4a verfahren, mit dem einzigen Unterschied, dass nur 0,24 g 4-Acryloyloxy-1,2,2,6,6-pentamethylpiperidin (verteilt auf beide Polymerisationsschritte) verwendet werden. Man erhält so eine ca. 45%ige Polymethacrylat-Mikropartikel-Dispersion, die ca. 0,1 % Lichtschutzmittel, bezogen auf den gesamten Festkörpergehalt, enthält (=Dispersion $G_4$).

Beispiel 5a Herstellung einer lichtstabilisierten Polymethacrylat-Mikropartikel-Dispersion

In einem 750 ml Sulfierkolben, ausgerüstet mit Thermometer, Rührer, Destillierbogen, Stickstoffüberleitung und Tropftrichter, gibt man 142 ml ®Solvesso 100 (Alkangemisch, d = 0,85, Sdp. 162-177° C), 46 ml Hexan und 232 ml Toluol. Man erhitzt das Gemisch auf Rückfluss (ca. 94° C) unter Stickstoff. Dazu gibt man auf einmal ein Gemisch bestehend aus:
9,7 g Methylmethacrylat
0,2 g Methacrylsäure
3,6 g der Lösung $C_1$, erhalten gemäss Beispiel 1a, A
0,3 g 4-Acryloyloxy-1,2,2,6,6-pentamethylpiperidin
0,8 g Azodiisobutyronitril
und kocht während 30 Minuten am Rückfluss (1. Polymerisationsstufe). Zu dieser klaren Lösung lässt man unter Rückfluss innerhalb von 3 Stunden folgendes Gemisch zutropfen:
184,8 g Methylmethacrylat
1,9 g Methacrylsäure
1,9 g Glycidylmethacrylat
2,5 g Azodiisobutyronitril
0,4 g Dimethylaminoäthanol
38,8 g der Lösung $C_1$, erhalten gemäss Beispiel 1a, A
(2. Polymerisationsstufe). Mit dem Fortschreiten der Reaktion nimmt die Viskosität des Reaktionsgemisches zu. Nach dem Zutropfen werden bei einer Innentemperatur bis ca. 140° C etwa 150 ml Lösungsmittelgemisch abdestilliert. Man erhält so eine homogene, leicht trübe Polymethacrylat-Mikropartikel-Dispersion mit einem Feststoffgehalt von ca. 45 %, die ca. 2,5 % des Lichtschutzmittels (4-Acryloyloxy-1,2,2,6,6-pentamethylpiperidin) enthält, und zwar im amphipathischen Dispersionsmittelteil der Mikropartikel (= Dispersion $H_1$).

Beispiel 5b

Es wird genau wie in Beispiel 5a verfahren, mit dem einzigen Unterschied, dass zusätzlich in der ersten Polymerisationsstufe 0,1 g und in der zweiten Polymerisationsstufe 2,3 g 4-Acryloyloxy-1,2,2,6,6,-pentamethylpiperidin hinzugefügt werden. Man erhält so eine ca. 45%ige Polymethacrylat-Mikropartikel-Dispersion, die ca. 1 % Lichtschutzmittel, bezogen auf den Festkörpergehalt, enthält (= Dispersion $H_2$).

Beispiel 5c

Es wird genau wie in Beispiel 5a verfahren, mit dem einzigen Unterschied, dass zusätzlich in der ersten Polymerisationsstufe 0,3 g und in der zweiten Polymerisationsstufe 4,5 g 4-Acryloyloxy-1,2,2,6,6-pentamethylpiperidin hinzugefügt werden. Man erhält so eine ca. 45%ige Polymethacrylat-Mikropartikel-Dispersion, die ca. 2 % Lichtschutzmittel, bezogen auf den Festkörpergehalt, enthält (= Dispersion $H_3$).

Beispiel 5d

Es wird genau wie in Beispiel 5a verfahren, mit dem einzigen Unterschied, dass zusätzlich in der ersten Polymerisationsstufe 0,4 g und in der zweiten Polymerisationsstufe 6,8 g 4-Acryloyloxy-1,2,2,6,6-pentamethylpiperidin hinzugefügt werden. Man erhält so eine ca. 45%ige Polymethacrylat-Mikropartikel-Dispersion, die ca. 3 % des Lichtschutzmittels, bezogen auf den Festkörpergehalt, enthält (= Dispersion $H_4$).

Beispiel 5e

Es wird genau wie in Beispiel 5a verfahren, mit dem Unterschied, dass zusätzlich in der ersten Polymerisationsstufe 0,5 g und in der zweiten Polymerisationsstufe 9,1 g 4-Acryloyloxy-1,2,2,6,6-pentamethylpiperidinhinzugefügt werden. Man erhält so eine ca. 45%ige Polymethacrylat-Mikropartikel-Dispersion, die ca. 4 % Lichtschutzmittel, bezogen auf den gesamten Festkörpergehalt, enthält (= Dispersion $H_5$).

In den Dispersionen $H_2$ bis $H_5$ ist das Lichtschutzmittel sowohl im amphipatischen Dispersionsmittelteil als auch im vernetzten Mikropartikelkern enthalten.

Beispiel 6a

A. Herstellung eines amphipathischen Dispersionsmittels

In einemm 1,5-Liter-Sulfierkolben mit Rührer, Rückflusskühler und Stickstoffeinleitung werden 375 g Methyl-ethyl-keton vorgelegt und auf Rückfluss (80 °C) erhitzt. Dazu tropft man während 2 Stunden folgende Mischung:

213,5 g der Lösung $B_1$, erhalten nach Beispiel 1a, AII
184 g Methacrylsäuremethylester
20,5 g Methacrylsäure
2,15 g Azodiisobutyronitril
2,15 g n-Octylmercaptan

Nachdem das ganze Gemisch zugetropft ist, gibt man nochmals 0,3 g Azodiisobutyronitril hinzu und kocht während weiteren 2 Stunden am Rückfluss. Danach wird die Lösung verdünnt mit 580 g ®Solvesso 100 (Alkangemisch; Siedebereich 162-177 °C) und destilliert ca. 40 g Lösungsmittelgemisch ab. Man erhält eine Lösung mit einem Feststoffgehalt von ca. 30 % (= Lösung $C_5$).

B. Herstelung einer lichtstabilisierten Polyester-Mikropartikel-Dispersion

In einen 750 ml Sulfierkolben, ausgerüstet mit Thermometer, Rührer, Wasserabscheider, Stickstoffüberleitung und Tropftrichter, gibt man

124,6 g Isophthalsäure
60,4 g Trimethylolpropan
93,6 g Neonpentylglykol
9,8 g 2-[2-Hydroxy-3-tert.butyl-5-(2-carboxy-ethyl)-phenyl]-benztriazol
1 g Dibutylzinnoxid

Man erhitzt nun das Gemisch auf 180 °C und lässt als Schleppmittel für die Wasserabscheidung langsam etwas Xylolisomerengemisch zutropfen, so dass die Innentemperatur von 180 °C erhalten bleibt. Nach ca. 3,5 Stunden werden so 32 ml Wasser abgespalten. Die Innentemperatur lässt man langsam auf 195 °C steigen. Danach wird die klare gelbe Schmelze auf ca. 140 °C abgekühlt und mit 94,6 g Adipinsäure versetzt. Man erhitzt wieder auf 160 °C. Nun gibt man eine auf 150 °C vorgewärmte Lösung aus 53,6 g Lösung $C_5$ (erhalten gemäss Beispiel 6a, A) in 200 ml ®Solvesso 100 hinzu und erhitzt danach unter raschem Rühren auf ca. 165 °C (Rückfluss). Während der folgenden 2 Stunden lässt man nochmals eine Lösung aus 20 g Lösung $C_5$ in 20 ml ®Solvesso 100 zutropfen. Nachdem eine Gesamtmenge von 60 ml Wasser abgespalten wurde, werden noch 150 ml Lösungsmittel abdestilliert. Man erhält nun nach dem Abkühlen eine homogene Polyester-Mikropartikel-Dispersion mit einem Festkörpergehalt von ca. 75-80 %, die ca. 3 %, bezogen auf Festkörpergehalt, des Benztriazol-Lichtschutzmittels enthält (= Dispersion $J_1$).

Beispiel 6b

Es wird genau wie in Beispiel 6a verfahren, mit dem Unterschied, dass man an Stelle von 2-[2-Hydroxy-3-tert.butyl-5-(2-carboxy-ethyl)-phenyl]-benztriazol insgesamt 9,75 g 2-[2-Hydroxy-3-tert.-butyl-5-(2-methoxycarbonylethyl)-phenyl]-benztriazol einsetzt. Man erhält so eine ca. 75-80 %ige Polyester-Mikropartikel-Dispersion, die ca. 3 % des Benztriazol-Lichtschutzmittels, bezogen auf den gesamten Festkörpergehalt, enthält (= Dispersion $J_2$).

Beispiel 6c

Man verfährt genau wie in Beispiel 6a angegeben, setzt jedoch an Stelle des 2-[2-Hydroxy-3-tert.butyl-5-(2-carboxyethyl)-phenyl]-benztriazols 6,5 g des folgenden, aus den Komponenten a) bis c) bestehenden Gemisches ein:

a) β-[3-(2H-Benztriazol-2-yl)-4-hydroxy-5-tert.butyl-phenyl]-propionsäure-polyethylenglykol 300-ester

b) Bis-{β-[3-(2H-Benztriazol-2-yl)-4-hydroxy-5-tert.butyl-phenyl]-propionsäure}-polyethylenglykol 300-ester

c) Polyethylenglykol 300, wobei a):b):c) = 50:38:12.

Man erhält so eine ca. 75-80%ige Polyester-Mikropartikel-Dispersion, die 2 % des Benztriazol-Lichtschutzmittelgemisches, bezogen auf den gesamten Festkörpergehalt, enthält (= Dispersion $J_3$).

Beispiel 6d

Man verfährt genau wie in Beispiel 6a angegeben, setzt jedoch an Stelle des 2-[2-Hydroxy-3-tert.butyl-5-(2-carboxyethyl)-phenyl]-benztriazols 6,5 g 2-[2-Hydroxy-3,5-di-(α,α-dimethylbenzyl)-phenyl]-benztriazol ein. Man erhält so eine ca. 75-80%ige Polyester-Mikropartikel-Dispersion, die ca. 2 % des Benztriazol-Lichtschutzmittels, bezogen auf den gesamten Festkörpergehalt, enthält (= Dispersion $J_4$).

Beispiel 6e

Man verfährt genau wie in Beispiel 6a angegeben, setzt jedoch an Stelle des 2-[2-Hydroxy-3-tert.butyl-5-(2-carboxyethyl)-phenyl]-benztriazols 6,5 g 2-[2-Hydroxy-3,5-di-tert-amyl-phenyl]-benztriazol ein. Man erhält so eine ca. 75-80%ige Polyester-Mikropartikel-Dispersion, die ca. 2 % Benztriazol-Lichtschutzmittel, bezogen auf den gesamten Festkörpergehalt, enthält (= Dispersion $J_5$).

Beispiel 7a Herstellung einer lichtstabilisierten Polymethacrylat-Mikropartikel-Dispersion

In einem 750 ml Sulfierkolben, ausgerüstet mit Thermometer, Rührer, Wasserabscheider, Stickstoffüberleitung und Tropftrichter, gibt man 142 ml ®Solvesso 100 (Alkangemisch, d = 0,85, Sdp. 162-177° C), 46 ml Hexan (d = 0,659) und 232 ml Toluol (d = 0,871). Man erhitzt das Gemisch auf Rückfluss (ca. 90° C). Dazu gibt man eine Lösung bestehend aus

9,7 g Methylmethacrylat
0,2 g Methacrylsäure
0,8 g Azodiisobutyronitril
3,6 der Lösung $C_5$ (erhalten nach Beispiel 6a, A)
4,8 g 2-{2-Hydroxy-3-tert-butyl-5-[2-(2-acryloyloxycyclohexyloxy-carbonyl)-ethyl]-phenyl}-benztriazol

und kocht während 30 Minuten am Rückfluss. Es entsteht eine leichte Trübung. Darauf lässt man während 3 Stunden folgende Lösung zutropfen:

184,8 g Methylmethacrylat
1,9 g Methacrylsäure
1,9 g Glycidylmethacrylat
2,5 g Azodiisobutyronitril
38,8 g der Lösung $C_5$ (erhalten nach Beispiel 6a, A)
0,4 g Dimethylaminoethanol.

Mit zunehmender Zeit des Zutropfens wird das Reaktionsgemisch viskoser. Nach dem Zutropfen werden bei ca. 100° C Innentemperatur ca. 150 ml Lösungsmittelgemisch abdestilliert. Die Badtemperatur beträgt dabei ca. 140° C. Man erhält so eine homogene Polymethacrylat-Mikropartikel-Dispersion mit einem Festkörpergehalt von ca. 45 %, die 2 % des Benztriazol-Lichtschutzmittels, bezogen auf den gesamten Festkörpergehalt, enthält (= Dispersion $K_1$).

Beispiel 7b

Man verfährt genau wie in Beispiel 7a angegeben, setzt jedoch an Stelle des dort beschriebenen 2-Hydroxyphenyl-benztriazolderivates 4,8 g 2-{2-Hydroxy-3-tert-butyl-5-[2-(2-acryloyloxyethylamino-carbonyl)-ethyl]-phenyl}-benztriazol ein. Man erhält so eine homogene, ca. 45%ige Polymethacrylat-Mikropartikel-Dispersion, die 2 % des Benztriazol-Lichtschutzmittels, bezogen auf den gesamten Festkörpergehalt, enthält (= Dispersion $K_2$).

Beispiel 7c

Man verfährt genau wie in Beispiel 7a angegeben, setzt jedoch an Stelle des dort beschriebenen 2-Hydroxyphenyl-benztriazolderivates 4,8 g 2-{2-Hydroxy-3-tert-butyl-5-[2-(2-acryloyloxypropylamino-carbonyl)-ethyl]-phenyl}-benztriazol ein. Man erhält so eine homogene, ca. 45%ige Polymethacrylat-Mikropartikel-Dispersion, die 2 % des Benztriazol-Lichtschutzmittels, bezogen auf den gesamten Festkörpergehalt, enthält (= Dispersion $K_3$).

Beispiel 7d

Man verfährt genau wie in Beispiel 7a angegeben, setzt jedoch an Stelle des dort beschriebenen 2-Hydroxyphenyl-benztriazolderivates 4,8 g 2-{2-Hydroxy-3-tert-butyl-5-[2-(2-acryloyloxypropyloxy-carbonyl)-ethyl]-phenyl}-benztriazol ein. Man erhält so eine homogene, ca. 45%ige Polymethacrylat-Mikropartikel-Dispersion, die 2 % des Benztriazol-Lichtschutzmittels, bezogen auf den gesamten Festkörpergehalt, enthält (= Dispersion $K_4$).

Beispiel 7e

Man verfährt genau wie in Beispiel 7a angegeben, setzt jedoch an Stelle des dort beschriebenen 2-Hydroxyphenyl-benztriazolderivates 4,8 g 2-{2-Hydroxy-3-tert-butyl-5-[2-(2-acryloyloxy-3-n-butoxy-propyloxy-carbonyl)-ethyl]-phenyl}-benztriazol ein. Man erhält so eine homogene, ca. 45%ige Polymethacrylat-Mikropartikel-Dispersion, die 2 % des Benztriazol-Lichtschutzmittels, bezogen auf den gesamten Festkörpergehalt, enthält (= Dispersion $K_5$).

Beispiel 7f

Man verfährt genau wie in Beispiel 7a angegeben, setzt jedoch an Stelle des dort beschriebenen 2-Hydroxyphenyl-benztriazolderivates 4,8 g 2-[2-Hydroxy-3-(2,3-epoxypropyl)-5-methyl-phenyl]-benztriazolein. Man erhält so eine homogene, ca. 45%ige Polymethacrylat-Mikropartikel-Dispersion, die 2 % des Benztriazol-Lichtschutzmittels, bezogen auf den gesamten Festkörpergehalt, enthält (= Dispersion $K_6$).

Beispiel 7g

Man verfährt genau wie in Beispiel 7a angegeben, setzt jedoch an Stelle des dort beschriebenen 2-Hydroxyphenyl-benztriazolderivates 4,8 g 2-{2-Hydroxy-3-tert-butyl-5-[2-(2-hydroxy-3-acryloyloxypropyloxy-carbonyl)-ethyl]-phenyl}-benztriazol ein. Man erhält so eine homogene, ca. 45%ige Polymethacrylat-Mikropartikel-Dispersion, die 2 % Benztriazol-Lichtschutzmittel, bezogen auf den gesamten Festkörpergehalt, enthält (= Dispersion $K_7$).

Beispiel 7h

Man verfährt genau wie in Beispiel 7a angegeben, setzt jedoch an Stelle des dort beschriebenen 2-Hydroxyphenyl-benztriazolderivates 4,8 g 2-{2-Hydroxy-3-[(2-hydroxy-3-methacryloyloxy)-propyl]-5-methyl-phenyl}-benztriazol ein. Man erhält so eine homogene, ca. 45%ige Polymethacrylat-Mikropartikel-Dispersion, die 2 % Benztriazol-Lichtschutzmittel, bezogen auf den gesamten Festkörpergehalt, enthält (= Dispersion $K_8$).

Beispiel 7i

Man verfährt genau wie in Beispiel 7a angegeben, setzt jedoch an Stelle des dort beschriebenen 2-Hydroxyphenyl-benztriazolderivates 4,8 g 2-[2-Hydroxy-3,5-di-(α,α-dimethylbenzyl)-phenyl]-benztriazol ein. Man erhält so eine homogene, ca. 45%ige Polymethacrylat-Mikropartikel-Dispersion, die 2 % Benztriazol-Lichtschutzmittel, bezogen auf den gesamten Festkörpergehalt, enthält (= Dispersion $K_9$).

Beispiel 7k

Man verfährt genau wie in Beispiel 7a angegeben, setzt jedoch an Stelle des dort beschriebenen 2-Hydroxyphenyl-benztriazolderivates 4,8 g 2-[2-Hydroxy-3,5-di-tert-amyl-phenyl]-benztriazol ein. Man erhält so eine homogene, ca. 45%ige Polymethacrylat-Mikropartikel-Dispersion, die 2 % Benztriazol-Lichtschutzmittel, bezogen auf den gesamten Festkörpergehalt, enthält (= Disperison $K_{10}$).

Beispiel 7l

Man verfährt genau wie in Beispiel 7a angegeben, setzt jedoch an Stelle des dort beschriebenen 2-Hydroxyphenyl-benztriazolderivates 4,8 g des folgenden, aus den Komponenten a) bis c) bestehenden Gemisches ein:

a) β-[3-(2H-Benztriazol-2-yl)-4-hydroxy-5-tert.butyl-phenyl]-propionsäure-polyethylenglykol-300-ester

b) Bis-{β-[3-(2H-Benztriazol-2-yl)-4-hydroxy-5-tert.butyl-phenyl]-propionsäure}-polyethylenglykol-300-ester

c) Polyethylenglykol 300, wobei a):b):c): = 50:38:12.

Man erhält so eine homogene, ca. 45%ige Polymethacrylat-Mikropartikel-Dispersion, die 2 % des vorstehend beschriebenen Lichtschutzmittelgemisches, bezogen auf den gesamten Festkörpergehalt, enthält (= Dispersion $K_{11}$).

Beispiel 8a

A. Herstellung eines amphipathischen Dispersionsmittels

In einem 350 ml Sulfierkolben, ausgerüstet mit Thermometer, Rührer, Rückflusskühler und Stickstoffüberleitung gibt man 74 ml Methylethyl-keton und erhitzt auf Rückflusstemperatur (ca. 80° C). Dazu tropft man innerhalb von 2 Stunden eine Lösung bestehend aus

29,3 g Methylmethacrylat
3,25 g Methacrylsäure
34,2 g der Lösung $B_1$, erhalten nach Beispiel 1a, AII
0,4 g Azodiisobutyronitril
27,4 g 2-{2-Hydroxy-3-tert-butyl-5-[2-(2-acryloyloxycyclohexyloxy-carbonyl)-ethyl]-phenyl}-benztriazol

Danach gibt man erneut 0,1 g Azodiisobutyronitril hinzu und lässt weitere 2 Stunden am Rückfluss kochen. Danach gibt man 100 ml ®Solvesso 100 (Alkangemisch, Sdp. 162-177° C) hinzu und kühlt die viskose Lösung ab (= Lösung $C_6$).

B. Herstellung einer lichtstabilisierten Polymethacrylat-Mikropartikel-Dispersion

In einen 750 ml Sulfierkolben, ausgerüstet mit Thermometer, Rührer, Wasserabscheider, Stickstoffüberleitung und Tropftrichter gibt man 142 ml ®Solvesso 100 (Alkangemisch, Sdp. 162-177° C), 46 ml Hexan und 232 ml Toluol. Dieses Lösungsmittelgemisch wird auf Rückflusstemperatur (ca. 90° C) erhitzt. Nun wird eine Lösung zugegeben bestehend aus

9,7 g Methylmethacrylat
0,2 g Methacrylsäure
0,8 g Azodiisobutyronitril
3,6 g der Lösung $C_6$ (erhalten nach Beispiel 8a, A)

Man kocht während 30 Minuten am Rückfluss. Es entsteht eine blassweisse Trübung. Darauf lässt man nochmals während 3 Stunden folgende Lösung zutropfen:

184,8 g Methylmethacrylat
1,9 g Methacrylsäure
1,9 g Glycidylmethacrylat
2,5 g Azodiisobutyronitril
38,8 g der Lösung $C_6$
0,4 g Dimethylaminoethanol.

Mit zunehmender Zeit des Zutropfens wird das Reaktionsgemisch viskoser. Nach dem Zutropfen werden bei ca. 100 °C Innentemperatur 150 ml Lösungsmittelgemisch abdestilliert. Die Badtemperatur beträgt dabei ca. 140 °C. Man erhält so eine homogene, ca. 45%ige Polymethacrylat-Mikropartikel-Dispersion, die 2 % Benztriazol-Lichtschutzmittel, bezogen auf den Gesamt-Festkörpergehalt, enthält (= Dispersion $L_1$).

Beispiel 8b

A. Man verfährt genau wie in Beispiel 8a, A angegeben, setzt jedoch an Stelle des dort verwendeten Benztriazolderivates 27,4 g 2-{2-Hydroxy-3-tert-butyl-5-[2-(2-acryloyloxyethylamino-carbonyl)-ethyl]-phenyl}-benztriazol ein und erhält so die Lösung $C_7$.

B. man verfährt genau wie in Beispiel 8a, B angegeben, verwendet jedoch an Stelle der Lösung $C_6$ die Lösung $C_7$. Man erhält eine ca. 45%ige Polymethacrylat-Mikropartikel-Dispersion, die das vorstehend beschriebene Benztriazol-Lichtschutzmittel in einer Menge von 2 %, bezogen auf den gesamten Festkörpergehalt, enthält (= Dispersion $L_2$).

Beispiel 8c

A. Man verfährt genau wie in Beispiel 8a, A angegeben, setzt jedoch an Stelle des dort verwendeten Benztriazolderivates 27,4 g 2-{2-Hydroxy-3-tert-butyl-5-[2-(2-hydroxy-3-acryloyloxy-propyloxy-carbonyl)-ethyl]-phenyl}-benztriazol ein und erhält so die Lösung $C_8$.

B. man verfährt genau wie in Beispiel 8a, B angegeben, verwendet jedoch an Stelle der Lösung $C_6$ die Lösung $C_8$. Man erhält eine ca. 45%ige Polymethacrylat-Mikropartikel-Dispersion, die das vorstehend beschriebene Benztriazol-Lichtschutzmittel in einer Menge von 2 %, bezogen auf den gesamten Festkörpergehalt, enthält (= Dispersion $L_3$).

Beispiel 9 Herstellung einer lichtstabilisierten Polyester-Mikropartikel-Dispersion

In einen 750 ml Sulfierkolben mit Thermometer, Tropftrichter, Rührer und Wasserabscheider gibt man
124,6 g Isophthalsäure
60,4 g Trimethylolpropan
93,6 g Neopentylglykol
1 g (= 0,5 Mol%) Dibtuylzinnoxid
9,75 g 2-[2-Hydroxy-3-tert-butyl-5-(2-carboxyethyl)-phenyl]-benztriazol
und erwärmt mit wenig Xylol (Isomerengemisch) auf 180 °C. Während 5 $\frac{1}{4}$ Stunden werden nun am Wasserabscheider ca. 36 ml Wasser abgespalten. Die Innentemperatur steigt dabei bis ca. 195 °C an. Die klare Schmelze wird nun auf 140 °C gekühlt. Danach gibt man 94,6 g Adipinsäure hinzu. Nachdem alles geschmolzen ist, erhitzt man das Gemisch auf 160 °C Innentemperatur. Nun wird bei abgestelltem Rührwerk 53,6 g der Lösung $C_1$ (erhalten nach Beispiel 1a, A) in 200 ml ®Solvesso 100 die zuvor auf 150 °C erwärmt wurde, hinzugegeben. Unter raschem Rühren wird erneut auf 160-165 °C (Rückfluss) erhitzt. Während 2 Stunden werden nun langsam weitere 20 g der Lösung $C_1$ in 20 ml ®Solvesso 100 gelöst und zugetropft. Sobald sich die Gesamtmenge von 60 ml Wasser abgeschieden hat, werden noch 150 ml Lösungsmittelgemisch abdestilliert und die Reaktion unterbrochen.
Man erhält nun eine homogene, ca. 75-80%ige Polyester-Mikropartikel-Dispersion, die ca. 0.2 % des Aminlichtschutzmittels (4-Acryloyloxy-1,2,2,6,6-pentamethylpiperidin) und 3 % des Benztriazol-Lichtschutzmittels, bezogen jeweils auf den gesamten Festkörpergehalt, enthält (= Dispersion $M_1$).

Beispiel 10a Herstellung einer lichtstabilisierten Polymethacrylat-Mikropartikel-Dispersion

In einem 750 ml Sulfierkolben, ausgerüstet mit Rührer, Thermometer, Wasserabscheider, Stickstoffüberleitung und Tropftrichter, gibt man 142 ml ®Solvesso 100 (Alkangemisch, d = 0,85, Sdp. 162-177 °C), 46 ml Hexan und 232 ml Toluol. Man erhitzt das Gemisch auf Rückflusstemperatur (ca. 90 °C). Dazu gibt man eine Lösung bestehend aus
9,7 g Methylmethacrylat
0,2 g Methacrylsäure
0,8 g Azodiisobutyronitril
5,0 der Lösung $C_1$ (erhalten nach Beispiel 1a, A)
4,8 g 2-{2-Hydroxy-3-tert-butyl-5-[2-(2-acryloyloxy-cyclohexyloxy-carbonyl)-ethyl]-phenyl}-benztriazol

und kocht während 30 Minuten am Rückfluss. Darauf lässt man nochmals während 3 Stunden aus einem Tropftrichter eine Lösung aus folgenden Bestandteilen zutropfen:

184,8 g Methylmethacrylat
1,9 g Methacrylsäure
1,9 g Glycidylmethacrylat
2,5 g Azodiisobutyronitril
50,0 g Lösung $C_1$ (erhalten nach Beispiel 1a, A)
0,4 g Dimethylaminoethanol.

Mit zunehmender Zeit des Zutropfens wird das Reaktionsgemisch viskoser. Nach dem Zutropfen werden bei ca. 100 °C Innentemperatur 150 ml Lösungsmittelgemisch abdestilliert. Die Badtemperatur beträgt dabei ca. 140 °C. Man erhält so eine ca. 45%ige homogene Polymethacrylat-Mikropartikel-Dispersion, die ca. 2 % Aminlichtschutzmittel und ca. 2 % Benztriazol-Lichtschutzmittel, bezogen auf den Gesamtfestkörpergehalt, enthält (= Dispersion $N_1$).

Beispiele 10b-10h

Man verfährt wie in Beispiel 10a angegeben, setzt jedoch an Stelle des dorte beschriebenen 2-Hydroxyphenyl-benztriazolderivates jeweils 4,8 g der in den Beispielen 7b-7h verwendeten 2-Hydroxyphenyl-benztriazole ein, erhält man die 45%igen Polymethacrylat-Mikropartikel-Dispersionen $N_2$ bis $N_8$.

Beispiel 11 Herstellung von lichtstabilisierten Polymethacrylat-Mikropartikel-Dispersionen

In einem 750 ml Sulfierkolben, ausgerüstet mit Rührer, Thermometer, Wasserabscheider, Stickstoffüberleitung und Tropftrichter, gibt man jeweils 142 ml ®Solvesso 100, 46 ml Hexan und 232 ml Toluol. Man erhitzt das Gemisch auf Rückfluss (ca. 90 °C). Dazu gibt man jeweils eine Lösung aus folgenden Komponenten:

9,7 g Methylmethacrylat
0,2 g Methacrylsäure
0,8 g Azodiisobutyronitril
3,6 g der Lösung $C_6$, $C_7$ bzw. $C_8$ (erhalten nach den Beispielen 8a, A, 8b, A bzw. 8c, A)

Man kocht während 30 Minuten am Rückfluss. Es entsteht eine schwache Trübung. Darauf lässt man während 3 Stunden aus einem Tropftrichter eine Lösung aus folgenden Bestandteilen zutropfen:

184,8 g Methylmethacrylat
1,9 g Methacrylsäure
1,9 g Glycidylmethacrylat
2,5 g Azodiisobutyronitril
38,8 g der Lösung $C_6$, $C_7$ bzw. $C_8$ (erhalten nach den Beispielen 8a, A, 8b, A bzw. 8c, A)
0,4 g Dimethylaminoethanol
2,2 g 4-Acryloyloxy-1,2,2,6,6-pentamethylpiperidin.

Das Reaktionsgemisch wird mit der Zeit viskoser. Nach dem Zutropfen werden bei 100 °C Innentemperatur ca. 150 ml Lösungsmittelgemisch abdestilliert. Die Badtemperatur beträgt dabei ca. 140 °C. Man erhält so eine ca. 45%ige homogene Polymethacrylat-Mikropartikel-Dispersionen, die ca. 1 % Aminlichtschutzmittel und ca. 2 % der jeweiligen Benztriazol-Lichtschutzmittel, bezogen jeweils auf den gesamten Festkörpergehalt der Dispersion, enthalten (= Dispersionen $P_1$, $P_2$ und $P_3$).

Beispiel 12a Herstellung einer lichtstabilisierten Polyester-Mikropartikel-Dispersion

In einen 750 ml Sulfierkolben, ausgerüstet mit einem Turbinenrührer, Wasserabscheider und $N_2$-Ueberleitung, gibt man

128,5 g eines Alkangemisches (®Solvesso 100, Siedebereich 162-177 °C)
90,3 g der Lösung $C_4$ (erhalten nach Beispiel 2a, A)
192,0 g Phthalsäuranhydrid
0,3 g Tetrabutylorthotitanat.

Das Gemisch wird unter Stickstoff und kräftigem Rühren auf ca. 150 °C erhitzt, wobei das Phthalsäureanhydrid schmilzt und im Lösungsmittel emulgiert wird. Man fügt nun die Hälfte des folgenden Gemisches hinzu:

35,0 g Trimethylolpropan

79,8 g 1,4-Butandiol
8,8 g 1,6-Hexandiol
4,5 g 4-Hydroxy-N-hydroxyethyl-2,2,6,6-tetramethylpiperidin.

und erhitzt das Ganze zum Rückfluss. Die zweite Hälfte des Gemisches wird innerhalb von 2 Stunden dem Reaktionsgemisch zugetropft. Letzteres wird weitere 16 Stunden unter Wasserabscheidung am Rückfluss gekocht. Man erhält eine weisse, opake, stabile Dispersion mit einer Säurezahl von 20 mg KOH/g. Nach der Destillation von 40 g Lösungsmittel erhält man eine Polyester-Mikropartikel-Dispersion mit ca. 70 % Festkörpergehalt, die ca. 1,0 % des Aminlichtschutzmittels, bezogen auf den Festkörpergehalt, enthält (= Dispersion $Q_1$).

Beispiel 12b

Man verfährt genau wie in Beispiel 12a beschrieben, mit dem einzigen Unterschied, das an Stelle der dort erwähnten 3,5 g 4-Hydroxy-N-hydroxyethyl-2,2,6,6-tetramethylpiperidin 7,0 g dieser Verbindung eingesetzt werden. Man erhält eine Polyester-Mikropartikel-Dispersion mit ca. 70 % Festkörpergehalt, die ca. 2,0 % des Lichtschutzmittels, bezogen auf den Festkörpergehalt, enthält (= Dispersion $Q_2$).

Beispiel 13

13.1 Herstellung einer lichtstabilisierten Polymethracrylat-Mikropartikel-Dispersion

In einem 750 ml Sulfierkolben, ausgerüstet mit Rührer, Thermometer, Rückflusskühler, Stickstoffüberleitung und Tropftrichter, werden 260 ml Heptan (Isomerengemisch) vorgelegt und auf Rückflusstemperatur erwärmt (95-99 °C). In die Vorlage wird folgende Lösung zugegeben:

27,1 g Methacrylsäure-methylester
2,1 g Azodiisobutyronitril
9,9 g der Lösung $C_4$ (erhalten nach Beispiel 2a, A).

Man lässt diese Lösung nach dem Zutropfen 30 Minuten am Rückfluss reagieren. Nun lässt man aus einem Tropftrichter während 3 Stunden folgende Lösung in das Reaktionsgemisch tropfen:

124,6 g Methacrylsäure-methylester
3,9 g Methacrylsäure-allylester
1,7 g Azodiisobutyronitril
26,6 g der Lösung $C_4$ (erhalten nach Beispiel 2a, A)
4,5 g 4-Acryloyloxy-1,2,2,6,6-pentamethylpiperidin.

Mit der Zeit entsteht eine dünne weisse Suspension. Man lässt ca. 1 Stunde am Rückfluss rühren. Danach gibt man 95 ml Heptan hinzu. Nun lässt man wiederum aus dem Tropftrichter folgende Lösung während 1 Stunde zutropfen:

19,3 g Methacrylsäure-methylester
16,1 g Acrylsäure-butylester
10,2 g Acrylsäure-hydroxyäthylester
6,2 g Acrylsäure
0,35 g Azodiisobutyronitril
10,8 g der Lösung $C_4$ (erhalten gemäss Beispiel 2a, A).

Die weisse Suspension wird nach dem Zutropfen noch ca. 1 Stunde ausgerührt. Man erhält so eine ca. 45%ige Polymethacrylat-Mikropartikel-Dispersion, die ca. 2 % Lichtschutzmittel, bezogen auf den gesamten Festkörpergehalt, enthält (= Dispersion $R_1$).

13.2 Herstellung einer Mikropartikeldispersion in Wasser

In einen 1,5-Liter-Sulfierkolben, ausgerüstet mit Rührer, Thermometer, Tropftrichter und 15 cm Vigreux-Kolonne mit Destillationsbogen, werden 362 ml Wasser, 57,2 ml Butyloxy-äthanol und 6 ml Diäthylaminoäthanol vorgelegt und unter raschem Rühren auf 45-50 °C erwärmt. Man lässt nun innerhalb 45-60 Minuten aus dem Tropftrichter unter leichtem Vakuum 465,2 g der Mikropartikel-Dispersion $R_1$ so zulaufen, dass sogleich alles Heptan abdestilliert. Azeotrop geht dabei auch etwas Wasser in das Destillat. Man erhält eine dicke weisse wässrige Dispersion der lichtstabilisierten Mikropartikel mit einem Festkörpergehalt von ca. 30-32 % (= Dispersion $WR_1$).

Beispiel 14

14.1 Herstellung einer lichtstabilisierten Polymethacrylat-Mikropartikel-Dispersion

Man verfährt genau wie in Beispiel 13.1 beschrieben, verwendet aber an Stelle der Lösung $C_4$ die lichtstabilisierte Lösung $C_6$ (erhalten nach Beispiel 8a, A) und gibt kein Lichtschutzmittel (4-Acryloyloxy-1,2,2,6,6-pentamethylpiperidin) zu. So erhält man eine ca. 45%ige Polymethacrylat-Mikropartikel-Dispersion, die ca. 2 % Benztriazol-Lichtschutzmittel, bezogen auf den gesamten Festkörpergehalt, enthält (= Dispersion $R_2$).

14.2 Herstellung einer Mikropartikeldispersion in Wasser

Man verfährt genau wie in Beispiel 13.2 ausführlich beschrieben, wobei man an Stelle der Dispersion $R_1$ die Dispersion $R_2$ einsetzt. Man erhält ebenfalls eine ca. 30-32%ige wässrige Mikropartikel-Dispersion (=dispersion $WR_2$).

Beispiel 15

15.1 Herstellung eines lichtstabilisierten amphipathischen Dispersionmittels

Es wird analog Beispiel 1a AIII vorgegangen, mit dem einzigen Unterschied, dass 59 g 4-Acryloyloxy-1,2,2,6,6-pentamethylpiperidin anstelle der dort angegebenen 10,4 g verwendet werden. Man erhält eine ca. 30%ige Lösung enthaltend ca. 13,1 % des Lichtschutzmittels, berechnet auf den Festkörpergehalt (= Lösung $C_{10}$).

15.2 Herstellung einer lichtstabilisierten Polymethacrylat-Mikropartikel-Dispersion

Man verfährt genau wie in Beispiel 13.1 beschrieben, verwendet aber an Stelle der Lösung $C_4$ die wie oben erhaltene Lösung $C_{10}$ und gibt kein Lichtschutzmittel (4-Acryloyloxy-1,2,2,6,6-pentamethylpiperidin) zu. So erhält man eine ca. 45%ige Polymethacrylat-Mikropartikel-Dispersion, die ca. 1 % des Lichtschutzmittels, bezogen auf den gesamten Festkörpergehalt, enthält (=Dispersion $R_3$).

15.3 Herstellung einer Mikropartikeldispersion in Wasser

Man verfährt genau wie in Beispiel 13.2 ausführlich beschrieben, wobei man an Stelle der Dispersion $R_1$ die Dispersion $R_3$ einsetzt. Man erhält ebenfalls eine ca. 30-32%ige wässrige lichtstabilisierte Mikropartikel-Dispersion (=Dispersion $WR_3$).

Beispiel 16

16.1 Herstellung einer lichtstabilisierten Polymethacrylat-Mikropartikel-Dispersion

Man verfährt genau wie in Beispiel 13.1 beschrieben, verwendet aber an Stelle der Lösung $C_4$ die Lösung $C_{10}$, erhalten gemäss Beispiel 15.1. Man erhält eine ca. 45%ige Polymethacrylat-Mikropartikel-Dispersion, die ca. 3 % des Lichtschutzmittels, bezogen auf den gesamten Festkörpergehalt, enthält (= Dispersion $R_4$).

16.2 Herstellung einer Mikropartikeldispersion in Wasser

Man verfährt analog wie in Beispiel 13.2 ausführlich beschrieben, wobei man an Stelle der Dispersion $R_1$ die Dispersion $R_4$ einsetzt. Man erhält eine ca. 30-32%ige wässrige lichtstabilisierte Mikropartikel-Dispersion (= Dispersion $WR_4$).

Beispiel 17

17.1 Herstellung einer lichtstabilisierten Polymethacrylat-Mikropartikel-Dispersion

Man verfährt genau wie in Beispiel 13.1 beschrieben, verwendet aber an Stelle der Lösung $C_4$ die Lösung $C_6$ (erhalten nach Beispiel 8a, A). So erhält man eine ca. 45%ige Polymethacrylat-Mikropartikel-Dispersion, die je ca. 2 % Benztriazol- und Amin-Lichtschutzmittel, bezogen auf den gesamten Festkörper-

gehalt, enthält (= Dispersion $R_5$).

17.2 Herstellung einer Mikropartikeldispersion in Wasser

Man verfährt wie in Beispiel 13.2 ausführlich beschrieben, wobei man an Stelle der Dispersion $R_1$ die Dispersion $R_5$ einsetzt. Man erhält so eine ca. 30-32%ige wässrige lichtstabilisierte Mikropartikel-Dispersion (= Dispersion $WR_5$).

Beispiel 18

18.1 Herstellung einer lichtstabilisierten Polymethacrylat-Mikropartikel-Dispersion

Man verfährt genau wie in Beispiel 13.1 beschrieben, verwendet aber an Stelle der Lösung $C_4$ oben beschriebene die Lösung $C_{10}$ (erhalten nach Beispiel 15.1) und an Stelle von 4,5 g 4-Acryloyloxy-1,2,2,6,6-pentamethylpiperidin 4,5 g 2-{2-Hydroxy-3-tert-butyl-5-[2-(2-acryloyloxycyclohexyloxy-carbonyl)-ethyl]-phenyl}-benztriazol. Man erhält eine ca. 45%ige Polymethacrylat-Mikropartikel-Dispersion, die ca. 1 % Aminlichtschutzmittel (4-Acryloyloxy-1,2,2,6,6-pentamethylpiperidin) und ca. 2 % des eingesetzten Benztriazol-Lichtschutzmittels, bezogen jeweils auf den gesamten Festkörpergehalt, enthält (= Dispersion $R_6$).

18.2 Herstellung einer Mikropartikeldispersion in Wasser

Man verfährt analog wie in Beispiel 13.2 ausführlich beschrieben, wobei man an Stelle der Dispersion $R_1$ die Dispersion $R_6$ einsetzt. Man erhält so eine ca. 30-32%ige wässrige Dispersion lichtstabilisierter Mikropartikel (= Dispersion $WR_6$).

Beispiel 19

Herstellung eines Reaktivverdünners

In einen 750 ml Sulfierkolben ausgerüstet mit Rührer, $N_2$-Einleitung und Wasserabscheider, gibt man
141 g Oelsäure (techn.)
67 g Trimethylolpropan
91 g Adipinsäure
59 g 1,6-Hexandiol.

Man erhitzt dieses Gemisch auf 190 °C und lässt während 8 Stunden langsam Toluol als Wasserschleppmittel so hinzutropfen, dass die Temperatur von 190 °C erhalten bleibt. Es werden ca. 43 g Reaktionswasser abdestilliert. Der erhaltene Ester hat einen Festkörpergehalt von ca. 93 % (= Lösung $E_1$).

Beispiel 20 Herstellung eines Reaktivverdünners (für die Polyurethanherstellung)

In einem 1,5 Liter Sulfierkolben ausgerüstet mit Rührer, $N_2$-Einleitung und Wasserabscheider gibt man 400,6 g Laurinsäure und 268,4 g Trimethylolpropan. Man erhitzt dieses Gemisch auf 190 °C und lässt während 8 Stunden langsam Toluol als Wasserschleppmittel so hinzutropfen, dass die Temperatur von 190 °C erhalten bleibt. Man gibt nun 100,1 g Bernsteinsäureanhydrid hinzu und erhitzt weitere 8 Stunden unter denselben Bedingungen. Der erhaltene Ester hat einen Festkörpergehalt von ca. 95 % und weist eine Säurezahl von 5 mg KOH/g auf (=Lösung $E_2$).

Beispiel 21 Herstellung und Applikation einer härtbaren Ueberzugsmasse

Die Polyester-Mikropartikel-Dispersion $D_2$, wie sie gemäss Beispiel 1b, B erhalten wird, wird mit einem Melamin-Formaldehydharz (®Cymel 301 der Cyanamid Corp.) in einem Verhältnis vermischt, dass das Festkörperverhältnis 10:1 beträgt. Zu der Mischung werden 0,2 %, bezogen auf den gesamten Festkörpergehalt, p-Toluolsulfonsäure zugegeben. Die resultierende Mischung meist einen Gesamtfestkörpergehalt von ca. 75 % auf.

Die so erhaltene Lackmischung wird mit Butylglykolacetat auf Spritzfähigkeit verdünnt (es kann zusätzlich auch ein Verlaufshilfsmittel zugesetzt werden) und auf ein vorbereitetes Aluminiumblech (coil coat, Füller, silbermetallic Basislack) gespritzt und bei 150 °C 30 Minuten eingebrannt. Es resultiert eine

Trockenschichtdicke von ca. 40 µm Klarlack.

Als Vergleich dient eine Lackmischung, die unstabilisierte Mikropartikel (hergestellt ohne Lichtschutzmittel-Zusatz) enthält, aber sonst auf gleichem Weg wie oben bereitet und appliziert wird.

Die Proben werden sowohl in einer beschleunigten Bewitterung (®Uvcon-Bewitterungsgerät der Fa. Atlas Corp., 4 Std., 60 °C UV, 4 Std. 50 °C Kondensation) wie auch in der Freibewitterung (Florida, 5° Süd, black box, unheated) geprüft.

Die stabilisierte Probe weist eine bessere Glanzhaltung und längere Rissfreiheit auf als die unstabilisierte Vergleichsprobe.

Beispiele 22-26

Man verfährt genau wie in Beispiel 21 angegeben, setzt jedoch an Stelle der Dispersion $D_1$ die Dispersionen
$D_3$ (erhalten nach Beispiel 1c, B)
$F_2$ (erhalten nach Beispiel 2b)
$F_3$ (erhalten nach Beispiel 3a)
$F_4$ (erhalten nach Beispiel 3b)
$J_1$ (erhalten nach Beispiel 6a)
ein.

Die Ergebnisse der Schnellbewitterungstests sind in der folgenden Tabelle 1 zusammengestellt. Gemessen wird jeweils der 20°-Glanz (in %) und festgestellt, nach welcher Zeit Rissbildung auftritt.

Tabelle 1

| Beispiel | Mikrogel-Dispersion | 20°-Glanz (in %) nach 0 Stunden | 400 | 800 | 1000 | 1200 | 1400 | Riss nach ... Stunden |
|---|---|---|---|---|---|---|---|---|
| — | — | 81 | 75 | 55 | 38 | | | 1000 |
| 21 | $D_2$ | 88 | 82 | 66 | 63 | 61 | 53 | 1400 |
| 22 | $D_3$ | 86 | 84 | 79 | 77 | 75 | 57 | 1400 |
| 23 | $F_2$ | 77 | 60 | 64 | 59 | 47 | 25 | 1400 |
| 24 | $F_3$ | 89 | 80 | 69 | 68 | 64 | 56 | 1400 |
| 25 | $F_4$ | 90 | 85 | 81 | 80 | 79 | 51 | 1400 |
| 26 | $J_1$ | 76 | 88 | 63 | 54 | 38 | 27 | 1400 |

Beispiel 27 Herstellung und Applikation einer härtbaren Ueberzugsmasse

Die Polyester-Mikropartikel- Dispersion $D_2$, wie sie gemäss Beispiel 1b, B erhalten wird, wird mit einem Melamin-Formaldehydharz (®Cymel 301 der Cyanamid Corp.) und mit dem nach Beispiel 19 erhaltenen Reaktivverdünner (Lösung $E_1$) in einem Verhältnis vermischt, dass das Festkörperverhältnis der drei Kompenenten 9:1,3:1 beträgt. Zu der Mischung werden 0,4 %, bezogen auf den genannten Festkörpergehalt, p-Toluolsulfonsäure zugegeben.

Die Applikation, Härtung und Prüfung der so erhaltenen Lackmischung erfolgt wie in Beispiel 21 beschrieben.

Beispiele 28-31

Man verfährt genau wie in Beispiel 27, setzt jedoch an Stelle der Dispersion $D_2$ die Dispersionen
$D_3$ (erhalten nach Beispiel 1c, B)

$F_2$ (erhalten nach Beispiel 2b)
$F_3$ (erhalten nach Beispiel 3a)
$F_4$ (erhalten nach Beispiel 3b)
ein.

Die Ergebnisse der Schnellbewitterungstests sind in der folgenden Tabelle 2 zusammengestellt. Gemessen wird jeweils der 20°-Glanz (in %) und festgestellt, nach welcher Zeit Rissbildung auftritt.

Tabelle 2

| Beispiel | Mikrogel-Dispersion | 20°-Glanz (in %) nach 0 Stunden | 400 | 800 | 1000 | 1200 | 1400 | Riss nach ... Stunden |
|---|---|---|---|---|---|---|---|---|
| — | — | 81 | 82 | 72 | 52 | | | 1000 |
| 27 | $D_2$ | 88 | 76 | 59 | 51 | 45 | 33 | 1400 |
| 28 | $D_3$ | 86 | 84 | 82 | 80 | 80 | 67 | 1400 |
| 29 | $F_2$ | 85 | 74 | 67 | 63 | 56 | 27 | 1400 |
| 30 | $F_3$ | 84 | 81 | 76 | 75 | 72 | 61 | 1400 |
| 31 | $F_4$ | 88 | 87 | 84 | 83 | 83 | 78 | 1600 |

Beispiel 32

Man verfährt analog Beispiel 21 oder 27, setzt jedoch an Stelle der Dispersion $D_2$ die Dispersionen $D_1$ - (erhalten nach Beispiel 1a, B) oder $F_1$ (erhalten nach Beispiel 2a, B) ein. Man erhält ebenfalls Lackfilme, die eine bessere Glanzhaltung und längere Rissfreiheit aufweisen als bei Verwendung von unstabilisierten Mikropartikeln.

Beispiel 33

Man verfährt analog Beispiel 27, setzt jedoch jeweils an Stelle der Dispersion $D_2$ die Dispersionen $G_1$ bis $G_4$ (erhalten nach den Beispielen 4a bis 4d), $H_1$ bis $H_5$ (erhalten nach den Beispielen 5a bis 5e), $J_1$ bis $J_5$ (erhalten nach den Beispielen 6a bis 6e), $K_1$ bis $K_{11}$ (erhalten nach den Beispielen 7a bis 7l) oder $L_1$ bis $L_3$ (erhalten nach den Beispielen 8a bis 8c) ein. Man erhält so ebenfalls Lackfilme, die eine bessere Glanzhaltung und längere Rissfreiheit aufweisen als bei Verwendung von unstabilisierten Mikropartikeln.

Beispiel 34 Herstellung und Applikation einer härtbaren PUR-Ueberzugsmasse

Die Mikropartikel-Dispersion $Q_1$, wie sie gemäss Beispiel 12a erhalten wird, wird mit einem Isocyanatharz (®Desmodur N 75 der Bayer AG) in einem Verhältnis vermischt, dass das Festkörperverhältnis 1:1 beträgt. Zu der Mischung werden 0,5 %, bezogen auf den gesamten Festkörpergehalt, Zink-Octoat (als 8%ige Lösung) zugegeben.

Die so erhaltene Lackmischung wird mit Butylglykolacetat auf Spritzfähigkeit verdünnt (es kann zusätzlich ein Verlaufsmittel zugesetzt werden) und auf ein vorbereitetes Aluminiumblech (coil coat, Füller, silbermetallic Basislack) gespritzt und bei 150° C 30 Minuten eingebrannt. Es resultiert eine Trockenfilmdikke von ca. 50 µm Klarlack.

Die Proben werden in einer beschleunigten Bewitterung (®Uvcon-Bewitterungsgerät der Fa. Atlas Corp., 4 Std. 60° C, UV, 4 Std. 50° C, Kondensation) geprüft.

Beispiel 35 Herstellung und Applikation einer härtbaren PUR-Ueberzugsmasse

Die Mikropartikel-Dispersion $Q_1$, wie sie gemäss Beispiel 12a erhalten wird, wird mit einem Isocyanatharz (®Desmodur N 75 der Bayer AG) und mit dem nach Beispiel 20 erhaltenen Reaktivverdünner (Lösung $E_2$) in einem Verhältnis vermischt, dass das Festkörperverhältnis der drei Komponenten 4:5:1 beträgt. Zu der Mischung werden 0,5 % bezogen auf auf den gesamten Festkörpergehalt, Zn-Octoat (als 8%ige Lösung) zugegeben.

Die Applikation, Härtung und Prüfung der so erhaltenen Lackmischung erfolgt wie in Beispiel 34 beschrieben.

Beispiel 36

Man verfährt analog Beispiel 34, setzt jedoch an Stelle der Dispersion $Q_1$ die Dispersion $Q_2$ (erhalten nach Beispiel 12b) ein.

Beispiel 37

Man verfährt analog Beispiel 35, setzt jedoch an Stelle der Dispersion $Q_1$ die Dispersion $Q_2$ (erhalten nach Beispiel 12b) ein.

Beispiel 38 Herstellung und Applikation einer härtbaren Ueberzugsmasse aus wässrigem System

Die wässrige Mikropartikel-Dispersion $WR_1$ (erhalten nach Beispiel 13.2) wird mit einem wasserlöslichen Melaminharz (®Luwipal 063 der Fa. BASF) so vermischt, dass das Festkörperverhältnis 7:3 beträgt. Die erhaltene Mischung wird auf ein vorbereitetes Aluminiumblech (coil coat, Füller, silbermetallic Basislack) gespritzt und eingebrannt. Es resultiert eine Trockenfilmdicke von ca. 50 µm Klarlack.

Die Probe wird in einer beschleunigten Bewitterung (®Uvcon-Bewitterungsgerät der Fa. Atlas Corp., 4 Std., 60° UV, 4 Std. 50°C Kondensation) geprüft und mit einer gleich behandelten Probe verglichen, für deren Herstellung unstabilisierte Mikropartikel verwendet wurden. Die stabilisierte Probe weist eine bessere Glanzhaltung und längere Rissfreiheit auf als die unstabilisierte Vergleichsprobe.

Setzt man in obiger Vorschrift an Stelle der Dispersion $WR_1$ die Dispersionen $WR_2$ bis $WR_6$ (erhalten nach den Beispielen 14 bis 18) ein, kommt man zu ähnlichen Resultaten.

## Patentansprüche

1. Lichtstabilisierte Polymermikropartikel mit einem vernetzten Kern und einer Teilchengrössenverteilung von 0,01-20 µm, erhältlich durch Polymerisation in an sich bekannter Weise von einer oder mehreren verschiedenen ein-oder mehrfach ethylenisch ungesättigten monomeren Verbindungen oder/und einem oder mehreren verschiedenen Monomeren, ausgewählt aus der Gruppe der Polyalkohole, Polycarbonsäuren, Hydroxycarbonsäuren, Lactone, Aminocarbonsäuren, Aminoalkohole und Polyamine, dadurch gekennzeichnet, dass sie 0,1 bis 30 Gew.-%, bezogen auf die Monomeren, eines oder mehrerer Lichtschutzmittel(s) enthalten, wobei mindestens ein Teil der Polymerisation der Monomeren in gegenwart des (der) Lichtschutzmittel(s) erfolgt.

2. Mikropartikel gemäss Anspruch 1, worin das (die) Lichtschutzmittel mindestens eine reaktive Gruppe aufweist, mit der es chemisch an das Polymer gebunden werden kann.

3. Mikropartikel gemäss Anspruch 2, wobei es sich bei der reaktiven Gruppe um eine Hydroxy-, Carboxy-, Ester-, Amid-, Isocyanat-, Epoxy-oder Amino-Gruppe oder eine ethylenische Doppelbindung handelt.

4. Mikropartikel gemäss Anspruch 1, wobei man als Lichtschutzmittel mindestens eine Verbindung aus der Klasse der sterisch gehinderten Amine verwendet.

5. Mikropartikel gemäss Anspruch 4, wobei man als Lichtschutzmittel ein 2,2,6,6-Tetraalkylpiperidinderivat verwendet, welches in seinem Molekül mindestens eine Gruppe der Formel I

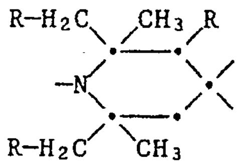

(I),

enthält, wobei R Wasserstoff oder Methyl ist.

6. Mikropartikel gemäss Anspruch 1, worin das Lichtschutzmittel ein UV-Absorber ist.

7. Mikropartikel gemäss Anspruch 1, worin als Lichtschutzmittel ein UV-Absorber und ein sterisch gehindertes Amin eingesetzt wird.

8. Mikropartikel gemäss Anspruch 6, worin der UV-Absorber der Klasse der 2-(2-Hydroxyphenyl)-benztriazole angehört.

9. Mikropartikel gemäss Anspruch 1, wobei es sich bei dem Polymer um ein Kondensationspolymer handelt.

10. Mikropartikel gemäss Anspruch 9, wobei das Kondensationspolymer ein Polyester ist.

11. Mikropartikel gemäss Anspruch 1, wobei es sich bei dem Polymer um ein Additionspolymer handelt.

12. Mikropartikel nach Anspruch 1, das aus einem vernetzten Kern und daran anpolymerisierten, im wesentlichen linearen bis verzweigten Polymerketten besteht, wobei das (die) Lichtschutzmittel im Kern oder/und in den Polymerketten enthalten ist (sind).

13. Verfahren zur Herstellung von lichtstabilisierten Polymermikropartikeln mit eimen vernetzten Kern und einer Teilchengrössenverteilung von 0,01-20 µm, dadurch gekennzeichnet, dass man in an sich bekannter Weise eine oder mehrere verschiedene ein- oder mehrfach ethylenisch ungesättigte monomere Verbindungen oder/und ein oder mehrere verschiedene Monomere aus der Gruppe der Polyalkohole, Polycarbonsäuren, Hydroxycarbonsäuren, Lactone, Aminocarbonsäuren, Aminoalkohole und Polyamine in Gegenwart von 0,1 bis 30 Gew.-%, bezogen auf die Monomeren, eines oder mehrerer Lichtschutzmittel(s) so polymerisiert, dass der Kern des erhaltenen Polymeren vernetzt ist und, falls die Polymerisation in mehreren Schritten stattfindet, mindestens ein Polymerisationsschritt in Gegenwart des (der) Lichtschutzmittel(s) erfolgt.

14. Verfahren nach Anspruch 13, dadurch gekennzeichnet, dass man
a) eine oder mehrere verschiedene ein- oder mehrfach ethylenisch ungesättigte monomere Verbindungen oder/und ein oder mehrere verschiedene Monomere aus der Gruppe der Polyalkohole, Polycarbonsäuren, Hydroxycarbonsäuren, Lactone, Aminocarbonsäuren, Aminoalkohole und Polyamine vernetzend polymerisiert,
b) eine oder mehrere der unter a) genannten Monomeren zu einem im wesentlichen linearen bis verzweigten Polymeren polymerisiert und
c) das gemäss b) erhaltene Polymer an das gemäss a) erhaltene Polymer anpolymerisiert (aufgraftet),
wobei die Polymerisation gemäss a) oder gemäss b) oder beide Polymerisationen in Gegenwart eines oder mehrerer Lichtschutzmittel durchgeführt werden und wobei die Lichtschutzmittel in beiden Polymerisationsschritten gleich oder verschieden sein können und die Gesamtmenge an Lichtschutzmittel 0,1 bis 30 Gew.-%, bezogen auf die Monomeren in beiden Polymerisationsschritten, beträgt, und wobei die Polymerisation a) ganz oder teilweise in Gegenwart des gemäss b) gebildeten Polieren erfolgen kann.

15. Dispersion, enthaltend lichtstabilisierte Polymermikropartikel gemäss einem der Ansprüche 1 bis und 12 mindestens ein Lösungsmittel, in dem die Polermikropartikel im wesentlichen unlöslich sind.

16. Dispersion gemäss Anspruch 15, die als Lösungsmittel Wasser oder einen aliphatischen, cycloaliphatischen oder aromatischen Kohlenwasserstoff oder Mischungen dieser Lösungsmittel enthält.

17. Verwendung der in den Ansprüchen 1 bis 14 beschriebenen bzw. erhaltenen Polymermikropartikel oder der Dispersionen gemäss Anspruch 15 oder 16 als Bestandteil von Beschichtungszusammensetzungen.

18. Beschichtungszusammensetzung, in der das filmbildende Material
a) 30 bis 95 Vol-% einer dispersen Phase, die Mikropartikel gemäss Anspruch 1 enthält, und
b) 70 bis 5 Vol-% einer flüssigen kontinuierlichen Phase mit einer Viskosität von 10 bis 3000 m Pa s (0,1 bis 30 Poise) bei Raumtemperatur, die dazu fähig ist, in ein filmbildendes Polymer zu härten, enthält, wobei das Gesamtvolumen von a) und b) 100% beträgt und die disperse Phase an der Lackhärtung teilnimmt.

19. Beschichtungszusammensetzung gemäss Anspruch 18, in der das filmbildende Material a) 30-85 Vol-% der dispersen Phase, die mindestens 50 Vol-% erfindungsgemässe Mikropartikel enthält, und b) 70-15 Vol-% der flüssigen kontinuierlichen Phase die bei Raumtemperatur eine Viskosität von 0,1 bis 20 Poise aufweist, enthält.

20. Beschichtungszusammensetzung gemäss Anspruch 18, worin die kontinuierlicher Phase b) ebenfalls ein oder mehrere Lichtschutzmittel enthält.

21. Beschichtungszusammensetzung gemäss Anspruch 18, worin die flüssige kontinuierliche Phase b) ein duroplastisches Harz enthält.

22. Beschichtungszusammensetzung gemäss Anspruch 21, worin es sich bei dem Harz um ein vernetzbares Acrylharz, Polyester/Alkyd-Harz oder Polyurethanharz handelt, das gegebenenfalls mit Aminoplasten, Polyisocyanat oder Polyepoxiden vernetzt ist.

23. Beschichtungszusammensetzung gemäss Anspruch 18, worin die flüssige kontinuierliche Phase b) einen Reaktivverdünner enthält, der selbst nicht härtbar ist, jedoch reaktive Gruppen besitzt, mittels derer er an der Härtung des filmbildenden Materials teilnehmen kann.

**Claims**

1. Light-stabilized polymer microparticles having a crosslinked core and a particle size distribution of 0.01-20 µm, obtainable by polymerization in a manner known per se from one or several different, ethylenically monounsaturated or polyunsaturated monomeric compounds or/and one or several different monomers selected from the group comprising the polyalcohols, polycarboxylic acids, hydroxycarboxylic acids, lactones, aminocarboxylic acids, aminoalcohols and polyamines, which contain 0.1 to 30% by weight, relative to the monomers, of one or more light stabilizer(s), at least part of the polymerization of the monomers being carried out in the presence of the light stabilizer(s).

2. Microparticles according to claim 1, wherein the light stabilizer(s) has or have at least one reactive group for chemical bonding to the polymer.

3. Microparticles according to claim 2, wherein the reactive group is a hydroxyl, carboxyl, ester, amide, isocyanate, epoxy or amino group or an ethylenic double bond.

4. Microparticles according to claim 1, wherein at least one compound from the group comprising the sterically hindered amines is used as the light stabilizer.

5. Microparticles according to claim 4, wherein the light stabilizer used is a 2,2,6,6-tetraalkylpiperidine derivative which contains in its molecule at least one group of the formula I

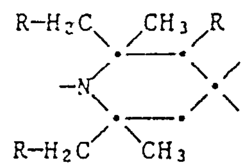

(I),

in which R is hydrogen or methyl.

6. Microparticles according to claim 1, wherein the light stabilizer is a UV absorber.

7. Microparticles according to claim 1, wherein a UV absorber and a sterically hindered amine are used as the light stabilizer.

8. Microparticles according to claim 6, wherein the UV absorber belongs to the class of 2-(2-hydroxyphenyl)benzotriazoles.

9. Microparticles according to claim 1, wherein the polymer is a condensation polymer.

10. Microparticles according to claim 9, wherein the condensation polymer is a polyester.

11. Microparticles according to claim 1, wherein the polymer is an addition polymer.

12. Microparticles according to claim 1, which comprise a crosslinked core and essentially linear to branched polymer chains polymerized thereon, the light stabilizer(s) being contained in the core or/and in the polymer chains.

13. A process for the preparation of light-stabilized polymer microparticles having a crosslinked core and a particle size distribution of 0.01-20 µm, which comprises polymerizing one or several different, ethylenically monounsaturated or polyunsaturated monomeric compounds or/and one or several different monomers from the group comprising the polyalcohols, polycarboxylic acids, hydroxycarboxylic acids, lactones, aminocarboxylic acids, aminoalcohols and polyamines in a manner known per se in the presence of 0.1 to 30% by weight, relative to the monomers, of one or more light stabilizer(s) in such a way that the core of the polymer obtained is crosslinked and, if the polymerization takes place in several steps, at least one polymerization step is carried out in the presence of the light stabilizer(s).

14. A process according to claim 13, which comprises

a) polymerizing one or several different, ethylenically monounsaturated or polyunsaturated monomeric compounds or/and one or several different monomers from the group comprising the polyalcohols, polycarboxylic acids, hydroxycarboxylic acids, lactones, aminocarboxylic acids, aminoalcohols and polyamines with crosslinking,

b) polymerizing one or more of the monomers indicated under a) to give an essentially linear to branched polymer and

c) polymerizing (grafting) the polymer obtained according to b) onto the polymer obtained according to a),

the polymerization according to a) or according to b) or both polymerizations being carried out in the presence of one or more light stabilizers, and it being possible for the light stabilizers in the two polymerization steps to be identical or different and the total quantity of light stabilizer being 0.1 to 30% by weight, relative to the monomers, in both polymerization steps, and it being possible for the polymerization a) to be carried out wholly or partially in the presence of the polymer formed according to b).

15. A dispersion, which contains light-stabilized polymer microparticles according to any one of claims 1 to 12 and at least one solvent in which the polymer microparticles are essentially insoluble.

16. A dispersion according to claim 15, which contains, as the solvent, water or an aliphatic, cycloaliphatic or aromatic hydrocarbon or mixtures of these solvents.

17. The use of the polymer microparticles described in or obtained according to claims 1 to 14 or of the dispersions according to claim 15 or 16 as a constituent of coating compositions.

18. A coating composition, wherein the film-forming material comprises
a) 30 to 95% by volume of a disperse phase which contains microparticles according to claim 1, and
b) 70 to 5% by volume of a liquid continuous phase which has a viscosity of 10 to 3000 mPas (0.1 to 30 poise) at room temperature and is capable of curing to give a film-forming polymer, the total volume of a) and b) being 100% and the disperse phase participating in curing the coating.

19. A coating composition according to claim 18, wherein the film-forming material a) contains 30-85% by volume of the disperse phase which contains at least 50% by volume of microparticles according to the invention, and b) 70 to 15% by volume of the liquid continuous phase which has a viscosity of 0.1 to 20 poise at room temperature.

20. A coating composition according to claim 18, wherein the continuous phase b) also contains one or more light stabilizers.

21. A coating composition according to claim 18, wherein the liquid continuous phase b) contains a thermosetting resin.

22. A coating composition according to claim 21, wherein the resin is a crosslinkable acrylic resin, polyester/alkyd resin or polyurethane resin, which, if appropriate, is crosslinked with aminoplasts, polyisccyanate or polyepoxides.

23. A coating composition according to claim 18, wherein the liquid continuous phase b) contains a reactive diluent which itself is not curable but carries reactive groups, by means of which it can participate in curing the film-forming material.

**Revendications**

1. Microparticules de polymères, stabilisées à la lumière, comportant un noyau réticulé et présentant une répartition granulométrique de 0,01-20 µm, que l'on peut obtenir par polymérisation, d'une manière connue en soi, d'un ou plusieurs composés monomères différents, à insaturation mono- ou polyéthylénique, et/ou d'un ou plusieurs monomères différents appartenant au groupe des polyalcools, des acides polycarboxyliques, des acides hydroxycarboxyliques, des lactones, des acides aminocarboxyliques et des polyamines, caractérisées en ce qu'elles contiennent de 0,1 à 30 % en poids, par rapport aux monomères, d'un ou plusieurs agents de protection contre la lumière, au moins une partie de la polymérisation des monomères s'effectuant en présence du ou des agents de protection contre la lumière.

2. Microparticules selon la revendication 1, dans lesquelles le ou les agents de protection contre la lumière comportent au moins un groupe réactif avec lequel ils peuvent être chimiquement liés au polymère.

3. Microparticules selon la revendication 2, où le groupe réactif est un groupe hydroxy, carboxy, ester, amide, isocyanate, époxy ou amino, ou une double liaison éthylénique.

4. Microparticules selon la revendication 1, où on utilise comme agent de protection contre la lumière au moins un composé de la classe des amines à empêchement stérique.

5. Microparticules selon la revendication 4, où on utilise comme agent de protection contre la lumière une tétraalkyl-2,2,6,6 pipéridine, qui dans sa molécule contient au moins un groupe de formule I

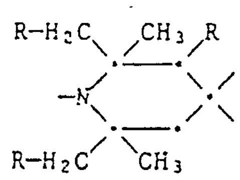

(I),

où R est un hydrogène ou le radical méthyle.

**6.** Microparticules selon la revendication 1, où l'agent de protection contre la lumière est un absorbant UV.

**7.** Microparticules selon la revendication 1, où l'on utilise comme agent de protection contre la lumière unabsorbant UV et une amine à empêchement stérique.

**8.** Microparticules selon la revendication 6, où l'absorbant UV appartient à la classe des (hydroxy-2 phényl)-2 benzotriazoles.

**9.** Microparticules selon la revendication 1, où le polymère est un polymère de polycondensation.

**10.** Microparticules selon la revendication 9, où le polymère de polycondensation est un polyester.

**11.** Microparticules selon la revendication 1, où le polymère est un polymère de polyaddition.

**12.** Microparticules selon la revendication 1, constituées d'un noyau réticulé et de chaînes polymères essentiellement linéaires à ramifiées, polymérisées contre le noyau, le ou les agents de protection contre la lumière se trouvant dans le noyau et/ou dans les chaînes polymères.

**13.** Procédé de préparation de microparticules polymères stabilisées à la lumière, comportant un noyau réticulé et présentant une répartition granulométrique de 0,01-20 µm, caractérisé en ce que, d'une manière connue en soi, on polymérise de façon que le noyau du polymère obtenu soit réticulé un ou plusieurs composés monomères différents, portant une ou plusieurs insaturations éthyléniques, et/ou un ou plusieurs monomères différents du groupe comprenant les polyalcools, les acides polycarboxyliques, les acides hydroxycarboxyliques, les lactones, les acides aminocarboxyliques, les amino-alcools et les polyamines, en présence de 0,1 à 30 % en poids, par rapport aux monomères, d'un ou plusieurs agents de protection contre la lumière et, si la polymérisation s'effectue en plusieurs étapes, au moins une étape de polymérisation s'effectue en présence du ou des agents de protection contre la lumière.

**14.** Procédé selon la revendication 13, caractérisé en ce que :

a) on polymérise jusqu'à réticulation un ou plusieurs composés monomères différents, portant une ou plusieurs insaturations éthyléniques, et/ou un ou plusieurs monomères différents appartenant au groupe des polyalcools, des acides polycarboxyliques, des acides hydroxycarboxyliques, des lactones, des acides aminocarboxyliques, des amino-alcools et des polyamines,

b) on réticule un ou plusieurs des monomères cités en a) jusqu'à obtenir un polymère pratiquement linéaire à ramifié, et

c) on polymérise (on greffe) le polymère obtenu selon b) sur le polymère obtenu selon a),

la polymérisation selon a) ou selon b), ou les deux polymérisations, étant mises en oeuvre en présence d'un ou plusieurs agents de protection contre la lumière, les agents de protection contre la lumière, dans les deux étapes de polymérisation, pouvant être identiques ou différents, et la quantité total d'agent de protection contre la lumière étant de 0,1 à 30 % en poids par rapport aux monomères dans les deux étapes de polymérisation, la polymérisation a) pouvant être effectuée en totalité ou en partie en présence du polymère formé selon b).

**15.** Dispersion contenant des microparticules polymères stabilisées à la lumière selon l'une des revendications 1 à 12 et au moins un solvant dans lequel les microparticules polymères sont pratiquement insolubles.

**16.** Dispersion selon la revendication 15, contenant en tant que solvant de l'eau ou un hydrocarbure

aliphatique, cycloaliphatique ou aromatique, ou des mélanges de ces solvants.

**17.** Utilisation des microparticules polymères décrites ou obtenues selon les revendications 1 à 14 ou des dispersions selon la revendication 15 ou 16, en tant que constituant de compositions de revêtement.

**18.** Composition de revêtement, dans laquelle le matériau feuillogène contient

a) 30 à 95 % en volume d'une phase dispersée contenant des microparticules selon la revendication 1, et

b) 70 à 5 % en volume d'une phase continue liquide ayant une viscosité de 100 à 3000 mPa.s (0,1 à 30 poises) à la température ambiante, et à même de durcir pour former un polymère feuillogène,

le volume total de a) et b) étant de 100 %, la phase dispersée participant au durcissement du vernis.

**19.** Composition de revêtement selon la revendication 18, dans laquelle le matériau feuillogène contient a) 30-85 % en volume de la phase dispersée contenant au moins 50 % en volume de microparticules selon l'invention, et b) 70-15 % en volume de la phase continue liquide, qui a à la température ambiante une viscosité de 100-2000 mPa.s (0,1 à 20 poises).

**20.** Composition de revêtement selon la revendication 18, où la phase continue b) contient elle aussi un ou plusieurs agents de protection contre la lumière.

**21.** Composition de revêtement selon la revendication 18, où la phase continue liquide b) contient une résine thermoplastique.

**22.** Composition de revêtement selon la revendication 21, où la résine est une résine acrylique réticulable, une résine polyester/alkyde ou une résine de polyuréthanne, pouvant être éventuellement réticulée par des aminoplastes, un polyisocyanate ou des polyépoxydes.

**23.** Composition de revêtement selon la revendication 18, dans laquelle la phase continue liquide b) contient un diluant réactif, lequel n'est pas lui-même durcissable mais comporte des groupes réactifs à l'aide desquels il peut participer au durcissement du matériau feuillogène.